(19) Europäisches Patentamt
European Patent Office
Office européen des brevets

(11) EP 2 039 248 A1

(12) EUROPÄISCHE PATENTANMELDUNG

(43) Veröffentlichungstag:
**25.03.2009 Patentblatt 2009/13**

(21) Anmeldenummer: **07116915.5**

(22) Anmeldetag: **21.09.2007**

(51) Int Cl.:
***A01N 43/90*** *(2006.01)* ***A01N 43/38*** *(2006.01)*
***A01N 61/00*** *(2006.01)* ***A01N 53/00*** *(2006.01)*
***A01N 51/00*** *(2006.01)* ***A01N 47/40*** *(2006.01)*
***A01N 47/38*** *(2006.01)* ***A01N 47/02*** *(2006.01)*
***A01N 43/707*** *(2006.01)* ***A01N 43/68*** *(2006.01)*
***A01N 43/58*** *(2006.01)* ***A01N 43/36*** *(2006.01)*
***A01N 43/22*** *(2006.01)* ***A01N 41/10*** *(2006.01)*
***A01N 37/52*** *(2006.01)* ***A01N 37/42*** *(2006.01)*
***A01N 37/40*** *(2006.01)* ***A01P 7/02*** *(2006.01)*
***A01P 7/04*** *(2006.01)*

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Bayer CropScience AG
40789 Monheim (DE)**

(72) Erfinder: **Die Erfindernennung liegt noch nicht vor**

(54) **Wirkstoffkombinationen mit insektiziden und akariziden Eigenschaften**

(57) Neue Wirkstoffkombinationen enthaltend spiroketal-substituierte 3-Aryl-Pyrrolidin-2,4-dione der Formel (I) und ein weiteres Insektizid der Formel (II) aus unterschiedlichen Wirkstoffklassen mit sehr guten insektiziden und akariziden Eigenschaften.

EP 2 039 248 A1

## Beschreibung

Die vorliegende Erfindung betrifft neue Wirkstoffkombinationen, die aus bekannten spiroketalsubstituierten Tetramsäurederivaten einerseits und weiteren insektiziden Wirkstoffen andererseits bestehen und sehr gut zur Bekämpfung von tierischen Schädlingen wie Insekten und / oder unerwünschten Akariden geeignet sind.

Von 3-Acyl-pyrrolidin-2,4-dionen sind pharmazeutische Eigenschaften vorbeschrieben (S. Suzuki et al. Chem. Pharm. Bull. 15 1120 (1967)). Weiterhin wurden N-Phenylpyrrolidin-2,4-dione von R. Schmierer und H. Mildenberger (Liebigs Ann. Chem. 1985, 1095) synthetisiert. Eine biologische Wirksamkeit dieser Verbindungen wurde nicht beschrieben.

In EP-A-0 262 399 und GB-A-2 266 888 werden ähnlich strukturierte Verbindungen (3-Aryl-pyrrolidin-2,4-dione) offenbart, von denen jedoch keine herbizide, insektizide oder akarizide Wirkung bekannt geworden ist. Bekannt mit herbizider, insektizider oder akarizider Wirkung sind unsubstituierte, bicyclische 3-Aryl-pyrrolidin-2,4-dion-Derivate (EP-A-355 599, EP-A-415 211 und JP-A-12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 94/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/24437, WO 99/43649, WO 99/48869 und WO 99/55673, WO 01/17972, WO 01/23354, WO 01/74770, WO 03/013249, WO 03/062244, WO 2004/007448, WO 2004/024 688, WO 04/065366, WO 04/080962, WO 04/111042, WO 05/044791, WO 05/044796, WO 05/048710, WO 05/049596, WO 05/066125, WO 05/092897, WO 06/000355, WO 06/029799, WO 06/056281, WO 06/056282, WO 06/089633, WO 07/048545, WO 07/073856, DE-A-05/059892, DE-A-06/007882, DE-A-06/018828, DE-A-06/025874, DE-A-06/050148. Außerdem sind ketalsubstituierte 1-H-Arylpyrrolidin-2,4-dione aus WO 99/16748 und (spiro)-ketalsubstituierte N-Alkoxy-alkoxy-substituierte Aryl-pyrrolidindione aus JP-A-14 205 984 und Ito M. et. al Bioscience, Biotechnology and Biochemistry 67, 1230-1238, (2003) bekannt. Der Zusatz von Safenern zu Ketoenolen ist ebenfalls prinzipiell aus der WO 03/013249 bekannt. Außerdem sind aus WO 06/024411 herbizide Mittel enthaltend Ketoenole bekannt.

Die akarizide und / oder insektizide Wirksamkeit und / oder Wirkungsbreite und / oder die Pflanzenverträglichkeit der bekannten Verbindungen, insbesondere gegenüber Kulturpflanzen, ist jedoch nicht immer ausreichend.

Weiterhin bekannt sind Mischungen von Verbindungen aus der WO 98/05638 und der WO 04/007448 mit anderen Insektiziden und / oder Akariziden: WO 01/89300, WO 02/00025, WO 02/05648, WO 02/17715, WO 02/19824, WO 02/30199, WO 02/37963, WO 05/004603, WO 05/053405, WO 06/089665, DE-A-10342673, DE-A-06031974, DE-A-06031973, DE-A-06031978, DE-A-06031975, DE-A-06031976, DE-A-06033154. Allerdings ist die Wirkung dieser Mischungen nicht immer befriedigend.

Es wurde nun gefunden, dass Wirkstoffkombinationen enthaltend mindestens eine Verbindung der Formel (I)

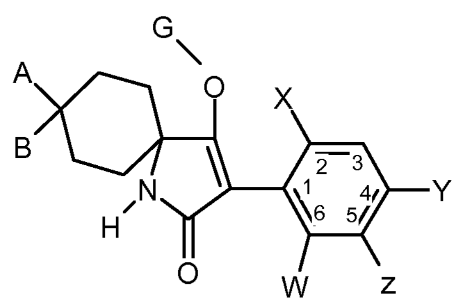

(I)

in welcher

| | |
|---|---|
| W | für Wasserstoff, Alkyl, Alkenyl, Alkinyl, Halogen, Alkoxy, Halogenalkyl, Halogenalkoxy oder Cyano steht, |
| X | für Halogen, Alkyl, Alkenyl, Alkinyl, Alkoxy, Halogenalkyl, Halogenalkoxy, Nitro oder Cyano steht, |
| Y und Z | unabhängig voneinander für Wasserstoff, Alkyl, Alkenyl, Alkinyl, Alkoxy, Halogen, Halogenalkyl, Halogenalkoxy, Cyano oder Nitro steht, |
| A und B | und das Kohlenstoffatom, an das sie gebunden sind, für jeweils gegebenenfalls durch Alkyl, Halogenalkyl, Alkoxy, Alkoxyalkyl oder gegebenenfalls substituiertes Phenyl substituiertes fünf- bis siebengliedriges Ketal, |

Thioketal oder Dithioketal steht, welches gegebenenfalls durch ein weiteres Heteroatom unterbrochen sein kann,

G für Wasserstoff (a) oder für eine der Gruppen

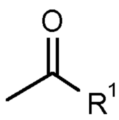 (b), 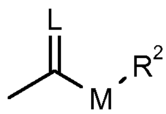 (c), 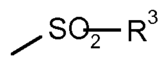 (d),

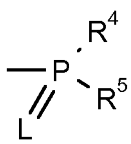 (e), E (f), oder 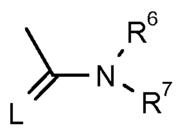 (g),

steht,
worin

E für ein Metallion oder ein Ammoniumion steht,

L für Sauerstoff oder Schwefel steht,

M für Sauerstoff oder Schwefel steht,

$R^1$ für jeweils gegebenenfalls durch Halogen oder Cyano substituiertes Alkyl, Alkenyl, Alkoxyalkyl, Alkylthioalkyl oder Polyalkoxyalkyl oder für jeweils gegebenenfalls durch Halogen, Alkyl oder Alkoxy substituiertes Cycloalkyl oder Heterocyclyl oder für jeweils gegebenenfalls substituiertes Phenyl, Phenylalkyl, Hetaryl, Phenoxyalkyl oder Hetaryloxyalkyl steht,

$R^2$ für jeweils gegebenenfalls durch Halogen oder Cyano substituiertes Alkyl, Alkenyl, Alkoxyalkyl oder Polyalkoxyalkyl oder für jeweils gegebenenfalls substituiertes Cycloalkyl, Phenyl oder Benzyl steht,

$R^3$, $R^4$ und $R^5$ unabhängig voneinander für jeweils gegebenenfalls durch Halogen substituiertes Alkyl, Alkoxy, Alkylamino, Dialkylamino, Alkylthio, Alkenylthio oder Cycloalkylthio oder für jeweils gegebenenfalls substituiertes Phenyl, Benzyl, Phenoxy oder Phenylthio stehen,

$R^6$ und $R^7$ unabhängig voneinander für Wasserstoff, für jeweils gegebenenfalls durch Halogen oder Cyano substituiertes Alkyl, Cycloalkyl, Alkenyl, Alkoxy, Alkoxyalkyl, für jeweils gegebenenfalls substituiertes Phenyl oder Benzyl stehen, oder gemeinsam mit dem N-Atom, an das sie gebunden sind, einen gegebenenfalls Sauerstoff oder Schwefel enthaltenden und gegebenenfalls substituierten Cyclus bilden

und ein oder mehrere weitere Insektizide und / oder Akarizide der Formel (II) sich sehr gut zur Bekämpfung von tierischen Schädlingen wie Insekten und / oder Akariden eignen.

Die Wirkstoffe der Formel (II) sind gemäß der IRAC-Klassifizierung (Version 5.3 Juli 2007) in verschiedene Klassen (1-29) und Gruppen gemäß ihres Wirkmechanismus zugeordnet:

**Insektizide / Akarizide / Nematizide:**

Acetylcholinesterase (AChE) Inhibitoren II-1

II-1.A Carbamate,
zum Beispiel Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (II-1.A-10), Butoxycarboxim (II-1.A-11), Carbaryl (II-1.A-12), Carbofuran (II-1.A-13), Carbosulfan (II-1.A-14), Cloethocarb (II-1.A-15),

Dimetilan (II-1.A-16), Ethiofencarb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-1.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (11-1.A-31), Thiofanox (II-1.A-32), Trimethacarb (II-1.A-33), XMC (II-1.A-34), Xylylcarb (II-1.A-35)

II-1.B Organophosphate,

zum Beispiel Acephate (II-1.B-1), Azamethiphos (II-1.B-2), Azinphos (-methyl, -ethyl) (II-1.B-3), Bromophos-ethyl (II-1.B-4), Bromfenvinfos (-methyl) (II-1.B-5), Butathiofos (II-1.B-6), Cadusafos (II-1.B-7), Carbophenothion (II-1.B-8), Chlorethoxyfos (II-1.B-9), Chlorfenvinphos (II-1.B-10), Chlormephos (II-1.B-11), Chlorpyrifos (-methyl/-ethyl) (II-1.B-12), Coumaphos (II-1.B-13), Cyanofenphos (II-1.B-14), Cyanophos (II-1.B-15), Chlorfenvinphos (II-1.B-16), Demeton-S-methyl (II-1.B-17), Demeton-S-methylsulphon (II-1.B-18), Dialifos (II-1.B-19), Diazinon (II-1.B-20), Dichlofenthion (II-1.B-21), Dichlorvos/DDVP (II-1.B-22), Dicrotophos (II-1.B-23), Dimethoate (II-1.B-24), Dimethylvinphos (II-1.B-25), Dioxabenzofos (II-1.B-26), Disulfoton (II-1.B-27), EPN (II-1.B-28), Ethion (II-1.B-29), Ethoprophos (II-1.B-30), Etrimfos (II-1.B-31), Famphur (II-1.B-32), Fenamiphos (II-1.B-33), Fenitrothion (II-1.B-34), Fensulfothion (II-1.B-35), Fenthion (II-1.B-36), Flupyrazofos (II-1.B-37), Fonofos (II-1.B-38), Formothion (II-1.B-39), Fosmethilan (II-1.B-40), Fosthiazate (II-1.B-41), Heptenophos (II-1.B-42), Iodofenphos (II-1.B-43), Iprobenfos (II-1.B-44), Isazofos (II-1.B-45), Isofenphos (II-1.B-46), Isopropyl (II-1.B-47), O-salicylate (II-1.B-48), Isoxathion (II-1.B-49), Malathion (II-1.B-50), Mecarbam (II-1.B-51), Methacrifos (II-1.B-52), Methamidophos (II-1.B-53), Methidathion (II-1.B-54), Mevinphos (II-1.B-55), Monocrotophos (II-1.B-56), Naled (II-1.B-57), Omethoate (II-1.B-58), Oxydemeton-methyl (II-1.B-59), Parathion (-methyl/-ethyl) (II-1.B-60), Phenthoate (II-1.B-61), Phorate (II-1.B-62), Phosalone (II-1.B-63), Phosmet (II-1.B-64), Phosphamidon (II-1.B-65), Phosphocarb (II-1.B-66), Phoxim (II-1.B-67), Pirimiphos (-methyl/-ethyl) (II-1.B-68), Profenofos (II-1.B-69), Propaphos (II-1.B-70), Propetamphos (II-1.B-71), Prothiofos (II-1.B-72), Prothoate (II-1.B-73), Pyraclofos (II-1.B-74), Pyridaphenthion (II-1.B-75), Pyridathion (II-1.B-76), Quinalphos (II-1.B-77), Sebufos (II-1.B-78), Sulfotep (II-1.B-79), Sulprofos (II-1.B-80), Tebupirimfos (II-1.B-81), Temephos (II-1.B-82), Terbufos (II-1.B-83), Tetrachlorvinphos (II-1.B-84), Thiometon (II-1.B-85), Triazophos (II-1.B-86), Triclorfon (II-1.B-87), Vamidothion (II-1.B-88)

GABA-gesteuerte Chlorid-Kanal-Antagonisten II-2

II-2A Organochlorine,

zum Beispiel Camphechlor (II-2A-1), Chlordane (II-2A-2), Endosulfan (II-2A-3), Gamma-HCH (II-2A-4), HCH (II-2A-5), Heptachlor (II-2A-6), Lindane (II-2A-7), Methoxychlor (II-2A-8)

II-2B Fiprole (Phenylpyrazole),

zum Beispiel Acetoprole (II-2B-1), Ethiprole (II-2B-2), Fipronil (II-2B-3), Pyrafluprole (II-2B-4), Pyriprole (II-2B-5), Vaniliprole (II-2B-6)

Natrium-Kanal-Modulatoren / Spannungsabhängige Natrium-Kanal-Blocker II-3

II-3 Pyrethroide,

zum Beispiel Acrinathrin (II-3-1), Allethrin (d-cis-trans, d-trans) (II-3-2), Beta-Cyfluthrin (II-3-3), Bifenthrin (II-3-4), Bioallethrin (II-3-5), Bioallethrin-S-cyclopentyl-isomer (II-3-6), Bioethanomethrin (II-3-7), Biopermethrin (II-3-8), Bioresmethrin (II-3-9), Chlovaporthrin (II-3-10), Cis-Cypermethrin (II-3-11), Cis-Resmethrin (II-3-12), Cis-Permethrin (II-3-13), Clocythrin (II-3-14), Cycloprothrin (II-3-15), Cyfluthrin (II-3-16), Cyhalothrin (II-3-17), Cypermethrin (alpha-, beta-, theta-, zeta-)(II-3-18), Cyphenothrin (II-3-19), Deltamethrin (II-3-20), Empenthrin (1R-isomer) (II-3-21), Esfenvalerate (II-3-22), Etofenprox (II-3-23), Fenfluthrin (II-3-24), Fenpropathrin (II-3-25), Fenpyrithrin (II-3-26), Fenvalerate (II-3-27), Flubrocythrinate (II-3-28), Flucythrinate (II-3-29), Flufenprox (II-3-30), Flumethrin (II-3-31), Fluvalinate (II-3-32), Fubfenprox (II-3-33), Gamma-Cyhalothrin (II-3-34), Imiprothrin (II-3-35), Kadethrin (II-3-36), Lambda-Cyhalothrin (II-3-37), Metofluthrin (II-3-38), Permethrin (cis-, trans-) (II-3-39), Phenothrin (1R-trans isomer) (II-3-40), Prallethrin (II-3-41), Profluthrin (II-3-42), Protrifenbute (II-3-43), Pyresmethrin (II-3-44), Resmethrin (II-3-45), RU 15525 (II-3-46), Silafluofen (II-3-47), Tau-Fluvalinate (II-3-48), Tefluthrin (II-3-49), Terallethrin (II-3-50), Tetramethrin (-1R- isomer) (II-3-51), Tralomethrin (II-3-52), Transfluthrin (II-3-53), ZXI 8901 (II-3-54), Pyrethrin (pyrethrum) (II-3-55), Eflusilanat (II-3-56), DDT (II-3-57), Methoxychlor (II-3-58),

Nikotinerge Acetylcholin-Rezeptor-Agonisten/-Antagonisten II-4

II-4A Chloronicotinyle,

zum Beispiel Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazine (II-4A-7), Thiacloprid (II-4A-8), Thiamethoxam (II-4A-9),

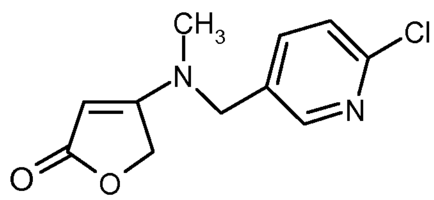

II-4A-10

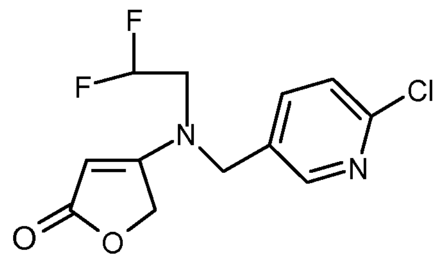

II-4A-11

II-4B Nicotine (II-4B-1), Bensultap (II-4B-2), Cartap (II-4B-3), Thiosulfap-Natrium (II-4B-4), Thiocylam (II-4C-4)

Allosterische Acetylcholin-Rezeptor-Modulatoren (Agonisten)

II-5 Spinosyne,
zum Beispiel Spinosad (II-5-1), Spinetoram (II-5-2)

Chlorid-Kanal-Aktivatoren

II-6 Mectine / Macrolide,
zum Beispiel Abamectin (II-6-1), Emamectin (II-6-2), Emamectin-benzoate (II-6-3), Ivermectin (II-6-4), Lepimectin (II-6-5), Milbemectin (II-6-6)

II-7A Juvenilhormon Analoge,
zum Beispiel Hydroprene (II-7A-1), Kinoprene (II-7A-2), Methoprene (II-7A-3),
Epofenonane (II-7A-4), Triprene (II-7A-5), Fenoxycarb (II-7B-1),
Pyriproxifen (II-7C-1), Diofenolan (II-7C-2)

Wirkstoffe mit unbekannten oder nicht spezifischen Wirkmechanismen

II-8 Begasungsmittel,
zum Beispiel Methyl bromide (II-8A-1), Chloropicrin (II-8B-1), Sulfuryl fluoride (II-8C-1)

II-9 Selektive Fraßhemmer,
zum Beispiel Cryolite (II-9A-1), Pymetrozine (II-9B-1), NNI0101 (II-9B-2), Flonicamid (II-9C-1)

II-10 Milbenwachstumsinhibitoren,
zum Beispiel Clofentezine (II-10A-1), Hexythiazox (II-10A-2),), Etoxazole (II-10B-1)

Inhibitoren der oxidativen Phosphorylierung, ATP-Disruptoren II-12

II-12A Diafenthiuron (II-12A-1)

II-12B Organozinnverbindungen,
zum Beispiel Azocyclotin (II-12B-1), Cyhexatin (II-12B-2), Fenbutatin-oxide (II-12B-3)

II-12C Propargite (II-12C-1), Tetradifon (II-12C-2)

Entkoppler der oxidativen Phoshorylierung durch Unterbrechung des H-Protongradienten II-13

Chlorfenapyr (II-13-1)

Binapacyrl (II-13-2), Dinobuton (II-13-3), Dinocap (II-13-4), DNOC (II-13-5)

Mikrobielle Disruptoren der Insektendarmmembran

Bacillus thuringiensis-Stämme (II-13-6)

Inhibitoren der Chitinbiosynthese

II-15 Benzoylharnstoffe,
zum Beispiel Bistrifluron (II-15-1), Chlorfluazuron (II-15-2), Diflubenzuron (II-15-3),
Fluazuron (II-15-4), Flucycloxuron (II-15-5), Flufenoxuron (II-15-6), Hexaflumuron (II-15-), Lufenuron (II-15-8), Novaluron (II-15-9), Noviflumuron (II-15-10), Penfluron (II-15-11), Teflubenzuron (II-15-12), Triflumuron (II-15-13)

II-16 Buprofezin (II-16-1)

Häutungsstörende Wirkstoffe Cyromazine (II-17-1)

Ecdysonagonisten/disruptoren (II-18)

II-18A Diacylhydrazine,
zum Beispiel Chromafenozide (II-18A-1), Halofenozide (II-18A-2), Methoxyfenozide (II-18A-3), Tebufenozide (II-18A-4), JS-118 (II-18A-5)
Azadirachtin (II-18B-1)

Oktopaminerge Agonisten

zum Beispiel Amitraz (II-19-1)

II-20 Seite-III-Elektronentransportinhibitoren/Seite-II-Elektronentransportinhibitoren
Hydramethylnon (II-20A-1)
Acequinocyl (II-20B-1)
Fluacrypyrim (II-20C-1)
Cyflumetofen (II-20D-1), Cyenopyrafen (II-20D-2)

Elektronentransportinhibitoren

II-21 Seite-I-Elektronentransportinhibitoren
aus der Gruppe der METI-Akarizide,
zum Beispiel Fenazaquin (II-21-1), Fenpyroximate (II-21-2), Pyrimidifen (II-21-3),
Pyridaben (II-21-4), Tebufenpyrad (II-21-5), Tolfenpyrad (II-21-6), Rotenone (II-21-7)

II-22 Spannungsabhängige Natriumkanal-Blocker
zum Beispiel Indoxacarb (II-22A-1)
zum Beispiel Metaflumizone (BAS 3201) (II-22B-1)

II-23 Inhibitoren der Fettsäurebiosynthese

II-23A Tetronsäure-Derivate
zum Beispiel Spirodiclofen (II-23A-1), Spiromesifen (II-23A-2)

II-23B Tetramsäure-Derivate,
zum Beispiel Spirotetramat (II-23B-1)

II-25 Neuronale Inhibitoren mit unbekannten Wirkmechanismus
Bifenazate (II-25-1)
Ryanodinrezeptor-Effektoren

II-28 Diamide,
zum Beispiel Flubendiamide (II-28-1),

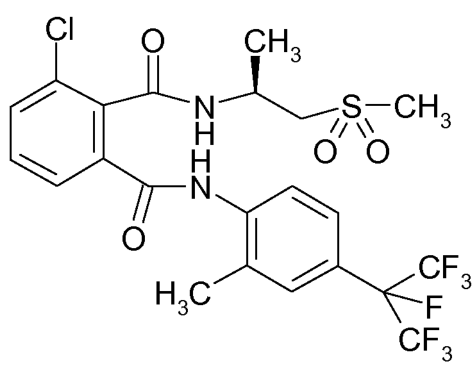

(II-28-2)

Rynaxapyr (II-28-3), HGW86

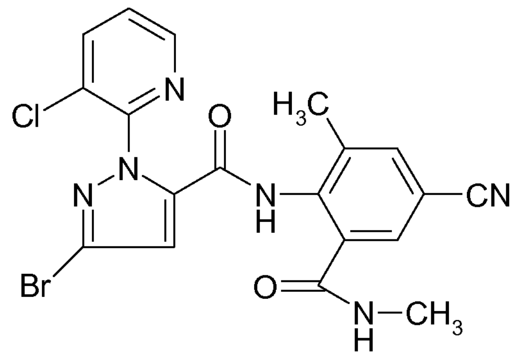

(II-28-4)

II-29 Wirkstoffe mit unbekanntem Wirkmechanismis

Amidoflumet (II-29-1), Benclothiaz (II-29-2), Benzoximate (II-29-3), Bromopropylate (II-29-4), Buprofezin (II-29-5), Chinomethionat (II-29-6), Chlordimeform (II-29-7), Chlorobenzilate (II-29-8), Clothiazoben (II-29-9), Cycloprene (II-29-10), Dicofol (II-29-11), Dicyclanil (II-29-12), Fenoxacrim (II-29-13), Fentrifanil (II-29-14), Flubenzimine (II-29-15), Flufenerim (II-29-16), Flutenzin (II-29-17), Gossyplure (II-29-18), Japonilure (II-29-19), Metoxadiazone (II-29-20), Petroleum (II-29-21), Potassium oleate (II-29-22), Pyridalyl (II-29-23), Sulfluramid (II-29-24), Tetrasul (II-29-25), Triarathene (II-29-26),Verbutin (II-29-27).

Die in dieser Beschreibung mit ihrem "common name" genannten Wirkstoffe sind beispielsweise aus "The Pesticide Manual" 13th Ed., British Crop Protection Council 2003, und der Webseite http://www.alanwood.net/pesticides/ bekannt.

Wenn im Rahmen dieser Beschreibung die Kurzform des "common name" eines Wirkstoffes verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest ein der von dem "common name" umfassten Verbindungen, häufig eine bevorzugte Verbindung.

Die Verbindungen der Formel (I) können, auch in Abhängigkeit von der Art der Substituenten, als optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische, deren Herstellung und Verwendung sowie diese enthaltende Mittel sind Gegenstand der vorliegenden Erfindung. Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Unter Einbeziehung der verschiedenen Bedeutungen (a), (b), (c), (d), (e), (f) und (g) der Gruppe G ergeben sich folgende hauptsächliche Strukturen (I-a) bis (I-g),

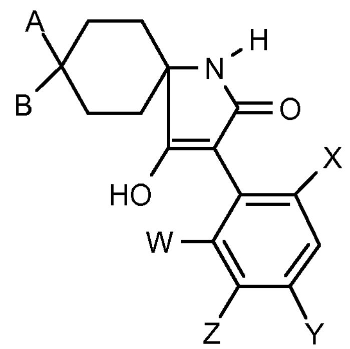

(I-a)

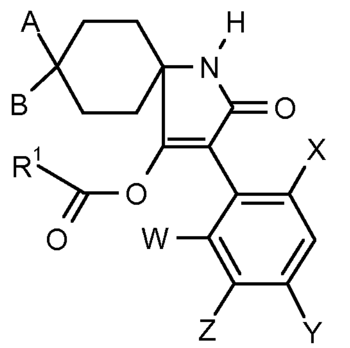

(I-b)

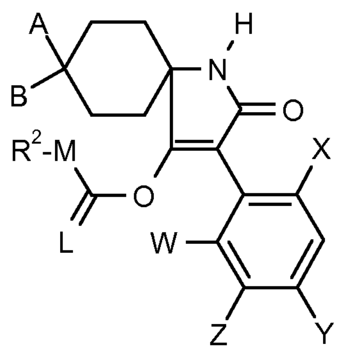

(I-c)

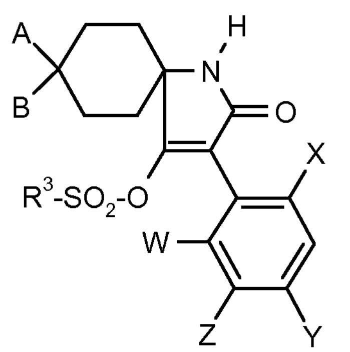

(I-d)

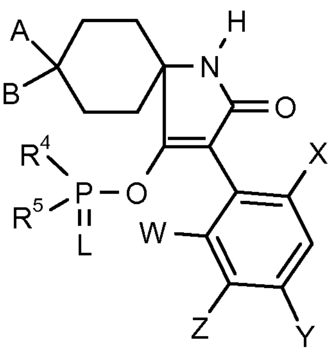

(I-e)

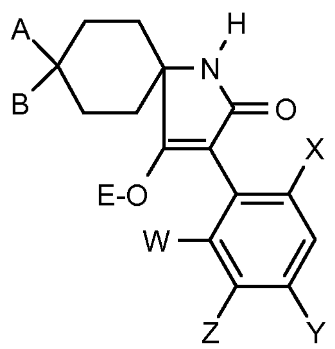

(I-f)

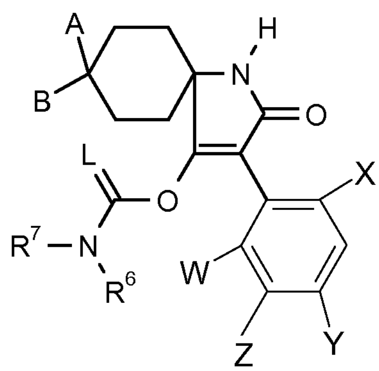

(I-g)

worin

A, B,E, L, M, W, X, Y, Z, $R^1$, $R^2$,

| | |
|---|---|
| $R^3$, $R^4$, $R^5$, $R^6$ und $R^7$ | die oben angegebenen Bedeutungen besitzen. |
| W | steht besonders bevorzugt für Wasserstoff, Chlor, Brom, $C_1$-$C_4$-Alkyl, $C_1$-$C_4$-Alkoxy, $C_1$-$C_2$-Halogenalkyl oder $C_1$-$C_2$-Halogenalkoxy, |
| X | steht besonders bevorzugt für Chlor, Brom, $C_1$-$C_4$-Alkyl, $C_1$-$C_4$-Alkoxy, $C_1$-$C_4$-Halogen-alkyl, $C_1$-$C_4$-Halogenalkoxy oder Cyano, |
| Y und Z | stehen besonders bevorzugt unabhängig voneinander für Wasserstoff, Fluor, Chlor, Brom, $C_1$-$C_4$-Alkyl, $C_1$-$C_6$-Alkoxy, $C_1$-$C_4$-Halogenalkyl, $C_1$-$C_4$-Halogenalkoxy oder |

Cyano

A und B — und das Kohlenstoffatom, an dass sie gebunden sind, stehen besonders bevorzugt für ein gegebenenfalls einfach bis dreifach durch $C_1$-$C_4$-Alkyl, $C_1$-$C_3$-Halogenakl, $C_1$-$C_4$-Alkoxy oder $C_1$-$C_4$-Alkoxy-$C_1$-$C_2$-alkyl substituiertes fünf-, sechs- oder siebengliedriges Ketal, welches gegebenenfalls durch ein weiteres Sauerstoffatom unterbrochen sein kann,

G — steht besonders bevorzugt für Wasserstoff (a) oder für eine der Gruppen

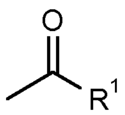 (b), 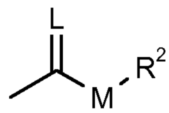 (c), 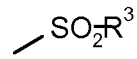 (d),

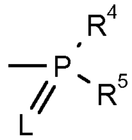 (e), E (f), oder 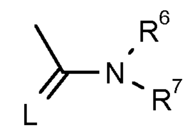 (g),

in welchen

E — für ein Metallion oder ein Ammoniumion steht,

L — für Sauerstoff oder Schwefel steht und

M — für Sauerstoff oder Schwefel steht,

$R^1$ — steht besonders bevorzugt für jeweils gegebenenfalls einfach bis dreifach durch Fluor oder Chlor substituiertes $C_1$-$C_{16}$-Allcyl, $C_2$-$C_{16}$-Alkenyl, $C_1$-$C_6$-Alkoxy-$C_1$-$C_4$-alkyl, $C_1$-$C_6$-Alkylthio-$C_1$-$C_4$-alkyl oder Poly-$C_1$-$C_6$-alkoxy-$C_1$-$C_4$-alkyl oder für gegebenenfalls einfach bis zweifach durch Fluor, Chlor, $C_1$-$C_5$-Alkyl oder $C_1$-$C_5$-Alkoxy substituiertes $C_3$-$C_7$-Cycloalkyl, in welchem gegebenenfalls eine oder zwei nicht direkt benachbarte Methylengruppen durch Sauerstoff und / oder Schwefel ersetzt sind,
für gegebenenfalls einfach bis dreifach durch Fluor, Chlor, Brom, Cyano, Nitro, $C_1$-$C_4$-Alkyl, $C_1$-$C_4$-Alkoxy, $C_1$-$C_3$-Halogenalkyl, $C_1$-$C_3$-Halogenalkoxy, $C_1$-$C_4$-Alkylthio oder $C_1$-$C_4$-Alkylsulfonyl substituiertes Phenyl,
für gegebenenfalls einfach bis zweifach durch Fluor, Chlor, Brom, $C_1$-$C_4$-Alkyl, $C_1$-$C_4$-Alkoxy, $C_1$-$C_3$-Halogenallcyl oder $C_1$-$C_3$-Halogenalkoxy substituiertes Phenyl-$C_1$-$C_4$-alkyl,
für jeweils gegebenenfalls einfach bis zweifach durch Fluor, Chlor, Brom oder $C_1$-$C_4$-Alkyl substituiertes Pyrazolyl, Thiazolyl, Pyridyl, Pyrimidyl, Furanyl oder Thienyl,
für gegebenenfalls einfach bis zweifach durch Fluor, Chlor, Brom oder $C_1$-$C_4$-Alkyl substituiertes Phenoxy-$C_1$-$C_5$-alkyl oder
für jeweils gegebenenfalls einfach bis zweifach durch Fluor, Chlor, Brom, Amino oder $C_1$-$C_4$-Alkyl substituiertes Pyridyloxy-$C_1$-$C_5$-alkyl, Pyrimidyloxy-$C_1$-$C_5$-alkyl oder Thi- azolyloxy-$C_1$-$C_5$-alkyl,

$R^2$ — steht besonders bevorzugt für jeweils gegebenenfalls einfach bis dreifach durch Fluor oder Chlor substituiertes $C_1$-$C_{16}$-Alkyl, $C_2$-$C_{16}$-Alkenyl, $C_1$-$C_6$-Alkoxy-$C_2$-$C_6$-alkyl oder Poly-$C_1$-$C_6$-alkoxy-$C_2$-$C_6$-alkyl,
für gegebenenfalls einfach bis zweifach durch Fluor, Chlor, $C_1$-$C_4$-Alkyl oder $C_1$-$C_4$-Alkoxy substituiertes $C_3$-$C_7$-Cycloalkyl oder
für jeweils gegebenenfalls einfach bis dreifach durch Fluor, Chlor, Brom, Cyano, Nitro, $C_1$-$C_4$-Alkyl, $C_1$-$C_3$-Alkoxy, $C_1$-$C_3$-Halogenalkyl oder $C_1$-$C_3$-Halogenalkoxy substituiertes Phenyl oder Benzyl,

$R^3$ — steht besonders bevorzugt für gegebenenfalls einfach bis dreifach durch Fluor oder Chlor substituiertes $C_1$-$C_6$-Alkyl oder jeweils gegebenenfalls einfach bis zweifach durch Fluor, Chlor, Brom, $C_1$-$C_4$-Alkyl,

$C_1$-$C_4$-Alkoxy, $C_1$-$C_2$-Halogenalkoxy, $C_1$-$C_2$-Halogenalkyl, Cyano oder Nitro substituiertes Phenyl oder Benzyl,

$R^4$ und $R^5$ stehen unabhängig voneinander besonders bevorzugt für jeweils gegebenenfalls einfach bis dreifach durch Fluor oder Chlor substituiertes $C_1$-$C_6$-Alkyl, $C_1$-$C_6$-Alkoxy, $C_1$-$C_6$-Alkylamino, Di-($C_1$-$C_6$-alkyl)amino, $C_1$-$C_6$-Alkylthio oder $C_3$-$C_4$-Alkenylthio oder für jeweils gegebenenfalls einfach bis zweifach durch Fluor, Chlor, Brom, Nitro, Cyano, $C_1$-$C_3$-Alkoxy, $C_1$-$C_3$-Halogenalkoxy, $C_1$-$C_3$-Alkylthio, $C_1$-$C_3$-Halogenalkylthio, $C_1$-$C_3$-Alkyl oder $C_1$-$C_3$-Halogenalkyl substituiertes Phenyl, Phenoxy oder Phenylthio,

$R^6$ und $R^7$ stehen unabhängig voneinander besonders bevorzugt für Wasserstoff, für jeweils gegebenenfalls einfach bis dreifach durch Fluor oder Chlor substituiertes $C_1$-$C_6$-Alkyl, $C_3$-$C_6$-Cycloalkyl, $C_1$-$C_6$-Alkoxy, $C_3$-$C_6$-Alkenyl oder $C_1$-$C_6$-Alkoxy-$C_2$-$C_6$-alkyl, für jeweils gegebenenfalls einfach bis dreifach durch Fluor, Chlor, Brom, $C_1$-$C_5$-Halogenalkyl, $C_1$-$C_5$-Alkyl oder $C_1$-$C_5$-Alkoxy substituiertes Phenyl oder Benzyl, oder zusammen für einen gegebenenfalls durch $C_1$-$C_4$-Alkyl substituierten $C_3$-$C_6$-Alkylenrest, in welchem gegebenenfalls eine Methylengruppe durch Sauerstoff oder Schwefel ersetzt ist.

In den als besonders bevorzugt genannten Restedefinitionen steht Halogen für Fluor, Chlor und Brom, insbesondere für Fluor und Chlor.

W steht ganz besonders bevorzugt für Wasserstoff, Chlor, Brom, Methyl, Ethyl, Methoxy, Ethoxy oder Trifluormethyl,

X steht ganz besonders bevorzugt für Chlor, Brom, Methyl, Ethyl, Methoxy, Ethoxy, Trifluormethyl, Difluormethoxy, Trifluormethoxy oder Cyano,

Y und Z stehen ganz besonders bevorzugt unabhängig voneinander für Wasserstoff, Fluor, Chlor, Brom, Methyl, Ethyl, Methoxy, Trifluormethyl, Trifluormethoxy oder Cyano

A und B und das Kohlenstoffatom, an dass sie gebunden sind, stehen ganz besonders bevorzugt für ein gegebenenfalls einfach bis zweifach durch Methyl, Ethyl, Propyl, Trifluormethyl, Monochlormethyl, Methoxy, Ethoxy, Methoxymethyl oder Ethoxymethyl substituiertes fünf-oder sechsgliedriges Ketal,

G steht ganz besonders bevorzugt für Wasserstoff (a) oder für eine der Gruppen

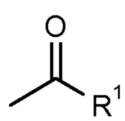 (b), 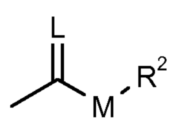 (c), 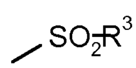 (d),

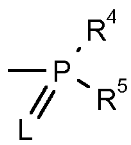 (e), E (f), oder 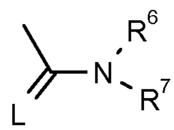 (g),

in welchen

E für ein Metallion oder ein Ammoniumion steht,

L für Sauerstoff oder Schwefel steht und

M für Sauerstoff oder Schwefel steht,

$R^1$ steht ganz besonders bevorzugt für jeweils gegebenenfalls einfach bis dreifach durch Fluor oder Chlor substituiertes $C_1$-$C_{10}$-Alkyl, $C_2$-$C_{10}$-Alkenyl, $C_1$-$C_4$-Alkoxy-$C_1$-$C_2$-alkyl, $C_1$-$C_4$-Alkylthio-$C_1$-$C_2$-alkyl oder für gegebenenfalls einfach durch Fluor, Chlor, Methyl, Ethyl oder Methoxy substituiertes $C_3$-$C_6$-Cycloalkyl,
für gegebenenfalls einfach bis zweifach durch Fluor, Chlor, Brom, Cyano, Nitro, Methyl, Ethyl, n-Propyl, i-Propyl, Methoxy, Ethoxy, Trifluormethyl oder Trifluormethoxy substituiertes Phenyl,
für jeweils gegebenenfalls einfach durch Chlor, Brom oder Methyl substituiertes Furanyl, Thienyl oder Pyridyl,

$R^2$ steht ganz besonders bevorzugt für jeweils gegebenenfalls einfach bis dreifach durch Fluor oder Chlor substituiertes $C_1$-$C_{10}$-Alkyl, $C_2$-$C_{10}$-Alkenyl oder $C_1$-$C_4$-Alkoxy-$C_2$-$C_4$-alkyl,
für Cyclopentyl oder Cyclohexyl
oder für jeweils gegebenenfalls einfach bis zweifach durch Fluor, Chlor, Cyano, Nitro, Methyl, Ethyl, Methoxy, Trifluormethyl oder Trifluormethoxy substituiertes Phenyl oder Benzyl,

$R^3$ steht ganz besonders bevorzugt für jeweils gegebenenfalls einfach bis dreifach durch Fluor oder Chlor substituiertes Methyl, Ethyl, Propyl oder iso-Propyl, oder jeweils gegebenenfalls einfach durch Fluor, Chlor, Brom, Methyl, Ethyl, iso-Propyl, tert.-Butyl, Methoxy, Ethoxy, iso-Propoxy, Trifluormethyl, Trifluormethoxy, Cyano oder Nitro substituiertes Phenyl,

$R^4$ und $R^5$ stehen unabhängig voneinander ganz besonders bevorzugt für $C_1$-$C_4$-Alkoxy oder $C_1$-$C_4$-Allcylthio oder für jeweils gegebenenfalls einfach durch Fluor, Chlor, Brom, Nitro, Cyano, Methyl, Methoxy, Trifluormethyl oder Trifluormethoxy substituiertes Phenyl, Phenoxy oder Phenylthio,

$R^6$ und $R^7$ stehen unabhängig voneinander ganz besonders bevorzugt für Wasserstoff, für $C_1$-$C_4$-Alkyl, $C_3$-$C_6$-Cycloalkyl, $C_1$-$C_4$-Alkoxy, $C_3$-$C_4$-Alkenyl oder $C_1$-$C_4$-Alkoxy-$C_2$-$C_4$-alkyl, für jeweils gegebenenfalls einfach bis zweifach durch Fluor, Chlor, Brom, Methyl, Methoxy oder Trifluormethyl substituiertes Phenyl, oder zusammen für einen $C_5$-$C_6$-Alkylenrest, in welchem gegebenenfalls eine Methylengruppe durch Sauerstoff oder Schwefel ersetzt ist.

W steht insbesondere bevorzugt für Wasserstoff, Chlor, Brom, Methyl, Ethyl oder Methoxy,

X steht insbesondere bevorzugt für Chlor, Brom, Methyl, Ethyl oder Methoxy,

Y und Z stehen insbesondere bevorzugt unabhängig voneinander für Wasserstoff, Chlor, Brom oder Methyl

A und B und das Kohlenstoffatom, an dass sie gebunden sind, stehen insbesondere bevorzugt für ein gegebenenfalls einfach bis zweifach durch Methyl, Ethyl, Propyl, Monochlormethyl oder Methoxymethyl substituiertes fünf- oder sechsgliedriges Ketal,

G steht insbesondere bevorzugt für Wasserstoff (a) oder für eine der Gruppen

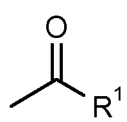 (b) 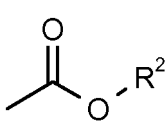 (c) oder E (f)

$R^1$ steht insbesondere bevorzugt für $C_1$-$C_{10}$-Alkyl, $C_1$-$C_4$-Alkoxy-$C_1$-$C_2$-alkyl, $C_3$-$C_6$-Cycloalkyl,
für gegebenenfalls einfach durch Chlor substituiertes Phenyl, oder für Thienyl,

$R^2$ steht insbesondere bevorzugt für $C_1$-$C_{10}$-Alkyl, $C_2$-$C_{10}$-Alkenyl, oder für Benzyl.

Die oben aufgeführten allgemeinen oder in Vorzugsbereichen aufgeführten Restedefinitionen bzw. Erläuterungen können untereinander, also auch zwischen den jeweiligen Bereichen und Vorzugsbereichen beliebig kombiniert werden.

Erfindungsgemäß bevorzugt werden die Verbindungen der Formel (I), in welchen eine Kombination der vorstehend als bevorzugt (vorzugsweise) aufgeführten Bedeutungen vorliegt.

Erfindungsgemäß besonders bevorzugt werden die Verbindungen der Formel (I), in welchen eine Kombination der vorstehend als besonders bevorzugt aufgeführten Bedeutungen vorliegt.

Erfindungsgemäß ganz besonders bevorzugt werden die Verbindungen der Formel (I), in welchen eine Kombination der vorstehend als ganz besonders bevorzugt aufgeführten Bedeutungen vorliegt.

Erfindungsgemäß insbesondere bevorzugt werden die Verbindungen der Formel (I), in welchen eine Kombination der vorstehend als insbesondere bevorzugt aufgeführten Bedeutungen vorliegt.

Hervorgehoben sind Verbindungen der Formel (I) in welchen G für Wasserstoff steht.

Im Fall der Verbindungen der Formel (I) ist der Phenylring hervorgehoben 3-fach substituiert, wobei sich folgende Substitutionsmuster ergeben: 2,4,6-; 2,4,5- oder 2,5,6-Substitution. Außerdem ist im der Fall der Verbindungen der Formel (I) der Phenylring hervorgehoben 4-fach substituiert, wobei sich folgendes Substitutionsmuster ergibt: 2,4,5,6-Substitution. Im Falle der Verbindungen der Formel (I) ist der Phenylring hervorgehoben auch 2-fach (2,4-; 2,5-Postition) substituiert. Im Falle der Verbindungen der Formel (I) ist der Phenylring hervorgehoben auch 1-fach (ortho Postition) substituiert. Die übrigen Substituenten W, X, Y, Z, G, A und B haben die im Text genannten Definitionen.

Gesättigte oder ungesättigte Kohlenwasserstoffreste wie Alkyl, Alkandiyl oder Alkenyl können, auch in Verbindung mit Heteroatomen, wie z.B. in Alkoxy, soweit möglich, jeweils geradkettig oder verzweigt sein.

Gegebenenfalls substituierte Reste können, sofern nicht anderes angegeben ist, einfach oder mehfach substituiert sein, wobei bei Mehrfachsubstitutionen die Substituenten gleich oder verschieden sein können.

Hervorgehoben bevorzugt sind die Verbindungen der Formel (I) mit G = Wasserstoff

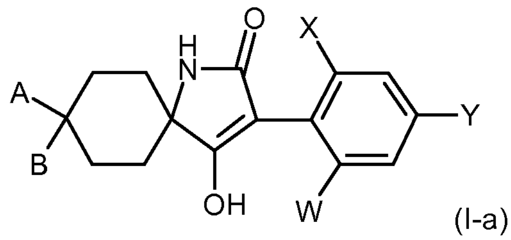

(I-a)

| Bsp.-Nr. | W | X | Y | A | B | Bekannt aus WO 06/089633; Bsp.-Nr. |
|---|---|---|---|---|---|---|
| I-1 | $CH_3$ | $CH_3$ | $CH_3$ | $-O-(CH_2)_2-O-$ | | I-1-a-2 |
| I-2 | $CH_3$ | $CH_3$ | Cl | $-O-(CH_2)_2-O-$ | | I-1-a-4 |
| I-3 | $CH_3$ | $CH_3$ | Br | $-O-(CH_2)_2-O-$ | | I-1-a-26 |
| I-4 | $CH_3$ | $CH_3$ | $CH_3$ | $-O-(CH_2)_3-O-$ | | I-1-a-18 |
| I-5 | $CH_3$ | $CH_3$ | Cl | $-O-(CH_2)_3-O-$ | | I-1-a-14 |
| I-6 | $CH_3$ | $CH_3$ | Br | $-O-(CH_2)_3-O-$ | | I-1-a-19 |

Überraschenderweise ist die insektizide und / oder akarizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung.

Bevorzugt sind Wirkstoffkombinationen enthaltend mindestens eine Verbindung der Formeln (I-1) bis (I-6) und mindestens einen Wirkstoff der Formel (II).

Von besonderem Interesse sind folgende Kombinationen:

| | | |
|---|---|---|
| I-1 + II-1A-1 | I-1 + II-1B-1 | I-1 + II-1B-36 |
| I-1 + II-1A-2 | I-1 + II-1B-2 | I-1 + II-1B-37 |
| I-1 + II-1A-3 | I-1 + II-1B-3 | I-1 + II-1B-38 |

(fortgesetzt)

| | | |
|---|---|---|
| I-1 + II-1A-4 | I-1 + II-1B-4 | I-1 + II-1B-39 |
| I-1 + II-1A-5 | I-1 + II-1B-5 | I-1 + II-1B-40 |
| I-1 + II-1A-6 | I-1 + II-1B-6 | I-1 + II-1B-41 |
| I-1 + II-1A-7 | I-1 + II-1B-7 | I-1 + II-1B-42 |
| I-1 + II-1A-8 | I-1 + II-1B-8 | I-1 + II-1B-43 |
| I-1 + II-1A-9 | I-1 + II-1B-9 | I-1 + II-1B-44 |
| I-1 + II-1A-10 | I-1 + II-1B-10 | I-1 + II-1B-45 |
| I-1 + II-1A-11 | I-1 + II-1 B-11 | 1-1 + II-1B-46 |
| I-1 + II-1A-12 | I-1 + II-1B-12 | I-1 + II-1B-47 |
| I-1 + II-1A-13 | I-1 + II-1B-13 | I-1 + II-1B-48 |
| I-1 + II-1A-14 | I-1 + II-1B-14 | I-1 + II-1B-49 |
| I-1 + II-1A-15 | I-1 + II-1B-15 | I-1 + II-1B-50 |
| I-1 + II-1A-16 | I-1 + II-1B-16 | I-1 + II-1B-51 |
| I-1 + II-1A-17 | I-1 + II-1B-17 | I-1 + II-1B-52 |
| I-1 + II-1A-18 | I-1 + II-1B-18 | I-1 + II-1B-53 |
| I-1 + II-1A-19 | I-1 + II-1B-19 | I-1 + II-1B-54 |
| I-1 + II-1A-20 | I-1 + II-1B-20 | I-1 + II-1B-55 |
| I-1 + II-1A-21 | I-1 + II-1B-21 | I-1 + II-1B-56 |
| I-1 + II-1A-22 | I-1 + II-1B-22 | I-1 + II-1B-57 |
| I-1 + II-1A-23 | I-1 + II-1B-23 | I-1 + II-1B-58 |
| I-1 + II-1A-24 | I-1 + II-1B-24 | I-1 + II-1B-59 |
| I-1 + II-1A-25 | I-1 + II-1B-25 | I-1 + II-1B-60 |
| I-1 + II-1A-26 | I-1 + II-1B-26 | I-1 + II-1B-61 |
| I-1 + II-1A-27 | I-1 + II-1B-27 | I-1 + II-1B-62 |
| I-1 + II-1A-28 | I-1 + II-1B-28 | I-1 + II-1B-63 |
| I-1 + II-1A-29 | I-1 + II-1B-29 | I-1 + II-1B-64 |
| I-1 + II-1A-30 | I-1 + II-1B-30 | I-1 + II-1B-65 |
| I-1 + II-1A-31 | I-1 + II-1B-31 | I-1 + II-1B-66 |
| I-1 + II-1A-32 | I-1 + II-1B-32 | I-1 + II-1B-67 |
| I-1 + II-1A-33 | I-1 + II-1B-33 | I-1 + II-1B-68 |
| I-1 + II-1A-34 | I-1 + II-1B-34 | I-1 + II-1B-69 |
| I-1 + II-1A-35 | I-1 + II-1B-35 | I-1 + II-1B-70 |
| I-1 + II-1 B-71 | 1-1 + II-3-5 | 1-1 + II-3-41 |
| I-1 + II-1B-72 | I-1 + II-3-6 | I-1 + II-3-42 |
| I-1 + II-1B-73 | I-1 + II-3-7 | I-1 + II-3-43 |
| I-1 + II-1B-74 | I-1 + II-3-8 | I-1 + II-3-44 |
| I-1 + II-1B-75 | I-1 + II-3-9 | I-1 + II-3-45 |
| I-1 + II-1B-76 | I-1 + II-3-10 | I-1 + II-3-46 |
| I-1 + II-1B-77 | I-1 + II-3-11 | I-1 + II-3-47 |
| I-1 + II-1B-78 | I-1 + II-3-12 | I-1 + II-3-48 |
| I-1 + II-1B-79 | I-1 + II-3-13 | I-1 + II-3-49 |
| I-1 + II-1B-80 | I-1 + II-3-14 | I-1 + II-3-50 |
| I-1 + II-1B-81 | I-1 + II-3-15 | I-1 + II-3-51 |
| I-1 + II-1B-82 | I-1 + II-3-16 | I-1 + II-3-52 |
| I-1 + II-1B-83 | I-1 + II-3-17 | I-1 + II-3-53 |
| I-1 + II-1B-84 | I-1 + II-3-18 | I-1 + II-3-54 |
| I-1 + II-1B-85 | I-1 + II-3-19 | I-1 + II-3-55 |
| I-1 + II-1B-86 | I-1 + II-3-20 | I-1 + II-3-56 |
| I-1 + II-1B-87 | I-1 + II-3-21 | I-1 + II-3-57 |
| I-1 + II-1B-88 | I-1 + II-3-22 | I-1 + II-3-58 |
| I-1 + II-2A-1 | I-1 + II-3-23 | I-1 + II-4A-1 |

(fortgesetzt)

| | | |
|---|---|---|
| I-1 + II-2A-2 | I-1 + II-3-24 | I-1 + II-4A-2 |
| I-1 + II-2A-3 | I-1 + II-3-25 | I-1 + II-4A-3 |
| I-1 + II-2A-4 | I-1 + II-3-26 | I-1 + II-4A-4 |
| I-1 + II-2A-5 | I-1 + II-3-27 | I-1 + II-4A-5 |
| I-1 + II-2A-6 | I-1 + II-3-28 | I-1 + II-4A-6 |
| I-1 + II-2A-7 | I-1 + II-3-29 | I-1 + II-4A-7 |
| I-1 + II-2A-8 | I-1 + II-3-30 | I-1 + II-4A-8 |
| I-1 + II-2B-1 | I-1 + II-3-31 | I-1 + II-4A-9 |
| I-1 + II-2B-2 | I-1 + II-3-32 | I-1 + 11-4A-10 |
| I-1 + II-2B-3 | I-1 + II-3-33 | I-1 + II-4A-11 |
| I-1 + II-2B-4 | I-1 + II-3-34 | I-1 + II-4B-1 |
| I-1 + II-2B-5 | I-1 + II-3-35 | I-1 + II-4B-2 |
| I-1 + II-2B-6 | I-1 + II-3-36 | I-1 + II-4B-3 |
| I-1 + II-3-1 | I-1 + II-3-37 | I-1 + II-4B-4 |
| I-1 + II-3-2 | I-1 + II-3-38 | I-1 + II-4C-4 |
| I-1 + II-3-3 | I-1 + II-3-39 | I-1 + II-5-1 |
| I-1 + II-3-4 | I-1 + II-3-40 | I-1 + II-5-2 |
| I-1 + II-6-1 | I-1 + II-15-1 | I-1 + II-23A-1 |
| I-1 + II-6-2 | I-1 + II-15-2 | I-1 + II-23A-2 |
| I-1 + II-6-3 | I-1 + II-15-3 | I-1 + II-23B-1 |
| I-1 + II-6-4 | I-1 + II-15-4 | I-1 + II-25-1 |
| I-1 + II-6-5 | I-1 + II-15-5 | I-1 + II-28-1 |
| I-1 + II-6-6 | I-1 + II-15-6 | I-1 + II-28-2 |
| I-1 + II-7A-1 | I-1 + II-15-7 | I-1 + II-28-3 |
| I-1 + II-7A-2 | I-1 + II-15-8 | I-1 + II-28-4 |
| I-1 + II-7A-3 | I-1 + II-15-9 | I-1 + II-29-1 |
| I-1 + II-7A-4 | I-1 + II-15-10 | I-1 + II-29-2 |
| I-1 + II-7A-5 | I-1 + II-15-11 | I-1 + II-29-3 |
| I-1 + II-7B-1 | I-1 + II-15-12 | I-1 + II-29-4 |
| I-1 + II-7C-1 | I-1 + II-15-13 | I-1 + II-29-5 |
| I-1 + II-7C-2 | I-1 + II-16-1 | I-1 + II-29-6 |
| I-1 + II-8A-1 | I-1 + II-17-1 | I-1 + II-29-7 |
| I-1 + II-8B-1 | I-1 + II-18A-1 | I-1 + II-29-8 |
| I-1 + II-8C-1 | I-1 + II-18A-2 | I-1 + II-29-9 |
| I-1 + II-9A-1 | I-1 + II-18A-3 | I-1 + II-29-10 |
| I-1 + II-9B-1 | I-1 + II-18A-4 | I-1 + II-29-11 |
| I-1 + II-9B-2 | I-1 + II-18A-5 | I-1 + II-29-12 |
| I-1 + II-9C-1 | I-1 + II-18B-1 | I-1 + II-29-13 |
| I-1 + II-10A-1 | I-1 + II-19-1 | I-1 + II-29-14 |
| I-1 + II-10A-2 | I-1 + II-20A-1 | I-1 + II-29-15 |
| I-1 + II-10B-1 | I-1 + II-20B-1 | I-1 + II-29-16 |
| I-1 + II-12A-1 | I-1 + II-20C-1 | I-1 + II-29-17 |
| I-1 + II-12B-1 | I-1 + II-20D-1 | I-1 + II-29-18 |
| I-1 + II-12B-2 | I-1 + II-20D-2 | I-1 + II-29-19 |
| I-1 + II-12B-3 | I-1 + II-21-1 | I-1 + II-29-20 |
| I-1 + II-12C-1 | I-1 + II-21-2 | I-1 + II-29-21 |
| I-1 + II-12C-2 | I-1 + II-21-3 | I-1 + II-29-22 |
| I-1 + II-13-1 | I-1 + II-21-4 | I-1 + II-29-23 |
| I-1 + II-13-2 | I-1 + II-21-5 | I-1 + II-29-24 |
| I-1 + II-13-3 | I-1 + II-21-6 | I-1 + II-29-25 |
| I-1 + II-13-4 | I-1 + II-21-7 | I-1 + II-29-26 |

(fortgesetzt)

| | | |
|---|---|---|
| I-1 + II-13-5 | I-1 + II-22A-1 | I-1 + II-29-27 |
| I-1 + II-13-6 | I-1 + II-22B-1 | I-2 + II-1A-1 |
| I-2 + II-1A-2 | I-2 + II-1B-3 | I-2 + II-1B-39 |
| I-2 + II-1A-3 | I-2 + II-1B-4 | I-2 + II-1B-40 |
| I-2 + II-1A-4 | I-2 + II-1B-5 | I-2 + II-1B-41 |
| I-2 + II-1A-5 | I-2 + II-1B-6 | I-2 + II-1B-42 |
| I-2 + II-1A-6 | I-2 + II-1B-7 | I-2 + II-1B-43 |
| I-2 + II-1A-7 | I-2 + II-1B-8 | I-2 + II-1B-44 |
| I-2 + II-1A-8 | I-2 + II-1B-9 | I-2 + II-1B-45 |
| I-2 + II-1A-9 | I-2 + II-1B-10 | I-2 + II-1B-46 |
| I-2 + II-1A-10 | I-2 + II-1B-11 | I-2 + II-1B-47 |
| I-2 + II-1A-1 | I-2 + II-1B-12 | I-2 + II-1B-48 |
| I-2 + II-1A-12 | I-2 + II-1B-13 | I-2 + II-1B-49 |
| I-2 + II-1A-13 | I-2 + II-1B-14 | I-2 + II-1B-50 |
| I-2 II-1A-14 | I-2 + II-1B-15 | I-2 + II-1B-51 |
| I-2 + II-1A-15 | I-2 + II-1B-16 | I-2 + II-1B-52 |
| I-2 + II-1A-16 | I-2 + II-1B-17 | I-2 + II-1B-53 |
| I-2 + II-1A-17 | I-2 + II-1B-18 | I-2 + II-1B-54 |
| I-2 + II-1A-18 | I-2 + II-1B-19 | I-2 + II-1B-55 |
| I-2 + II-1A-19 | I-2 + II-1B-20 | I-2 + II-1B-56 |
| I-2 + II-1A-20 | I-2 + II-1B-21 | I-2 + II-1B-57 |
| I-2 + II-1A-21 | I-2 + II-1B-22 | I-2 + II-1B-58 |
| I-2 + II-1A-22 | I-2 + II-1B-23 | I-2 + II-1B-59 |
| I-2 + II-1A-23 | I-2 + II-1B-24 | I-2 + II-1B-60 |
| I-2 + II-1A-24 | I-2 + II-1B-25 | I-2 + II-1B-61 |
| I-2 + II-1A-25 | I-2 + II-1B-26 | I-2 + II-1B-62 |
| I-2 + II-1A-26 | I-2 + II-1B-27 | I-2 + II-1B-63 |
| I-2 + II-1A-27 | I-2 + II-1B-28 | I-2 + II-1B-64 |
| I-2 + II-1A-28 | I-2 + II-1B-29 | I-2 + II-1B-65 |
| I-2 + II-1A-29 | I-2 + II-1B-30 | I-2 + II-1B-66 |
| I-2 + II-1A-30 | I-2 + II-1B-31 | I-2 + II-1B-67 |
| I-2 + II-1A-31 | I-2 + II-1B-32 | I-2 + II-1B-68 |
| I-2 + II-1A-32 | I-2 + II-1B-33 | I-2 + II-1B-69 |
| I-2 + II-1A-33 | I-2 + II-1B-34 | I-2 + II-1B-70 |
| I-2 + II-1A-34 | I-2 + II-1B-35 | I-2 + II-1B-71 |
| I-2 + II-1A-35 | I-2 + II-1B-36 | I-2 + II-1B-72 |
| I-2 + II-1B-1 | I-2 + II-1B-37 | I-2 + II-1B-73 |
| I-2 + II-1B-2 | I-2 + II-1B-38 | I-2 + II-1B-74 |
| I-2 + II-1B-75 | I-2 + II-3-9 | I-2 + II-3-45 |
| I-2 + II-1B-76 | I-2 + II-3-10 | I-2 + II-3-46 |
| I-2 + II-1B-77 | I-2 + II-3-11 | I-2 + II-3-47 |
| I-2 + II-1B-78 | I-2 + II-3-12 | I-2 + II-3-48 |
| I-2 + II-1B-79 | I-2 + II-3-13 | I-2 + II-3-49 |
| I-2 + II-1B-80 | I-2 + II-3-14 | I-2 + II-3-50 |
| I-2 + II-1B-81 | I-2 + II-3-15 | I-2 + II-3-51 |
| I-2 + II-1B-82 | I-2 + II-3-16 | I-2 + II-3-52 |
| I-2 + II-1B-83 | I-2 + II-3-17 | I-2 + II-3-53 |
| I-2 + II-1B-84 | I-2 + II-3-18 | I-2 + II-3-54 |
| I-2 + II-1B-85 | I-2 + II-3-19 | I-2 + II-3-55 |
| I-2 + II-1B-86 | I-2 + II-3-20 | I-2 + II-3-56 |
| I-2 + II-1B-87 | I-2 + II-3-21 | I-2 + II-3-57 |

(fortgesetzt)

| | | |
|---|---|---|
| I-2 + II-1B-88 | I-2 + II-3-22 | I-2 + II-3-58 |
| I-2 + II-2A-1 | I-2 + II-3-23 | I-2 + II-4A-1 |
| I-2 + II-2A-2 | I-2 + II-3-24 | I-2 + II-4A-2 |
| I-2 + II-2A-3 | I-2 + II-3-25 | I-2 + II-4A-3 |
| I-2 + II-2A-4 | I-2 + II-3-26 | I-2 + II-4A-4 |
| I-2 + II-2A-5 | I-2 + II-3-27 | I-2 + II-4A-5 |
| I-2 + II-2A-6 | I-2 + II-3-28 | I-2 + II-4A-6 |
| I-2 + II-2A-7 | I-2 + II-3-29 | I-2 + II-4A-7 |
| I-2 + II-2A-8 | I-2 + II-3-30 | I-2 + II-4A-8 |
| I-2 + II-2B-1 | I-2 + II-3-31 | I-2 + II-4A-9 |
| I-2 + II-2B-2 | I-2 + II-3-32 | I-2 + II-4A-10 |
| I-2 + II-2B-3 | I-2 + II-3-33 | I-2 + II-4A-11 |
| I-2 + II-2B-4 | I-2 + II-3-34 | I-2 + II-4B-1 |
| I-2 + II-2B-5 | I-2 + II-3-35 | I-2 + II-4B-2 |
| I-2 + II-2B-6 | I-2 + II-3-36 | I-2 + II-4B-3 |
| I-2 + II-3-1 | I-2 + II-3-37 | I-2 + II-4B-4 |
| I-2 + II-3-2 | I-2 + II-3-38 | I-2 + II-4C-4 |
| I-2 + II-3-3 | I-2 + II-3-39 | I-2 + II-5-1 |
| I-2 + II-3-4 | I-2 + II-3-40 | I-2 + II-5-2 |
| I-2 + II-3-5 | I-2 + II-3-41 | I-2 + II-6-1 |
| I-2 + II-3-6 | I-2 + II-3-42 | I-2 + II-6-2 |
| I-2 + II-3-7 | I-2 + II-3-43 | I-2 + II-6-3 |
| I-2 + II-3-8 | I-2 + II-3-44 | I-2 + II-6-4 |
| I-2 + II-6-5 | I-2 + II-15-5 | I-2 + II-28-1 |
| I-2 + II-6-6 | I-2 + II-15-6 | I-2 + II-28-2 |
| I-2 + II-7A-1 | I-2 + II-15-7 | I-2 + II-28-3 |
| I-2 + II-7A-2 | I-2 + II-15-8 | I-2 + II-28-4 |
| I-2 + II-7A-3 | I-2 + II-15-9 | I-2 + II-29-1 |
| I-2 + II-7A-4 | I-2 + II-15-10 | I-2 + II-29-2 |
| I-2 + II-7A-5 | I-2 + II-15-11 | I-2 + II-29-3 |
| I-2 + II-7B-1 | I-2 + II-15-12 | I-2 + II-29-4 |
| I-2 + II-7C-1 | I-2 + II-15-13 | I-2 + II-29-5 |
| I-2 + II-7C-2 | I-2 + II-16-1 | I-2 + II-29-6 |
| I-2 + II-8A-1 | I-2 + II-17-1 | I-2 + II-29-7 |
| I-2 + II-8B-1 | I-2 + II-18A-1 | I-2 + II-29-8 |
| I-2 + II-8C-1 | I-2 + II-18A-2 | I-2 + II-29-9 |
| I-2 + II-9A-1 | I-2 + II-18A-3 | I-2 + II-29-10 |
| I-2 + II-9B-1 | I-2 + II-18A-4 | I-2 + II-29-11 |
| I-2 + II-9B-2 | I-2 + II-18A-5 | I-2 + II-29-12 |
| I-2 + II-9C-1 | I-2 + II-18B-1 | I-2 + II-29-13 |
| I-2 + II-10A-1 | I-2 + II-19-1 | I-2 + II-29-14 |
| I-2 + II-10A-2 | I-2 + II-20A-1 | I-2 + II-29-15 |
| I-2 + II-10B-1 | I-2 + II-20B-1 | I-2 + II-29-16 |
| I-2 + II-12A-1 | I-2 + II-20C-1 | I-2 + II-29-17 |
| I-2 + II-12B-1 | I-2 + II-20D-1 | I-2 + II-29-18 |
| I-2 + II-12B-2 | I-2 + II-20D-2 | I-2 + II-29-19 |
| I-2 + II-12B-3 | I-2 + II-21-1 | I-2 + II-29-20 |
| I-2 + II-12C-1 | I-2 + II-21-2 | I-2 + II-29-21 |
| I-2 + II-12C-2 | I-2 + II-21-3 | I-2 + II-29-22 |
| I-2 + II-13-1 | I-2 + II-21-4 | I-2 + II-29-23 |
| I-2 + II-13-2 | I-2 + II-21-5 | I-2 + II-29-24 |

(fortgesetzt)

| | | |
|---|---|---|
| I-2 + II-13-3 | I-2 + II-21-6 | I-2 + II-29-25 |
| I-2 + II-13-4 | I-2 + II-21-7 | I-2 + II-29-26 |
| I-2 + II-13-5 | I-2 + II-22A-1 | I-2 + II-29-27 |
| I-2 + II-13-6 | I-2 + II-22B-1 | I-3 + II-1A-1 |
| I-2 + II-15-1 | I-2 + II-23A-1 | I-3 + II-1A-2 |
| I-2 + II-15-2 | I-2 + II-23A-2 | I-3 + II-1A-3 |
| I-2 + II-15-3 | I-2 + II-23B-1 | I-3 + II-1A-4 |
| I-2 + II-15-4 | I-2 + II-25-1 | I-3 + II-1A-5 |
| I-3 + II-1A-6 | I-3 + II-1B-7 | I-3 + II-1B-43 |
| I-3 + II-1A-7 | I-3 + II-1B-8 | I-3 + II-1B-44 |
| I-3 + II-1A-8 | I-3 + II-1B-9 | I-3 + II-1B-45 |
| I-3 + II-1A-9 | I-3 + II-1B-10 | I-3 + II-1B-46 |
| I-3 + II-1A-10 | I-3 + II-1B-11 | I-3 + II-1B-47 |
| I-3 + II-1A-11 | I-3 + II-1B-12 | I-3 + II-1B-48 |
| I-3 + II-1A-12 | I-3 + II-1B-13 | I-3 + II-1B-49 |
| I-3 + II-1A-13 | I-3 + II-1B-14 | I-3 + II-1B-50 |
| I-3 + II-1A-14 | I-3 + II-1B-15 | I-3 + II-1B-51 |
| I-3 + II-1A-15 | I-3 + II-1B-16 | I-3 + II-1B-52 |
| I-3 + II-1A-16 | I-3 + II-1B-17 | I-3 + II-1B-53 |
| I-3 + II-1A-17 | I-3 + II-1B-18 | I-3 + II-1B-54 |
| I-3 + II-1A-18 | I-3 + II-1B-19 | I-3 + II-1B-55 |
| I-3 + II-1A-19 | I-3 + II-1B-20 | I-3 + II-1B-56 |
| I-3 + II-1A-20 | I-3 + II-1B-21 | I-3 + II-1B-57 |
| I-3 + II-1A-21 | I-3 + II-1B-22 | I-3 + II-1B-58 |
| I-3 + II-1A-22 | I-3 + II-1B-23 | I-3 + II-1B-59 |
| I-3 + II-1A-23 | I-3 + II-1B-24 | I-3 + II-1B-60 |
| I-3 + II-1A-24 | I-3 + II-1B-25 | I-3 + II-1B-61 |
| I-3 + II-1A-25 | I-3 + II-1B-26 | I-3 + II-1B-62 |
| I-3 + II-1A-26 | I-3 + II-1B-27 | I-3 + II-1B-63 |
| I-3 + II-1A-27 | I-3 + II-1B-28 | I-3 + II-1B-64 |
| I-3 + II-1A-28 | I-3 + II-1B-29 | I-3 + II-1B-65 |
| I-3 + II-1A-29 | I-3 + II-1B-30 | I-3 + II-1B-66 |
| I-3 + II-1A-30 | I-3 + II-1B-31 | I-3 + II-1B-67 |
| I-3 + II-1A-31 | I-3 + II-1B-32 | I-3 + II-1B-68 |
| I-3 + II-1A-32 | I-3 + II-1B-33 | I-3 + II-1B-69 |
| I-3 + II-1A-33 | I-3 + II-1B-34 | I-3 + II-1B-70 |
| I-3 + II-1A-34 | I-3 + II-1B-35 | I-3 + II-1B-71 |
| I-3 + II-1A-35 | I-3 + II-1B-36 | I-3 + II-1B-72 |
| I-3 + II-1B-1 | I-3 + II-1B-37 | I-3 + II-1B-73 |
| I-3 + II-1B-2 | I-3 + II-1B-38 | I-3 + II-1B-74 |
| I-3 + II-1B-3 | I-3 + II-1B-39 | I-3 + II-1B-75 |
| I-3 + II-1B-4 | I-3 + II-1B-40 | I-3 + II-1B-76 |
| I-3 + II-1B-5 | I-3 + II-1B-41 | I-3 + II-1B-77 |
| I-3 + II-1B-6 | I-3 + II-1B-42 | I-3 + II-1B-78 |
| I-3 + II-1B-79 | I-3 + II-3-13 | I-3 + II-3-49 |
| I-3 + II-1B-80 | I-3 + II-3-14 | I-3 + II-3-50 |
| I-3 + II-1B-81 | I-3 + II-3-15 | I-3 + II-3-51 |
| I-3 + II-1B-82 | I-3 + II-3-16 | I-3 + II-3-52 |
| I-3 + II-1B-83 | I-3 + II-3-17 | I-3 + II-3-53 |
| I-3 + II-1B-84 | I-3 + II-3-18 | I-3 + II-3-54 |
| I-3 + II-1B-85 | I-3 + II-3-19 | I-3 + II-3-55 |

(fortgesetzt)

| | | |
|---|---|---|
| I-3 + II-1B-86 | I-3 + II-3-20 | I-3 + II-3-56 |
| I-3 + II-1B-87 | I-3 + II-3-21 | I-3 + II-3-57 |
| I-3 + II-1B-88 | I-3 + II-3-22 | I-3 + II-3-58 |
| I-3 + II-2A-1 | I-3 + II-3-23 | I-3 + II-4A-1 |
| I-3 + II-2A-2 | I-3 + II-3-24 | I-3 + II-4A-2 |
| I-3 + II-2A-3 | I-3 + II-3-25 | I-3 + II-4A-3 |
| I-3 + II-2A-4 | I-3 + II-3-26 | I-3 + II-4A-4 |
| I-3 + II-2A-5 | I-3 + II-3-27 | I-3 + II-4A-5 |
| I-3 + II-2A-6 | I-3 + II-3-28 | I-3 + II-4A-6 |
| I-3 + II-2A-7 | I-3 + II-3-29 | I-3 + II-4A-7 |
| I-3 + II-2A-8 | I-3 + II-3-30 | I-3 + II-4A-8 |
| I-3 + II-2B-1 | I-3 + II-3-31 | I-3 + II-4A-9 |
| I-3 + II-2B-2 | I-3 + II-3-32 | I-3 + II-4A-10 |
| I-3 + II-2B-3 | I-3 + II-3-33 | I-3 + II-4A-11 |
| I-3 + II-2B-4 | I-3 + II-3-34 | I-3 + II-4B-1 |
| I-3 + II-2B-5 | I-3 + II-3-35 | I-3 + II-4B-2 |
| I-3 + II-2B-6 | I-3 + II-3-36 | I-3 + II-4B-3 |
| I-3 + II-3-1 | I-3 + II-3-37 | I-3 + II-4B-4 |
| I-3 + II-3-2 | I-3 + II-3-38 | I-3 + II-4C-4 |
| I-3 + II-3-3 | I-3 + II-3-39 | I-3 + II-5-1 |
| I-3 + II-3-4 | I-3 + II-3-40 | I-3 + II-5-2 |
| I-3 + II-3-5 | I-3 + II-3-41 | I-3 + II-6-1 |
| I-3 + II-3-6 | I-3 + II-3-42 | I-3 + II-6-2 |
| I-3 + II-3-7 | I-3 + II-3-43 | I-3 + II-6-3 |
| I-3 + II-3-8 | I-3 + II-3-44 | I-3 + II-6-4 |
| I-3 + II-3-9 | I-3 + II-3-45 | I-3 + II-6-5 |
| I-3 + II-3-10 | I-3 + II-3-46 | I-3 + II-6-6 |
| I-3 + II-3-11 | I-3 + II-3-47 | I-3 + II-7A-1 |
| I-3 + II-3-12 | I-3 + II-3-48 | I-3 + II-7A-2 |
| I-3 + II-7A-3 | I-3 + II-15-9 | I-3 + II-29-1 |
| I-3 + II-7A-4 | I-3 + II-15-10 | I-3 + II-29-2 |
| I-3 + II-7A-5 | I-3 + II-15-11 | I-3 + II-29-3 |
| I-3 + II-7B-1 | I-3 + II-15-12 | I-3 + II-29-4 |
| I-3 + II-7C-1 | I-3 + II-15-13 | I-3 + II-29-5 |
| I-3 + II-7C-2 | I-3 + II-16-1 | I-3 + II-29-6 |
| I-3 + II-8A-1 | I-3 + II-17-1 | I-3 + II-29-7 |
| I-3 + II-8B-1 | I-3 + II-18A-1 | I-3 + II-29-8 |
| I-3 + II-8C-1 | I-3 + II-18A-2 | I-3 + II-29-9 |
| I-3 + II-9A-1 | I-3 + II-18A-3 | I-3 + II-29-10 |
| I-3 + II-9B-1 | I-3 + II-18A-4 | I-3 + II-29-11 |
| I-3 + II-9B-2 | I-3 + II-18A-5 | I-3 + II-29-12 |
| I-3 + II-9C-1 | I-3 + II-18B-1 | I-3 + II-29-13 |
| I-3 + II-10A-1 | I-3 + II-19-1 | I-3 + II-29-14 |
| I-3 + II-10A-2 | I-3 + II-20A-1 | I-3 + II-29-15 |
| I-3 + II-10B-1 | I-3 + II-20B-1 | I-3 + II-29-16 |
| I-3 + II-12A-1 | I-3 + II-20C-1 | I-3 + II-29-17 |
| I-3 + II-12B-1 | I-3 + II-20D-1 | I-3 + II-29-18 |
| I-3 + II-12B-2 | I-3 + II-20D-2 | I-3 + II-29-19 |
| I-3 + II-12B-3 | I-3 + II-21-1 | I-3 + II-29-20 |
| I-3 + II-12C-1 | I-3 + II-21-2 | I-3 + II-29-21 |
| I-3 + II-12C-2 | I-3 + II-21-3 | I-3 + II-29-22 |

(fortgesetzt)

| | | |
|---|---|---|
| I-3 + II-13-1 | I-3 + II-21-4 | I-3 + II-29-23 |
| I-3 + II-13-2 | I-3 + II-21-5 | I-3 + II-29-24 |
| I-3 + II-13-3 | I-3 + II-21-6 | I-3 + II-29-25 |
| I-3 + II-13-4 | I-3 + II-21-7 | I-3 + II-29-26 |
| I-3 + II-13-5 | I-3 + II-22A-1 | I-3 + II-29-27 |
| I-3 + II-13-6 | I-3 + II-22B-1 | I-4 + II-1A-1 |
| I-3 + II-15-1 | I-3 + II-23A-1 | I-4 + II-1A-2 |
| I-3 + II-15-2 | I-3 + II-23A-2 | I-4 + II-1A-3 |
| I-3 + II-15-3 | I-3 + II-23B-1 | I-4 + II-1A-4 |
| I-3 + II-15-4 | I-3 + II-25-1 | I-4 + II-1A-5 |
| I-3 + II-15-5 | I-3 + II-28-1 | I-4 + II-1A-6 |
| I-3 + II-15-6 | I-3 + II-28-2 | I-4 + II-1A-7 |
| I-3 + II-15-7 | I-3 + II-28-3 | I-4 + II-1A-8 |
| I-3 + II-15-8 | I-3 + II-28-4 | I-4 + II-1A-9 |
| I-4 + II-1A-10 | I-4 + II-1B-11 | I-4 + II-1B-47 |
| I-4 + II-1A-11 | I-4 + II-1B-12 | I-4 + II-1B-48 |
| I-4 + II-1A-12 | I-4 + II-1B-13 | I-4 + II-1B-49 |
| I-4 + II-1A-13 | I-4 + II-1B-14 | I-4 + II-1B-50 |
| I-4 + II-1A-14 | I-4 + II-1B-15 | I-4 + II-1B-51 |
| I-4 + II-1A-15 | I-4 + II-1B-16 | I-4 + II-1B-52 |
| I-4 + II-1A-16 | I-4 + II-1B-17 | I-4 + II-1B-53 |
| I-4 + II-1A-17 | I-4 + II-1B-18 | I-4 + II-1B-54 |
| I-4 + II-1A-18 | I-4 + II-1B-19 | I-4 + II-1B-55 |
| I-4 + II-1A-19 | I-4 + II-1B-20 | I-4 + II-1B-56 |
| I-4 + II-1A-20 | I-4 + II-1B-21 | I-4 + II-1B-57 |
| I-4 + II-1A-21 | I-4 + II-1B-22 | I-4 + II-1B-58 |
| I-4 + II-1A-22 | I-4 + II-1B-23 | I-4 + II-1B-59 |
| I-4 + II-1A-23 | I-4 + II-1B-24 | I-4 + II-1B-60 |
| I-4 + II-1A-24 | I-4 + II-1B-25 | I-4 + II-1B-61 |
| I-4 + II-1A-25 | I-4 + II-1B-26 | I-4 + II-1B-62 |
| I-4 + II-1A-26 | I-4 + II-1B-27 | I-4 + II-1B-63 |
| I-4 + II-1A-27 | I-4 + II-1B-28 | I-4 + II-1B-64 |
| I-4 + II-1A-28 | I-4 + II-1B-29 | I-4 + II-1B-65 |
| I-4 + II-1A-29 | I-4 + II-1B-30 | I-4 + II-1B-66 |
| I-4 + II-1A-30 | I-4 + II-1B-31 | I-4 + II-1B-67 |
| I-4 + II-1A-31 | I-4 + II-1B-32 | I-4 + II-1B-68 |
| I-4 + II-1A-32 | I-4 + II-1B-33 | I-4 + II-1B-69 |
| I-4 + II-1A-33 | I-4 + II-1B-34 | I-4 + II-1B-70 |
| I-4 + II-1A-34 | I-4 + II-1B-35 | I-4 + II-1B-71 |
| I-4 + II-1A-35 | I-4 + II-1B-36 | I-4 + II-1B-72 |
| I-4 + II-1B-1 | I-4 + II-1B-37 | I-4 + II-1B-73 |
| I-4 + II-1B-2 | I-4 + II-1B-38 | I-4 + II-1B-74 |
| I-4 + II-1B-3 | I-4 + II-1B-39 | I-4 + II-1B-75 |
| I-4 + II-1B-4 | I-4 + II-1B-40 | I-4 + II-1B-76 |
| I-4 + II-1B-5 | I-4 + II-1B-41 | I-4 + II-1B-77 |
| I-4 + II-1B-6 | I-4 + II-1B-42 | I-4 + II-1B-78 |
| I-4 + II-1B-7 | I-4 + II-1B-43 | I-4 + II-1B-79 |
| I-4 + II-1B-8 | I-4 + II-1B-44 | I-4 + II-1B-80 |
| I-4 + II-1B-9 | I-4 + II-1B-45 | I-4 + II-1B-81 |
| I-4 + II-1B-10 | I-4 + II-1B-46 | I-4 + II-1B-82 |
| I-4 + II-1B-83 | I-4 + II-3-17 | I-4 + II-3-53 |

(fortgesetzt)

| | | |
|---|---|---|
| I-4 + II-1B-84 | I-4 + II-3-18 | I-4 + II-3-54 |
| I-4 + II-1B-85 | I-4 + II-3-19 | I-4 + II-3-55 |
| I-4 + II-1B-86 | I-4 + II-3-20 | I-4 + II-3-56 |
| I-4 + II-1B-87 | I-4 + II-3-21 | I-4 + II-3-57 |
| I-4 + II-1B-88 | I-4 + II-3-22 | I-4 + II-3-58 |
| I-4 + II-2A-1 | I-4 + II-3-23 | I-4 + II-4A-1 |
| I-4 + II-2A-2 | I-4 + II-3-24 | I-4 + II-4A-2 |
| I-4 + II-2A-3 | I-4 + II-3-25 | I-4 + II-4A-3 |
| I-4 + II-2A-4 | I-4 + II-3-26 | I-4 + II-4A-4 |
| I-4 + II-2A-5 | I-4 + II-3-27 | I-4 + II-4A-5 |
| I-4 + II-2A-6 | I-4 + II-3-28 | I-4 + II-4A-6 |
| I-4 + II-2A-7 | I-4 + II-3-29 | I-4 + II-4A-7 |
| I-4 + II-2A-8 | I-4 + II-3-30 | I-4 + II-4A-8 |
| I-4 + II-2B-1 | I-4 + II-3-31 | I-4 + II-4A-9 |
| I-4 + II-2B-2 | I-4 + II-3-32 | I-4 + II-4A-10 |
| I-4 + II-2B-3 | I-4 + II-3-33 | I-4 + II-4A-11 |
| I-4 + II-2B-4 | I-4 + II-3-34 | I-4 + II-4B-1 |
| I-4 + II-2B-5 | I-4 + II-3-35 | I-4 + II-4B-2 |
| I-4 + II-2B-6 | I-4 + II-3-36 | I-4 + II-4B-3 |
| I-4 + II-3-1 | I-4 + II-3-37 | I-4 + II-4B-4 |
| I-4 + II-3-2 | I-4 + II-3-38 | I-4 + II-4C-4 |
| I-4 + II-3-3 | I-4 + II-3-39 | I-4 + II-5-1 |
| I-4 + II-3-4 | I-4 + II-3-40 | I-4 + II-5-2 |
| I-4 + II-3-5 | I-4 + II-3-41 | I-4 + II-6-1 |
| I-4 + II-3-6 | I-4 + II-3-42 | I-4 + II-6-2 |
| I-4 + II-3-7 | I-4 + II-3-43 | I-4 + II-6-3 |
| I-4 + II-3-8 | I-4 + II-3-44 | I-4 + II-6-4 |
| I-4 + II-3-9 | I-4 + II-3-45 | I-4 + II-6-5 |
| I-4 + II-3-10 | I-4 + II-3-46 | I-4 + II-6-6 |
| I-4 + II-3-11 | I-4 + II-3-47 | I-4 + II-7A-1 |
| I-4 + II-3-12 | I-4 + II-3-48 | I-4 + II-7A-2 |
| I-4 + II-3-13 | I-4 + II-3-49 | I-4 + II-7A-3 |
| I-4 + II-3-14 | I-4 + II-3-50 | I-4 + II-7A-4 |
| I-4 + II-3-15 | I-4 + II-3-51 | I-4 + II-7A-5 |
| I-4 + II-3-16 | I-4 + II-3-52 | I-4 + II-7B-1 |
| I-4 + II-7C-1 | I-4 + II-15-13 | I-4 + II-29-5 |
| I-4 + II-7C-2 | I-4 + II-16-1 | I-4 + II-29-6 |
| I-4 + II-8A-1 | I-4 + II-17-1 | I-4 + II-29-7 |
| I-4 + II-8B-1 | I-4 + II-18A-1 | I-4 + II-29-8 |
| I-4 + II-8C-1 | I-4 + II-18A-2 | I-4 + II-29-9 |
| I-4 + II-9A-1 | I-4 + II-18A-3 | I-4 + II-29-10 |
| I-4 + II-9B-1 | I-4 + II-18A-4 | I-4 + II-29-11 |
| I-4 + II-9B-2 | I-4 + II-18A-5 | I-4 + II-29-12 |
| I-4 + II-9C-1 | I-4 + II-18B-1 | I-4 + II-29-13 |
| I-4 + II-10A-1 | I-4 + II-19-1 | I-4 + II-29-14 |
| I-4 + II-10A-2 | I-4 + II-20A-1 | I-4 + II-29-15 |
| I-4 + II-10B-1 | I-4 + II-20B-1 | I-4 + II-29-16 |
| I-4 + II-12A-1 | I-4 + II-20C-1 | I-4 + II-29-17 |
| I-4 + II-12B-1 | I-4 + II-20D-1 | I-4 + II-29-18 |
| I-4 + II-12B-2 | I-4 + II-20D-2 | I-4 + II-29-19 |
| I-4 + II-12B-3 | I-4 + II-21-1 | I-4 + II-29-20 |

(fortgesetzt)

| | | |
|---|---|---|
| I-4 + II-12C-1 | I-4 + II-21-2 | I-4 + II-29-21 |
| I-4 + II-12C-2 | I-4 + II-21-3 | I-4 + II-29-22 |
| I-4 + II-13-1 | I-4 + II-21-4 | I-4 + II-29-23 |
| I-4 + II-13-2 | I-4 + II-21-5 | I-4 + II-29-24 |
| I-4 + II-13-3 | I-4 + II-21-6 | I-4 + II-29-25 |
| I-4 + II-13-4 | I-4 + II-21-7 | I-4 + II-29-26 |
| I-4 + II-13-5 | I-4 + II-22A-1 | I-4 + II-29-27 |
| I-4 + II-13-6 | I-4 + II-22B-1 | I-5 + II-1A-1 |
| I-4 + II-15-1 | I-4 + II-23A-1 | I-5 + II-1A-2 |
| I-4 + II-15-2 | I-4 + II-23A-2 | I-5 + II-1A-3 |
| I-4 + II-15-3 | I-4 + II-23B-1 | I-5 + II-1A-4 |
| I-4 + II-15-4 | I-4 + II-25-1 | I-5 + II-1A-5 |
| I-4 + II-15-5 | I-4 + II-28-1 | I-5 + II-1A-6 |
| I-4 + II-15-6 | I-4 + II-28-2 | I-5 + II-1A-7 |
| I-4 + II-15-7 | I-4 + II-28-3 | I-5 + II-1A-8 |
| I-4 + II-15-8 | I-4 + II-28-4 | I-5 + II-1A-9 |
| I-4 + II-15-9 | I-4 + II-29-1 | I-5 + II-1A-10 |
| I-4 + II-15-10 | I-4 + II-29-2 | I-5 + II-1A-11 |
| I-4 + II-15-11 | I-4 + II-29-3 | I-5 + II-1A-12 |
| I-4 + II-15-12 | I-4 + II-29-4 | I-5 + II-1A-13 |
| I-5 + II-1A-14 | I-5 + II-1B-15 | I-5 + II-1B-51 |
| I-5 + II-1A-15 | I-5 + II-1B-16 | I-5 + II-1B-52 |
| I-5 + II-1A-16 | I-5 + II-1B-17 | I-5 + II-1B-53 |
| I-5 + II-1A-17 | I-5 + II-1B-18 | I-5 + II-1B-54 |
| I-5 + II-1A-18 | I-5 + II-1B-19 | I-5 + II-1B-55 |
| I-5 + II-1A-19 | I-5 + II-1B-20 | I-5 + II-1B-56 |
| I-5 + II-1A-20 | I-5 + II-1B-21 | I-5 + II-1B-57 |
| I-5 + II-1A-21 | I-5 + II-1B-22 | I-5 + II-1B-58 |
| I-5 + II-1A-22 | I-5 + II-1B-23 | I-5 + II-1B-59 |
| I-5 + II-1A-23 | I-5 + II-1B-24 | I-5 + II-1B-60 |
| I-5 + II-1A-24 | I-5 + II-1B-25 | I-5 + II-1B-61 |
| I-5 + II-1A-25 | I-5 + II-1B-26 | I-5 + II-1B-62 |
| I-5 + II-1A-26 | I-5 + II-1B-27 | I-5 + II-1B-63 |
| I-5 + II-1A-27 | I-5 + II-1B-28 | I-5 + II-1B-64 |
| I-5 + II-1A-28 | I-5 + II-1B-29 | I-5 + II-1B-65 |
| I-5 + II-1A-29 | I-5 + II-1B-30 | I-5 + II-1B-66 |
| I-5 + II-1A-30 | I-5 + II-1B-31 | I-5 + II-1B-67 |
| I-5 + II-1A-31 | I-5 + II-1B-32 | I-5 + II-1B-68 |
| I-5 + II-1A-32 | I-5 + II-1B-33 | I-5 + II-1B-69 |
| I-5 + II-1A-33 | I-5 + II-1B-34 | I-5 + II-1B-70 |
| I-5 + II-1A-34 | I-5 + II-1B-35 | I-5 + II-1B-71 |
| I-5 + II-1A-35 | I-5 + II-1B-36 | I-5 + II-1B-72 |
| I-5 + II-1B-1 | I-5 + II-1B-37 | I-5 + II-1B-73 |
| I-5 + II-1B-2 | I-5 + II-1B-38 | I-5 + II-1B-74 |
| I-5 + II-1B-3 | I-5 + II-1B-39 | I-5 + II-1B-75 |
| I-5 + II-1B-4 | I-5 + II-1B-40 | I-5 + II-1B-76 |
| I-5 + II-1B-5 | I-5 + II-1B-41 | I-5 + II-1B-77 |
| I-5 + II-1B-6 | I-5 + II-1B-42 | I-5 + II-1B-78 |
| I-5 + II-1B-7 | I-5 + II-1B-43 | I-5 + II-1B-79 |
| I-5 + II-1B-8 | I-5 + II-1B-44 | I-5 + II-1B-80 |
| I-5 + II-1B-9 | I-5 + II-1B-45 | I-5 + II-1B-81 |

(fortgesetzt)

| | | |
|---|---|---|
| I-5 + II-1B-10 | I-5 + II-1B-46 | I-5 + II-1B-82 |
| I-5 + II-1B-11 | I-5 + II-1B-47 | I-5 + II-1B-83 |
| I-5 + II-1B-12 | I-5 + II-1B-48 | I-5 + II-1B-84 |
| I-5 + II-1B-13 | I-5 + II-1B-49 | I-5 + II-1B-85 |
| I-5 + II-1B-14 | I-5 + II-1B-50 | I-5 + II-1B-86 |
| I-5 + II-1B-87 | I-5 + II-3-21 | I-5 + II-3-57 |
| I-5 + II-1B-88 | I-5 + II-3-22 | I-5 + II-3-58 |
| I-5 + II-2A-1 | I-5 + II-3-23 | I-5 + II-4A-1 |
| I-5 + II-2A-2 | I-5 + II-3-24 | I-5 + II-4A-2 |
| I-5 + II-2A-3 | I-5 + II-3-25 | I-5 + II-4A-3 |
| I-5 + II-2A-4 | I-5 + II-3-26 | I-5 + II-4A-4 |
| I-5 + II-2A-5 | I-5 + II-3-27 | I-5 + II-4A-5 |
| I-5 + II-2A-6 | I-5 + II-3-28 | I-5 + II-4A-6 |
| I-5 + II-2A-7 | I-5 + II-3-29 | I-5 + II-4A-7 |
| I-5 + II-2A-8 | I-5 + II-3-30 | I-5 + II-4A-8 |
| I-5 + II-2B-1 | I-5 + II-3-31 | I-5 + II-4A-9 |
| I-5 + II-2B-2 | I-5 + II-3-32 | I-5 + II-4A-10 |
| I-5 + II-2B-3 | I-5 + II-3-33 | I-5 + II-4A-11 |
| I-5 + II-2B-4 | I-5 + II-3-34 | I-5 + II-4B-1 |
| I-5 + II-2B-5 | I-5 + II-3-35 | I-5 + II-4B-2 |
| I-5 + II-2B-6 | I-5 + II-3-36 | I-5 + II-4B-3 |
| I-5 + II-3-1 | I-5 + II-3-37 | I-5 + II-4B-4 |
| I-5 + II-3-2 | I-5 + II-3-38 | I-5 + II-4C-4 |
| I-5 + II-3-3 | I-5 + II-3-39 | I-5 + II-5-1 |
| I-5 + II-3-4 | I-5 + II-3-40 | I-5 + II-5-2 |
| I-5 + II-3-5 | I-5 + II-3-41 | I-5 + II-6-1 |
| I-5 + II-3-6 | I-5 + II-3-42 | I-5 + II-6-2 |
| I-5 + II-3-7 | I-5 + II-3-43 | I-5 + II-6-3 |
| I-5 + II-3-8 | I-5 + II-3-44 | I-5 + II-6-4 |
| I-5 + II-3-9 | I-5 + II-3-45 | I-5 + II-6-5 |
| I-5 + II-3-10 | I-5 + II-3-46 | I-5 + II-6-6 |
| I-5 + II-3-11 | I-5 + II-3-47 | I-5 + II-7A-1 |
| I-5 + II-3-12 | I-5 + II-3-48 | I-5 + II-7A-2 |
| I-5 + II-3-13 | I-5 + II-3-49 | I-5 + II-7A-3 |
| I-5 + II-3-14 | I-5 + II-3-50 | I-5 + II-7A-4 |
| I-5 + II-3-15 | I-5 + II-3-51 | I-5 + II-7A-5 |
| I-5 + II-3-16 | I-5 + II-3-52 | I-5 + II-7B-1 |
| I-5 + II-3-17 | I-5 + II-3-53 | I-5 + II-7C-1 |
| I-5 + II-3-18 | I-5 + II-3-54 | I-5 + II-7C-2 |
| I-5 + II-3-19 | I-5 + II-3-55 | I-5 + II-8A-1 |
| I-5 + II-3-20 | I-5 + II-3-56 | I-5 + II-8B-1 |
| I-5 + II-8C-1 | I-5 + II-18A-2 | I-5 + II-29-9 |
| I-5 + II-9A-1 | I-5 + II-18A-3 | I-5 + II-29-10 |
| I-5 + II-9B-1 | I-5 + II-18A-4 | I-5 + II-29-11 |
| I-5 + II-9B-2 | I-5 + II-18A-5 | I-5 + II-29-12 |
| I-5 + II-9C-1 | I-5 + II-18B-1 | I-5 + II-29-13 |
| I-5 + II-10A-1 | I-5 + II-19-1 | I-5 + II-29-14 |
| I-5 + II-10A-2 | I-5 + II-20A-1 | I-5 + II-29-15 |
| I-5 + II-10B-1 | I-5 + II-20B-1 | I-5 + II-29-16 |
| I-5 + II-12A-1 | I-5 + II-20C-1 | I-5 + II-29-17 |
| I-5 + II-12B-1 | I-5 + II-20D-1 | I-5 + II-29-18 |

(fortgesetzt)

| | | |
|---|---|---|
| I-5 + II-12B-2 | I-5 + II-20D-2 | I-5 + II-29-19 |
| I-5 + II-12B-3 | I-5 + II-21-1 | I-5 + II-29-20 |
| I-5 + II-12C-1 | I-5 + II-21-2 | I-5 + II-29-21 |
| I-5 + II-12C-2 | I-5 + II-21-3 | I-5 + II-29-22 |
| I-5 + II-13-1 | I-5 + II-21-4 | I-5 + II-29-23 |
| I-5 + II-13-2 | I-5 + II-21-5 | I-5 + II-29-24 |
| I-5 + II-13-3 | I-5 + II-21-6 | I-5 + II-29-25 |
| I-5 + II-13-4 | I-5 + II-21-7 | I-5 + II-29-26 |
| I-5 + II-13-5 | I-5 + II-22A-1 | I-5 + II-29-27 |
| I-5 + II-13-6 | I-5 + II-22B-1 | I-6 + II-1A-1 |
| I-5 + II-15-1 | I-5 + II-23A-1 | I-6 + II-1A-2 |
| I-5 + II-15-2 | I-5 + II-23A-2 | I-6 + II-1A-3 |
| I-5 + II-15-3 | I-5 + II-23B-1 | I-6 + II-1A-4 |
| I-5 + II-15-4 | I-5 + II-25-1 | I-6 + II-1A-5 |
| I-5 + II-15-5 | I-5 + II-28-1 | I-6 + II-1A-6 |
| I-5 + II-15-6 | I-5 + II-28-2 | I-6 + II-1A-7 |
| I-5 + II-15-7 | I-5 + II-28-3 | I-6 + II-1A-8 |
| I-5 + II-15-8 | I-5 + II-28-4 | I-6 + II-1A-9 |
| I-5 + II-15-9 | I-5 + II-29-1 | I-6 + II-1A-10 |
| I-5 + II-15-10 | I-5 + II-29-2 | I-6 + II-1A-11 |
| I-5 + II-15-11 | I-5 + II-29-3 | I-6 + II-1A-12 |
| I-5 + II-15-12 | I-5 + II-29-4 | I-6 + II-1A-13 |
| I-5 + II-15-13 | I-5 + II-29-5 | I-6 + II-1A-14 |
| I-5 + II-16-1 | I-5 + II-29-6 | I-6 + II-1A-15 |
| I-5 + II-17-1 | I-5 + II-29-7 | I-6 + II-1A-16 |
| I-5 + II-18A-1 | I-5 + II-29-8 | I-6 + II-1A-17 |
| I-6 + II-1A-18 | I-6 + II-1B-19 | I-6 + II-1B-55 |
| I-6 + II-1A-19 | I-6 + II-1B-20 | I-6 + II-1B-56 |
| I-6 + II-1A-20 | I-6 + II-1B-21 | I-6 + II-1B-57 |
| I-6 + II-1A-21 | I-6 + II-1B-22 | I-6 + II-1B-58 |
| I-6 + II-1A-22 | I-6 + II-1B-23 | I-6 + II-1B-59 |
| I-6 + II-1A-23 | I-6 + II-1B-24 | I-6 + II-1B-60 |
| I-6 + II-1A-24 | I-6 + II-1B-25 | I-6 + II-1B-61 |
| I-6 + II-1A-25 | I-6 + II-1B-26 | I-6 + II-1B-62 |
| I-6 + II-1A-26 | I-6 + II-1B-27 | I-6 + II-1B-63 |
| I-6 + II-1A-27 | I-6 + II-1B-28 | I-6 + II-1B-64 |
| I-6 + II-1A-28 | I-6 + II-1B-29 | I-6 + II-1B-65 |
| I-6 + II-1A-29 | I-6 + II-1B-30 | I-6 + II-1B-66 |
| I-6 + II-1A-30 | I-6 + II-1B-31 | I-6 + II-1B-67 |
| I-6 + II-1A-31 | I-6 + II-1B-32 | I-6 + II-1B-68 |
| I-6 + II-1A-32 | I-6 + II-1B-33 | I-6 + II-1B-69 |
| I-6 + II-1A-33 | I-6 + II-1B-34 | I-6 + II-1B-70 |
| I-6 + II-1A-34 | I-6 + II-1B-35 | I-6 + II-1B-71 |
| I-6 + II-1A-35 | I-6 + II-1B-36 | I-6 + II-1B-72 |
| I-6 + II-1B-1 | I-6 + II-1B-37 | I-6 + II-1B-73 |
| I-6 + II-1B-2 | I-6 + II-1B-38 | I-6 + II-1B-74 |
| I-6 + II-1B-3 | I-6 + II-1B-39 | I-6 + II-1B-75 |
| I-6 + II-1B-4 | I-6 + II-1B-40 | I-6 + II-1B-76 |
| I-6 + II-1B-5 | I-6 + II-1B-41 | I-6 + II-1B-77 |
| I-6 + II-1B-6 | I-6 + II-1B-42 | I-6 + II-1B-78 |
| I-6 + II-1B-7 | I-6 + II-1B-43 | I-6 + II-1B-79 |

(fortgesetzt)

| | | |
|---|---|---|
| I-6 + II-1B-8 | I-6 + II-1B-44 | I-6 + II-1B-80 |
| I-6 + II-1B-9 | I-6 + II-1B-45 | I-6 + II-1B-81 |
| I-6 + II-1B-10 | I-6 + II-1B-46 | I-6 + II-1B-82 |
| I-6 + II-1B-11 | I-6 + II-1B-47 | I-6 + II-1B-83 |
| I-6 + II-1B-12 | I-6 + II-1B-48 | I-6 + II-1B-84 |
| I-6 + II-1B-13 | I-6 + II-1B-49 | I-6 + II-1B-85 |
| I-6 + II-1B-14 | I-6 + II-1B-50 | I-6 + II-1B-86 |
| I-6 + II-1B-15 | I-6 + II-1B-51 | I-6 + II-1B-87 |
| I-6 + II-1B-16 | I-6 + II-1B-52 | I-6 + II-1B-88 |
| I-6 + II-1B-17 | I-6 + II-1B-53 | I-6 + II-2A-1 |
| I-6 + II-1B-18 | I-6 + II-1B-54 | I-6 + II-2A-2 |
| I-6 + II-2A-3 | I-6 + II-3-25 | I-6 + II-4A-3 |
| I-6 + II-2A-4 | I-6 + II-3-26 | I-6 + II-4A-4 |
| I-6 + II-2A-5 | I-6 + II-3-27 | I-6 + II-4A-5 |
| I-6 + II-2A-6 | I-6 + II-3-28 | I-6 + II-4A-6 |
| I-6 + II-2A-7 | I-6 + II-3-29 | I-6 + II-4A-7 |
| I-6 + II-2A-8 | I-6 + II-3-30 | I-6 + II-4A-8 |
| I-6 + II-2B-1 | I-6 + II-3-31 | I-6 + II-4A-9 |
| I-6 + II-2B-2 | I-6 + II-3-32 | I-6 + II-4A-10 |
| I-6 + II-2B-3 | I-6 + II-3-33 | I-6 + II-4A-11 |
| I-6 + II-2B-4 | I-6 + II-3-34 | I-6 + II-4B-1 |
| I-6 + II-2B-5 | I-6 + II-3-35 | I-6 + II-4B-2 |
| I-6 + II-2B-6 | I-6 + II-3-36 | I-6 + II-4B-3 |
| I-6 + II-3-1 | I-6 + II-3-37 | I-6 + II-4B-4 |
| I-6 + II-3-2 | I-6 + II-3-38 | I-6 + II-4C-4 |
| I-6 + II-3-3 | I-6 + II-3-39 | I-6 + II-5-1 |
| I-6 + II-3-4 | I-6 + II-3-40 | I-6 + II-5-2 |
| I-6 + II-3-5 | I-6 + II-3-41 | I-6 + II-6-1 |
| I-6 + II-3-6 | I-6 + II-3-42 | I-6 + II-6-2 |
| I-6 + II-3-7 | I-6 + II-3-43 | I-6 + II-6-3 |
| I-6 + II-3-8 | I-6 + II-3-44 | I-6 + II-6-4 |
| I-6 + II-3-9 | I-6 + II-3-45 | I-6 + II-6-5 |
| I-6 + II-3-10 | I-6 + II-3-46 | I-6 + II-6-6 |
| I-6 + II-3-11 | I-6 + II-3-47 | I-6 + II-7A-1 |
| I-6 + II-3-12 | I-6 + II-3-48 | I-6 + II-7A-2 |
| I-6 + II-3-13 | I-6 + II-3-49 | I-6 + II-7A-3 |
| I-6 + II-3-14 | I-6 + II-3-50 | I-6 + II-7A-4 |
| I-6 + II-3-15 | I-6 + II-3-51 | I-6 + II-7A-5 |
| I-6 + II-3-16 | I-6 + II-3-52 | I-6 + II-7B-1 |
| I-6 + II-3-17 | I-6 + II-3-53 | I-6 + II-7C-1 |
| I-6 + II-3-18 | I-6 + II-3-54 | I-6 + II-7C-2 |
| I-6 + II-3-19 | I-6 + II-3-55 | I-6 + II-8A-1 |
| I-6 + II-3-20 | I-6 + II-3-56 | I-6 + II-8B-1 |
| I-6 + II-3-21 | I-6 + II-3-57 | I-6 + II-8C-1 |
| I-6 + II-3-22 | I-6 + II-3-58 | I-6 + II-9A-1 |
| I-6 + II-3-23 | I-6 + II-4A-1 | I-6 + II-9B-1 |
| I-6 + II-3-24 | I-6 + II-4A-2 | I-6 + II-9B-2 |
| I-6 + II-9C-1 | I-6 + II-16-1 | I-6 + II-28-3 |
| I-6 + II-10A-1 | I-6 + II-17-1 | I-6 + II-28-4 |
| I-6 + II-10A-2 | I-6 + II-18A-1 | I-6 + II-29-1 |
| I-6 + II-10B-1 | I-6 + II-18A-2 | I-6 + II-29-2 |

(fortgesetzt)

| | | |
|---|---|---|
| I-6 + II-12A-1 | I-6 + II-18A-3 | I-6 + II-29-3 |
| I-6 + II-12B-1 | I-6 + II-18A-4 | I-6 + II-29-4 |
| I-6 + II-12B-2 | I-6 + II-18A-5 | I-6 + II-29-5 |
| I-6 + II-12B-3 | I-6 + II-18B-1 | I-6 + II-29-6 |
| I-6 + II-12C-1 | I-6 + II-19-1 | I-6 + II-29-7 |
| I-6 + II-12C-2 | I-6 + II-20A-1 | I-6 + II-29-8 |
| I-6 + II-13-1 | I-6 + II-20B-1 | I-6 + II-29-9 |
| I-6 + II-13-2 | I-6 + II-20C-1 | I-6 + II-29-10 |
| I-6 + II-13-3 | I-6 + II-20D-1 | I-6 + II-29-11 |
| I-6 + II-13-4 | I-6 + II-20D-2 | I-6 + II-29-12 |
| I-6 + II-13-5 | I-6 + II-21-1 | I-6 + II-29-13 |
| I-6 + II-13-6 | I-6 + II-21-2 | I-6 + II-29-14 |
| I-6 + II-15-1 | I-6 + II-21-3 | I-6 + II-29-15 |
| I-6 + II-15-2 | I-6 + II-21-4 | I-6 + II-29-16 |
| I-6 + II-15-3 | I-6 + II-21-5 | I-6 + II-29-17 |
| I-6 + II-15-4 | I-6 + II-21-6 | I-6 + II-29-18 |
| I-6 + II-15-5 | I-6 + II-21-7 | I-6 + II-29-19 |
| I-6 + II-15-6 | I-6 + II-22A-1 | I-6 + II-29-20 |
| I-6 + II-15-7 | I-6 + II-22B-1 | I-6 + II-29-21 |
| I-6 + II-15-8 | I-6 + II-23A-1 | I-6 + II-29-22 |
| I-6 + II-15-9 | I-6 + II-23A-2 | I-6 + II-29-23 |
| I-6 + II-15-10 | I-6 + II-23B-1 | I-6 + II-29-24 |
| I-6 + II-15-11 | I-6 + II-25-1 | I-6 + II-29-25 |
| I-6 + II-15-12 | I-6 + II-28-1 | I-6 + II-29-26 |
| I-6 + II-15-13 | I-6 + II-28-2 | I-6 + II-29-27 |

Ganz besonders bevorzugt sind folgende Wirkstoffe:

1. Acrinathrin (II-3-1)

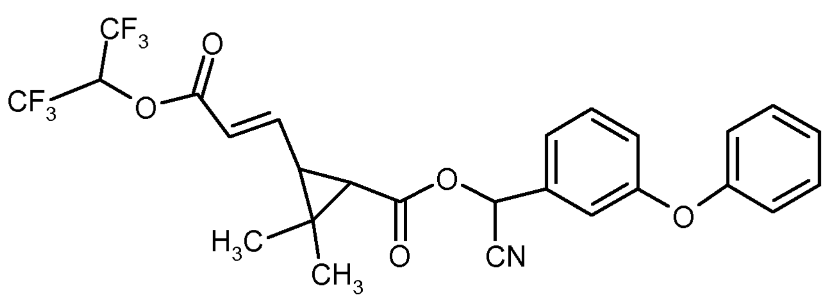

bekannt aus EP-A-048 186
und / oder
2. Alpha-cypermethrin (II-3-18)

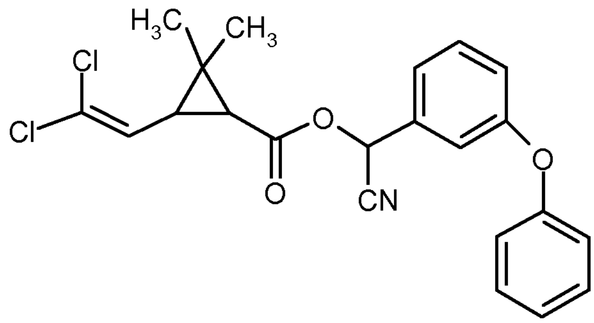

bekannt aus EP-A-067 461
und / oder
3. Betacyfluthrin (II-3-3)

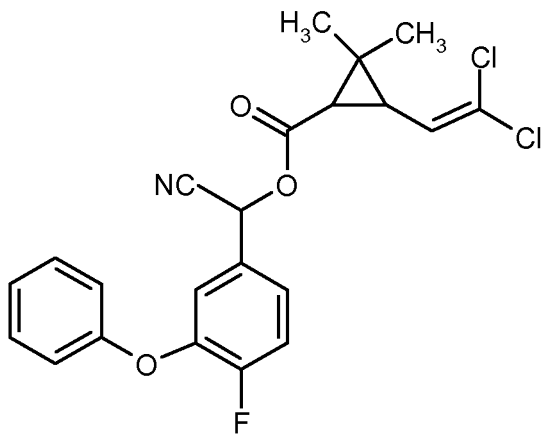

bekannt aus EP-A-206 149
und / oder
4. Cyhalothrin (II-3-17)

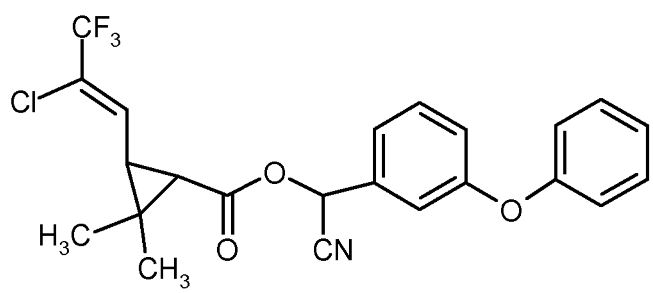

bekannt aus DE-A-2 802 962
und / oder
5. Cypermethrin (II-3-18)

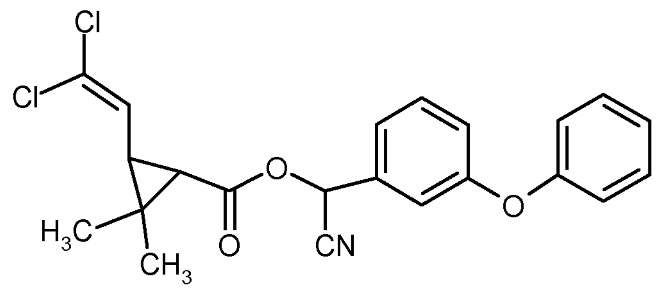

bekannt aus DE-A-2 326 077
und / oder
6. Deltamethrin (II-3-20)

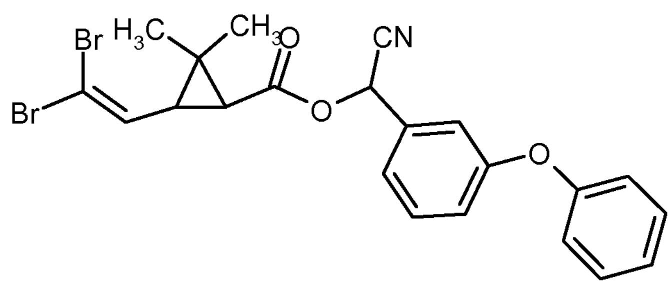

bekannt aus DE-A-2 326 077
und / oder
7. Esfenvalerat (II-3-22)

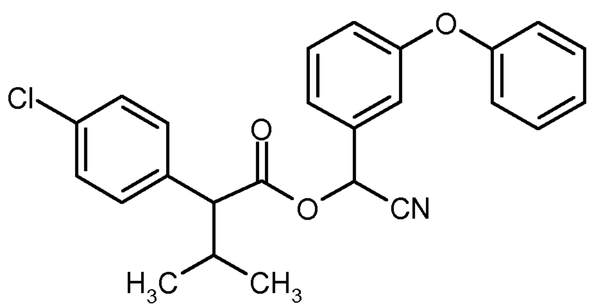

bekannt aus DE-A-2 737 297
und / oder
8. Etofenprox (II-3-23)

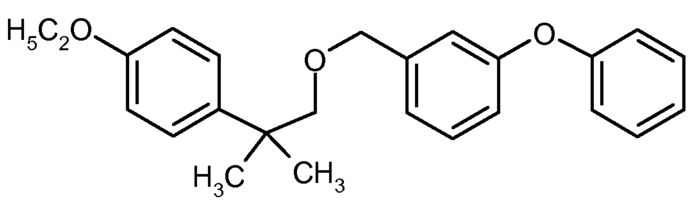

bekannt aus DE-A-3 117510

und / oder
9. Fenpropathrin (II-3-25)

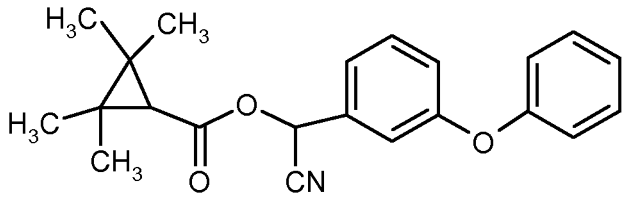

bekannt aus DE-A-2 231 312
und / oder
10. Fenvalerat (II-3-27)

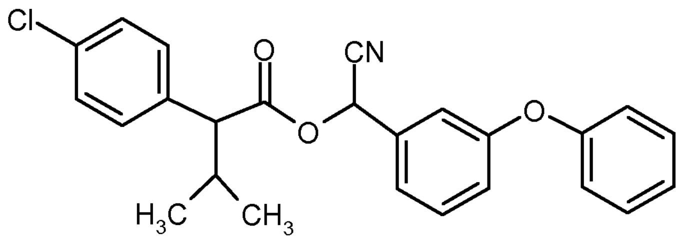

bekannt aus DE-A-2 335 347
und / oder
11. Flucythrinat (II-3-29)

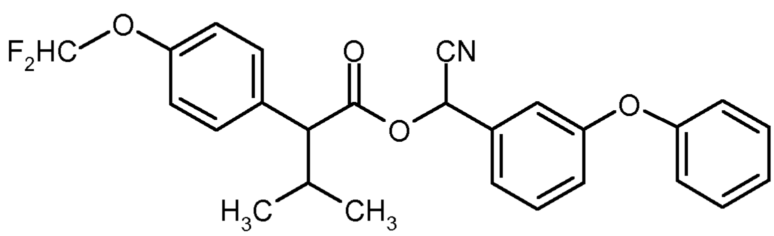

bekannt aus DE-A-2 757 066
und / oder
12.a. Lambda-cyhalothrin (II-3-37)

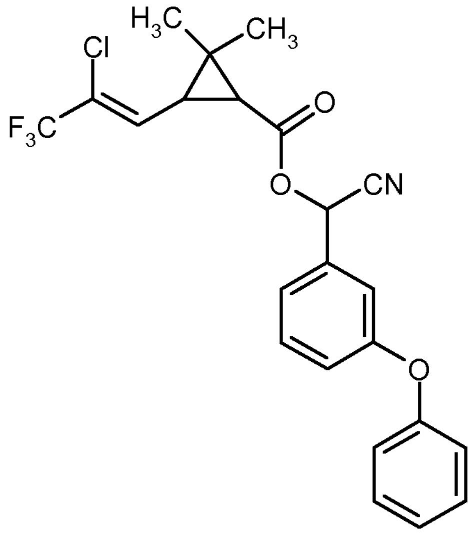

bekannt aus EP-A-106 469
und / oder
12 b. gamma-Cyhalothrin (II-3-34)

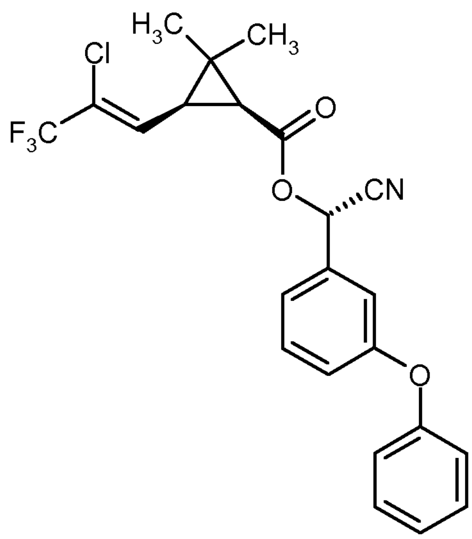

bekannt aus GB-A-02143823
und / oder
13. Permethrin (II-3-39)

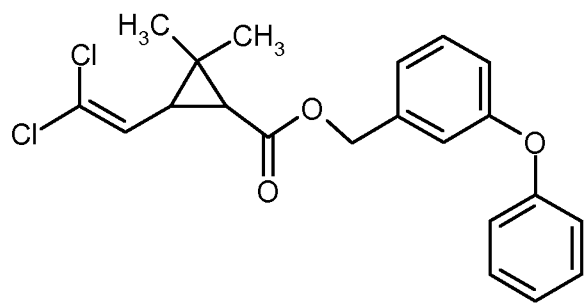

bekannt aus DE-A-2 326 077
und / oder
14. Taufluvalinat (II-3-48)

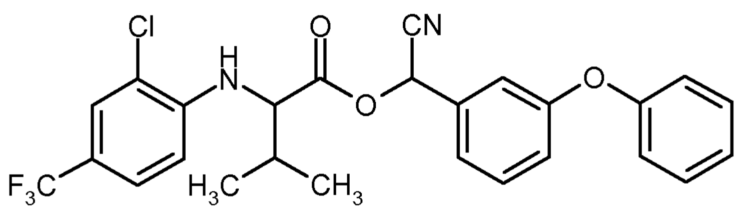

bekannt aus EP-A-038 617
und / oder
15. Tralomethrin (II-3-52)

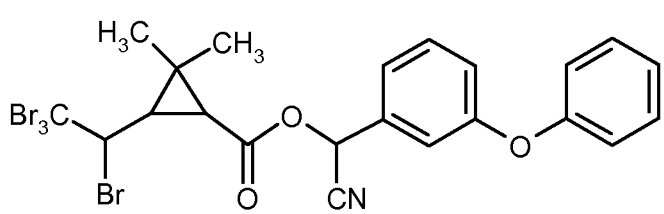

bekannt aus DE-A-2 742 546
und / oder
16. Zeta-cypermethrin(II-3-18)

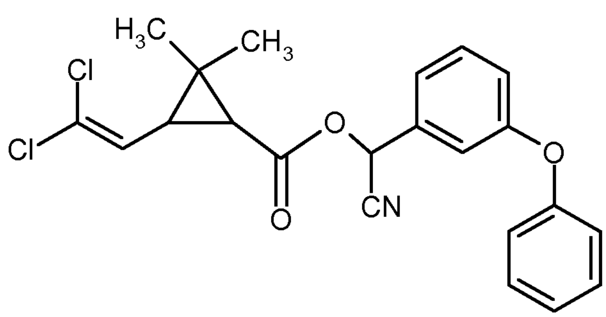

bekannt aus EP-A-026 542
und / oder
17. Cyfluthrin (II-3-16)

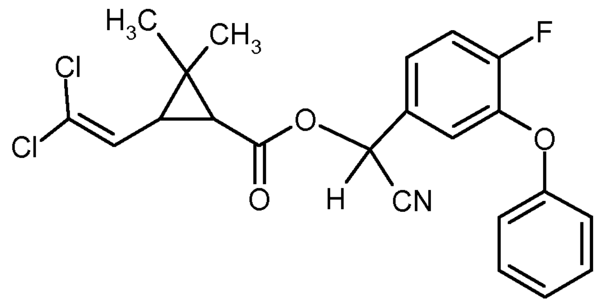

bekannt aus DE-A-27 09 264
und / oder
18. Bifenthrin (II-3-4)

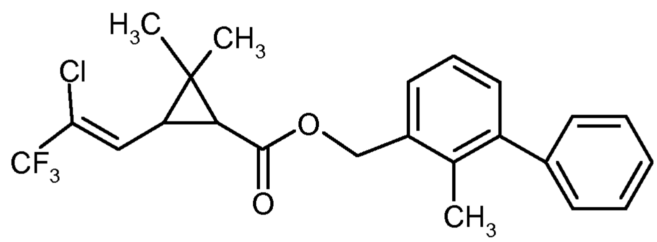

bekannt aus EP-A-049 977
und / oder
19. Cycloprothrin (II-3-15)

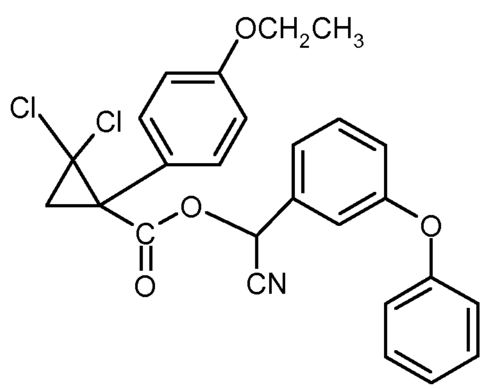

bekannt aus DE-A-2653189
und / oder
20. Eflusilanat (II-3-56)

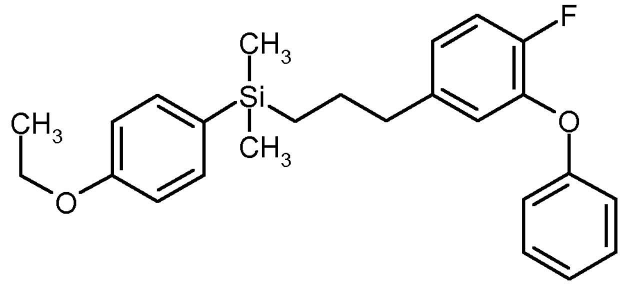

bekannt aus DE-A-36 04 781
und / oder
21. Fubfenprox (II-3-33)

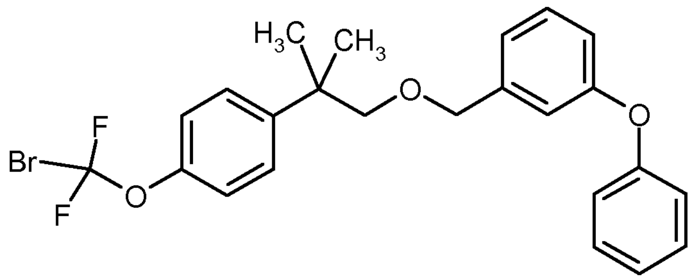

bekannt aus DE-A-37 08 231
und / oder
22. Pyrethrin (II-3-55)

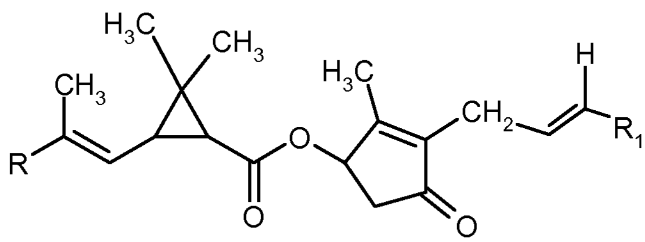

R = $-CH_3$ oder $-CO_2CH_3$
$R_1$ = $-CH{=}CH_2$ oder $-CH_3$ oder $-CH_2CH_3$
bekannt aus The Pesticide manual, 1997, 11.Ausgabe, S.1056
und / oder
23. Resmethrin (II-3-45)

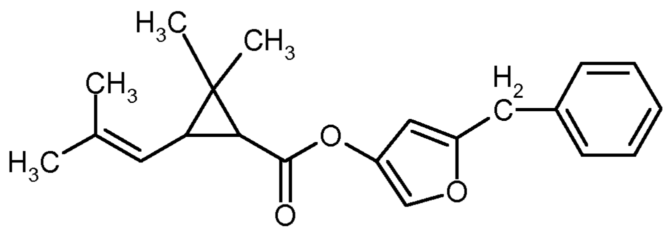

bekannt aus GB-A-1 168 797
und / oder
24. Imidacloprid (II-4A-4)

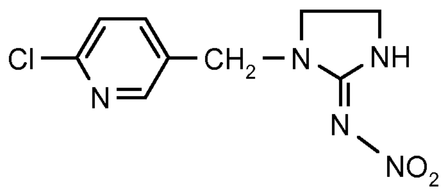

bekannt aus EP-A-00192060
und / oder
25. Acetamiprid (II-4A-1)

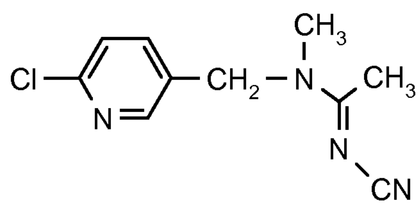

bekannt aus WO 91/04965
und / oder
26. Thiamethoxam (II-4A-9)

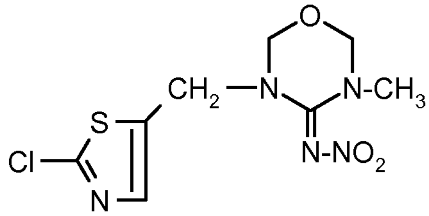

bekannt aus EP-A-00580553
und / oder
27. Nitenpyram (II-4A-6)

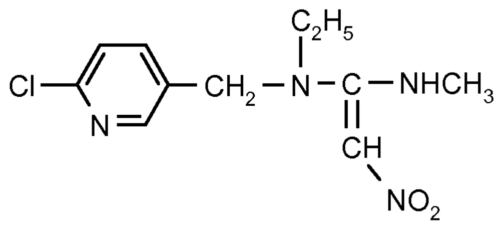

bekannt aus EP-A-00302389
und / oder
28. Thiacloprid (II-4A-8)

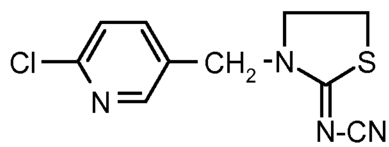

bekannt aus EP-A-00235725
und / oder
29. Dinotefuran (II-4A-3)

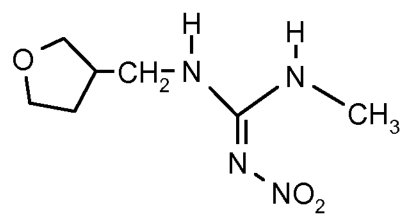

bekannt aus EP-A-00649845
und / oder
30. Clothianidin (II-4A-2)

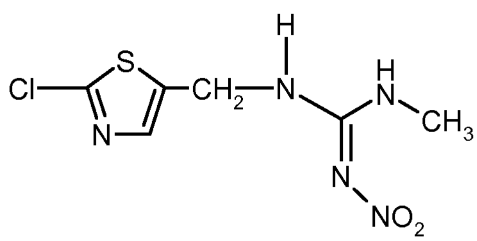

bekannt aus EP-A-00376279
und / oder
31. Imidaclothiz (II-4A-5)

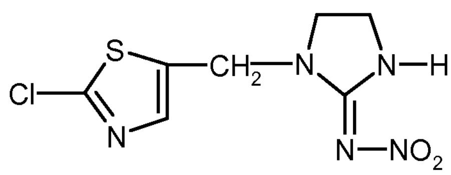

bekannt aus EP-A-00192060
und / oder
32. Chlorfluazuron (II-15-2)

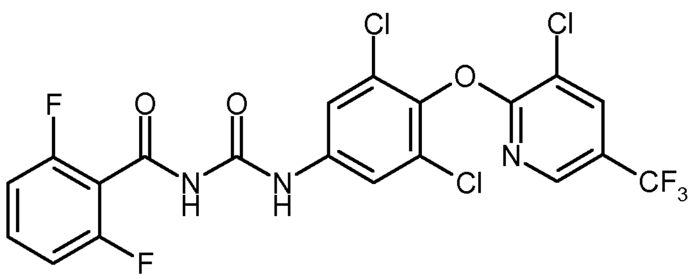

bekannt aus DE-A-2 818 830
und / oder
33. Diflubenzuron (II-15-3)

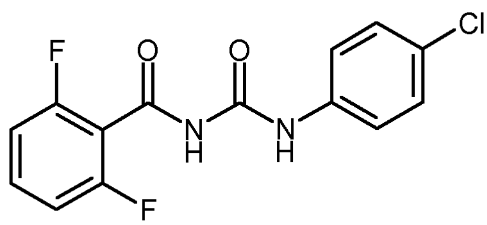

bekannt aus DE-A 2 123 236
und / oder
34. Lufenuron (II-15-8)

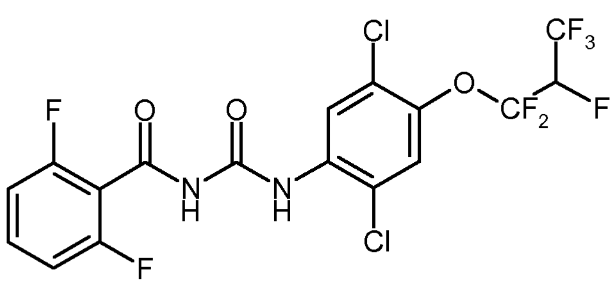

bekannt aus EP-A-179 022
und / oder
35. Teflubenzuron (II-15-12)
bekannt aus EP-A-052 833
und / oder
36. Triflumuron (II-15-13)

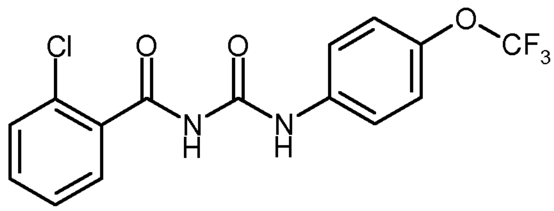

bekannt aus DE-A-2 601 780
und / oder
37. Novaluron (II-15-9)

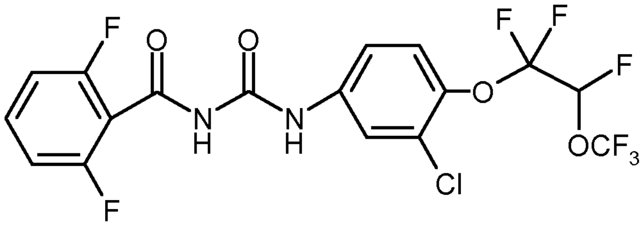

bekannt aus US 4,980,376
und / oder
38. Flufenoxuron (II-15-6)

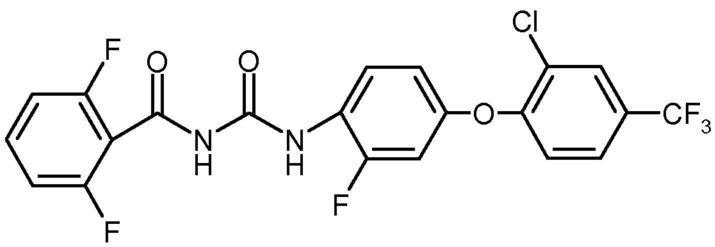

bekannt aus EP-A 161 019
und / oder
39. Hexaflumuron (II-15-7)

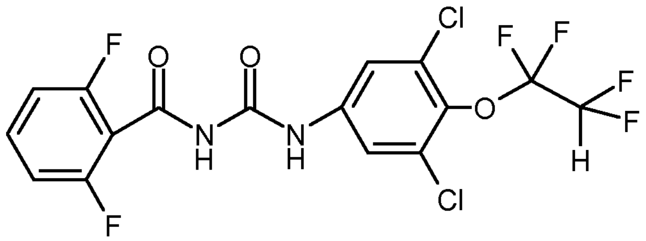

bekannt aus EP-A 71 279
und / oder
40. Bistrifluron (II-15-1)

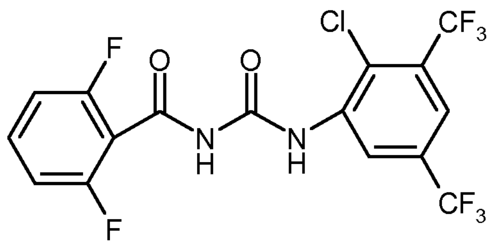

bekannt aus WO 98/00394
und / oder
41. Noviflumuron (II-15-10)

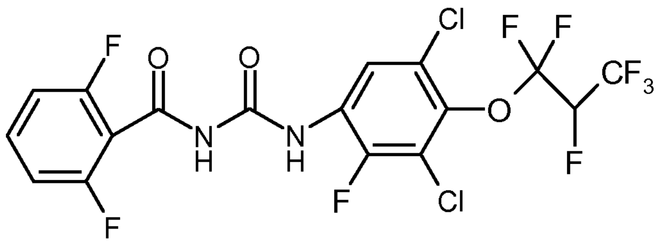

bekannt aus WO 98/19542
und / oder
42. Buprofezin (II-16-1)

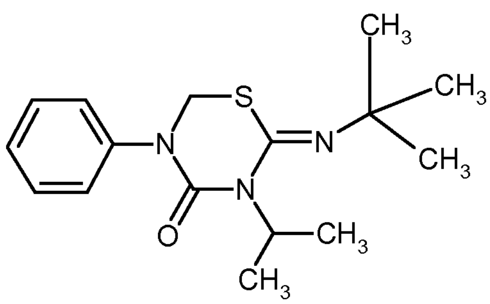

bekannt aus DE-A-2 824 126
und / oder
43. Cyromazine (II-17-1)

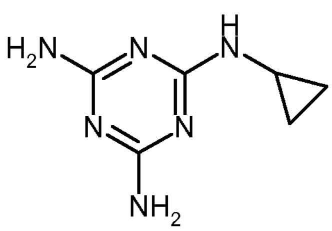

bekannt aus DE-A-2 736 876
und / oder
44. Methoxyfenozide (II-18A-3)

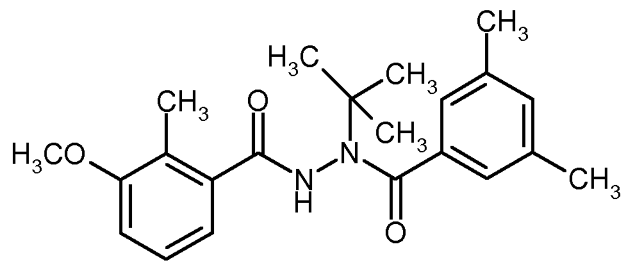

bekannt aus EP-A-639 559
und / oder
45. Tebufenozide (II-18A-4)

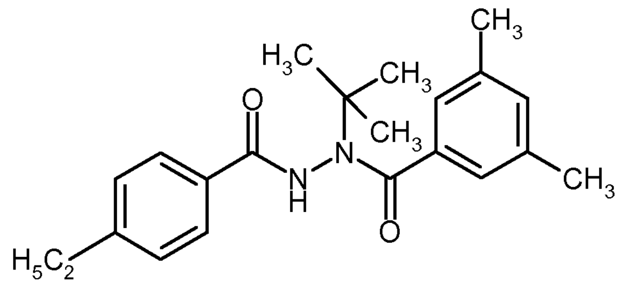

bekannt aus EP-A-339 854
und / oder
46. Halofenozide (II-18A-2)

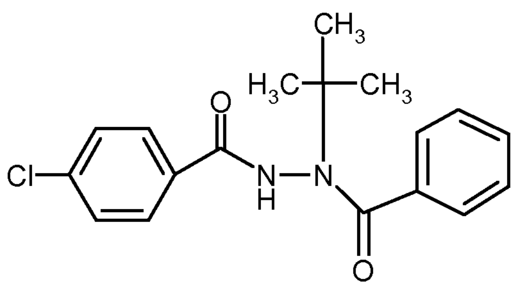

bekannt aus EP-A 228 564
und / oder
47. JS-118 (II-18A-5)

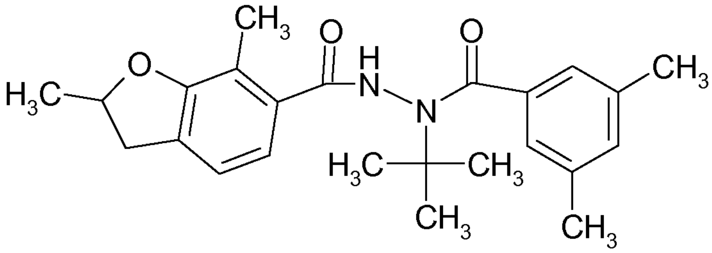

bekannt aus ZL 01108161.9, Handelsname Fu-Shen, Modem Agrochemicals, Vol. 4, No. 3, 2005, 1-7
und / oder

48. Chromafenozide (II-18A-1)

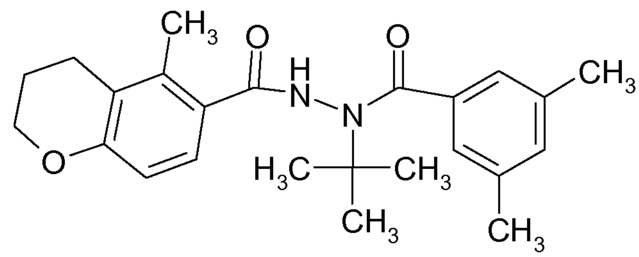

bekannt aus EP-A-496342
und / oder
49. Endosulfan (II-2A-3)

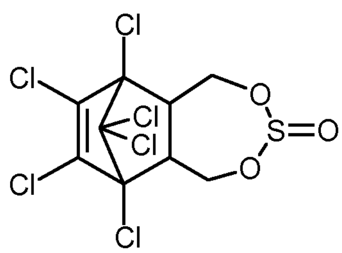

und / oder
50.Friponil (II-2B-3)

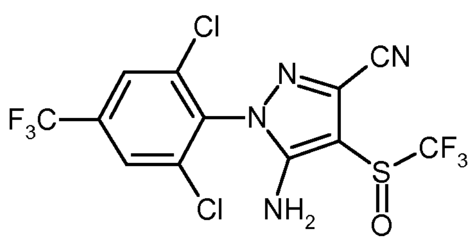

bekannt aus EP-A-295 117
und / oder
51. Ethiprole (II-2B-2)

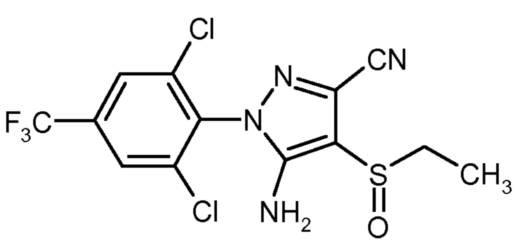

bekannt aus WO 97/22593
und / oder
52. Pyrafluprole (II-2B-4)

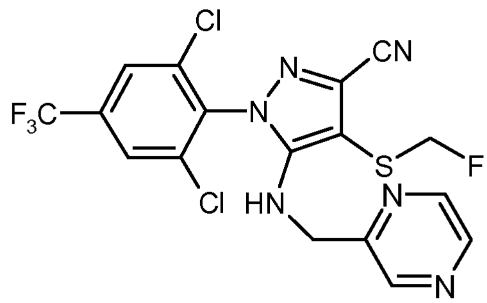

bekannt aus WO 01/00614
und / oder
53. Pyriprole (II-2B-5)

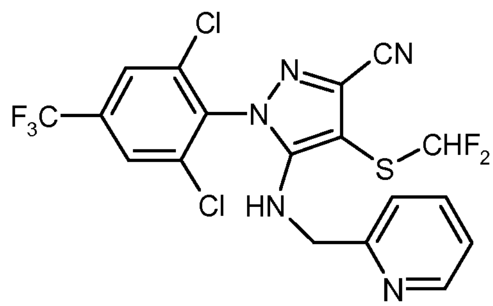

bekannt aus WO 02/10153
und / oder
54. Flubendiamide (II-28-1)

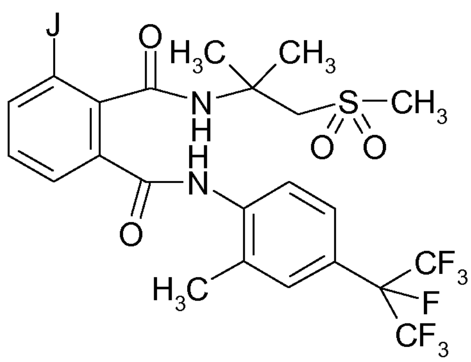

bekannt aus EP-A-01006107
und / oder
55. die Verbindung (II-28-2)

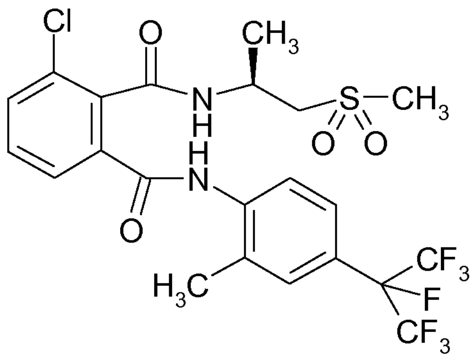

bekannt aus WO 06/022225
und / oder
56. Rynaxapyr (II-28-3)

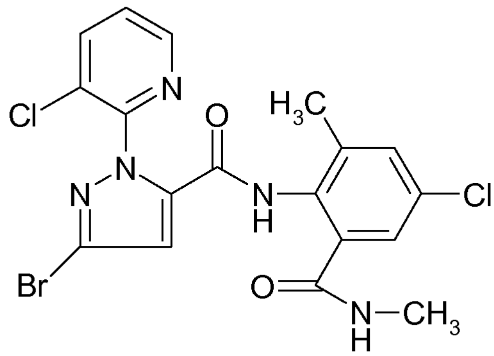

bekannt aus WO 03/015519
und / oder
57. HGW86 (II-28-4)

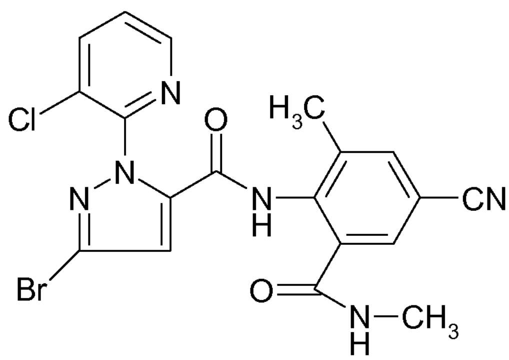

bekannt aus WO 04/067528
und / oder
58. Emamectin (II-6-2)
bekannt aus EP-A-089 202
und / oder
59. Emamectin benzoate (II-6-3)
bekannt aus EP-A-089202
und / oder
60. Abamectin (II-6-1)

bekannt aus DE-A-27 17 040
und / oder
61. Ivermectin (II-6-4)
bekannt aus EP-A-001 689
und / oder
62. Milbemectin (II-6-6)
bekannt aus The Pesticide Manual, 11. Ausgabe, 1997, S. 846
und / oder
63. Lepimectin (II-6-5)
bekannt aus EP-A-675 133
und / oder
64. Tebufenpyrad (II-21-5)

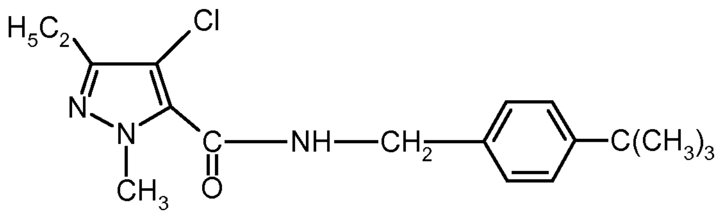

bekannt aus EP-A-289 879
und / oder
65. Fenpyroximate (II-21-2)

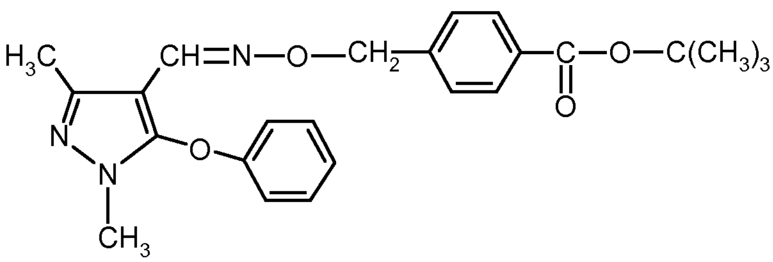

bekannt aus EP-A-234 045
und / oder
66. Pyridaben (II-21-4)

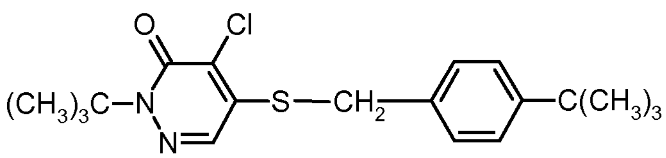

bekant aus EP-A-134 439
und / oder
67. Fenazaquin (II-21-1)

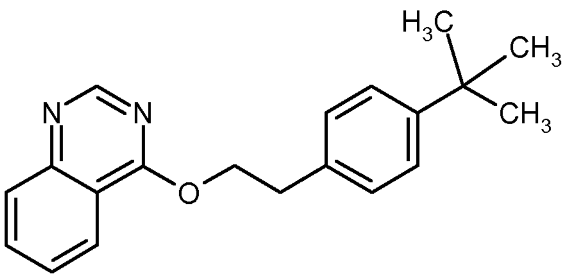

bekannt aus EP-A-326 329

und / oder

68. Pyrimidifen (II-21-3)

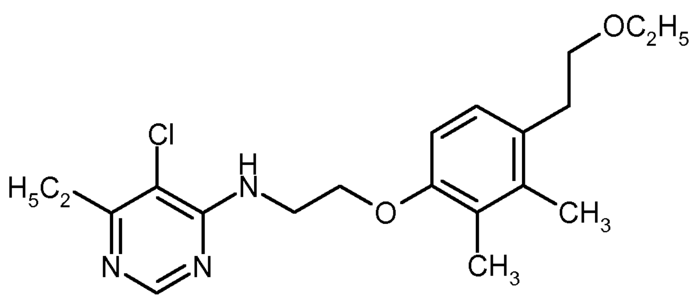

bekannt aus EP-A-196 524

und / oder

69. Tolfenpyrad (II-21-6)

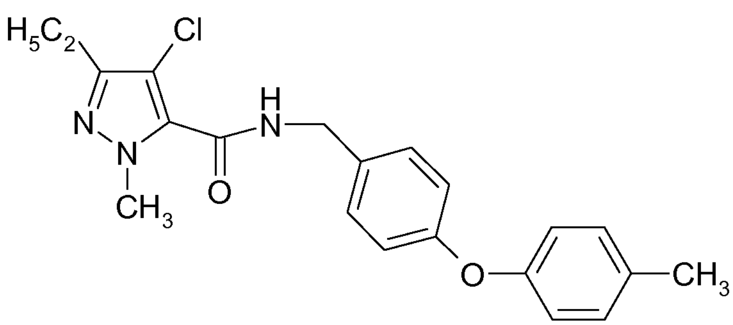

bekannt aus EP-A-365 925

und / oder

70. Dicofol (II-29-11)

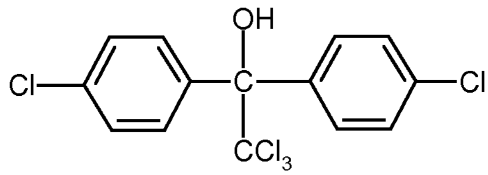

bekannt aus US 2,812,280

und / oder
71. Cyenopyrafen (II-20D-2)
(1E)-2-Cyano-2-[4-(1,1-dimethylethyl)phenyl]-1-(1,3,4-trimethyl-1H-pyrazol-5-yl)ethenyl-2,2-dimethylpropanoate

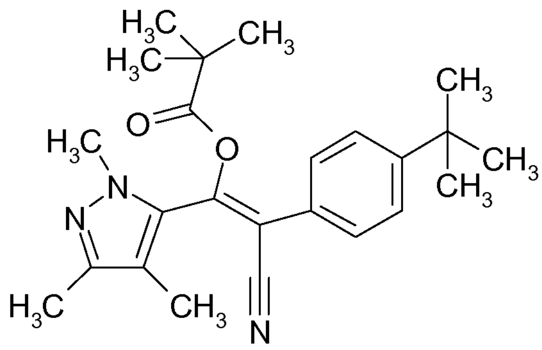

bekannt aus JP-A-2003 201 280
und / oder
72. Cyflumetofen (II-20D-1)
2-Methoxyethyl-alpha-cyano-alpha- [4-(1,1-dimethylethyl)phenyl]-beta-oxo-2-(trifluoromethyl)benzenepropanoate

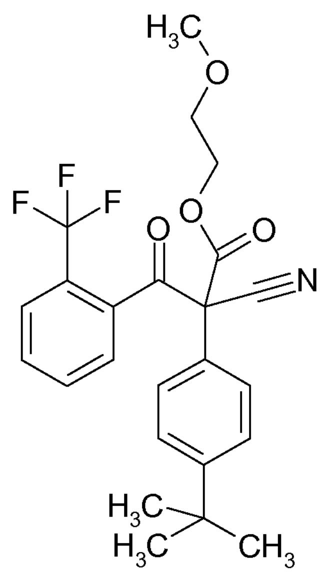

bekannt aus WO 2002/014263
und / oder
73. Acequinocyl (II-20B-1)

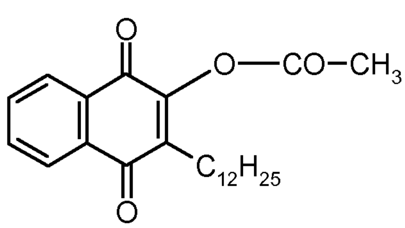

bekannt aus DE-A-26 41 343
und / oder
74. Fluacrypyrim (II-20C-1)

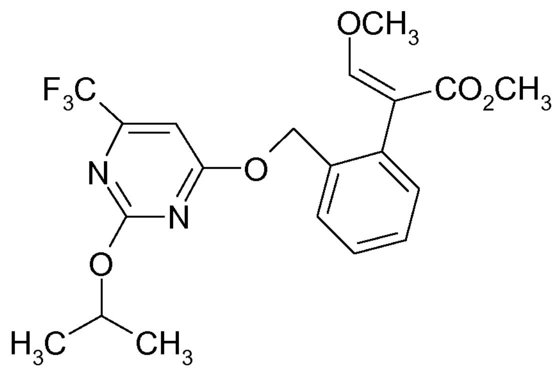

bekannt aus WO 96/16047
und / oder
75. Bifenazate (II-25-1)

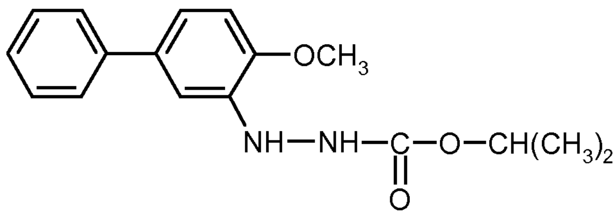

bekannt aus WO 93/10 083
und / oder
76. Diafenthiuron (II-12A-1)

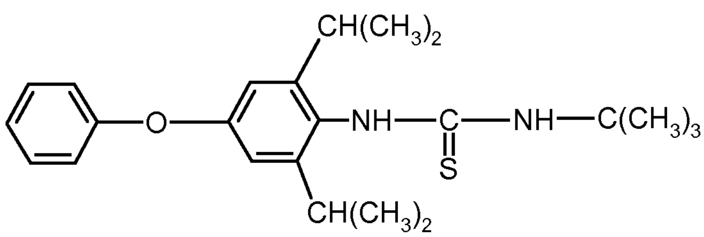

bekannt aus EP-A-210 487
und / oder
77. Etoxazole (II-10B-1)

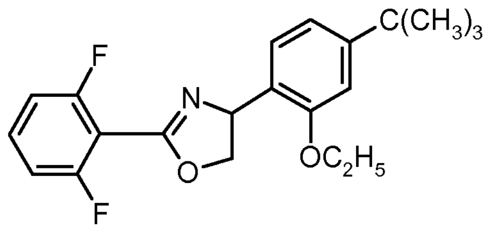

bekannt aus WO 93/22 297
und / oder
78. Clofentezine (II-10A-1)

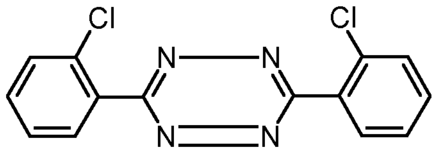

bekannt aus EP-A-005 912
und / oder
79. dem Makrolid der Formel

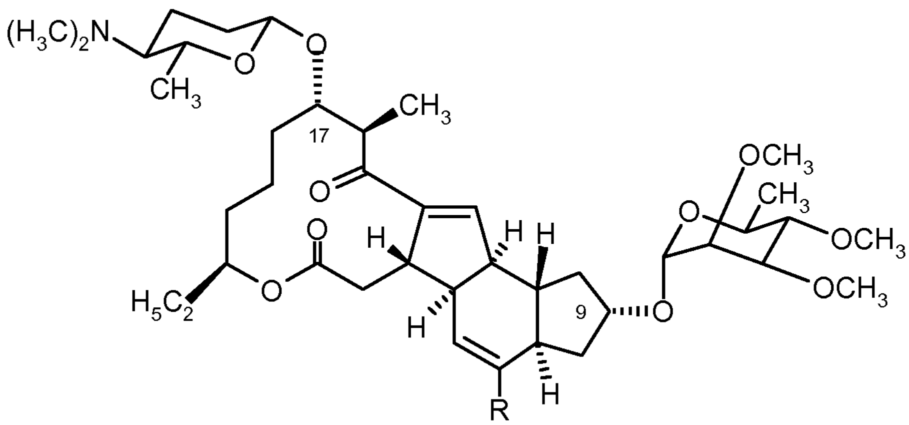

Spinosad (II-5-1) ein Gemisch aus bevorzugt
85 % Spinosyn A R=H
15 % Spinosyn B R = $CH_3$
bekannt aus EP-A-375 316
und / oder
80. Triarathen (II-29-26)

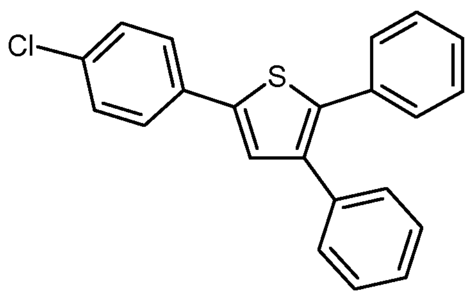

bekannt aus DE-A-2 724 494
und / oder
81. Tetradifon (II-12C-2)

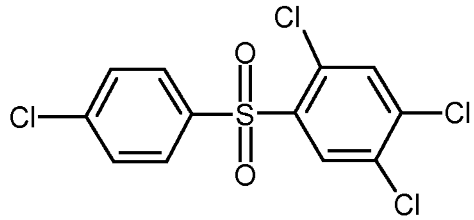

bekannt aus US 2,812,281
und / oder
82. Propargite (II-12C-1)

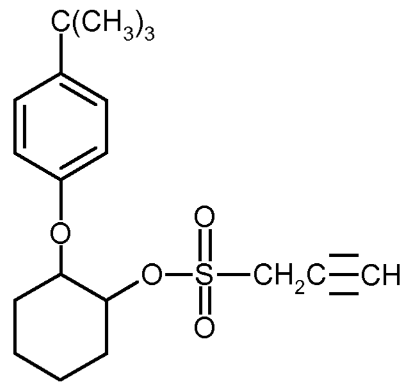

bekannt aus US 3,272,854
und / oder
83. Hexythiazox (II-10A-2)

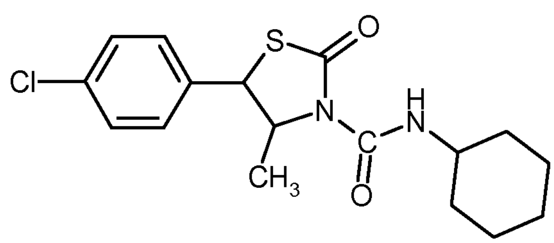

bekannt aus DE-A-3 037 105
und / oder
84. Bromopropylat (II-29-4)

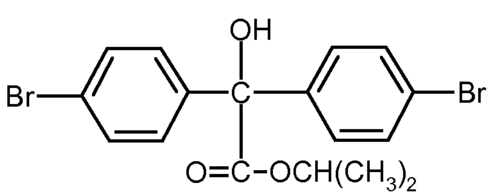

bekannt aus US 3,784,696
und / oder
85. Chinomethionat (II-29-6)

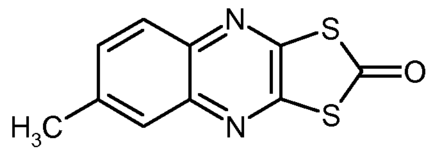

bekannt aus DE-A-1 100 372
und / oder
86. Amitraz (II-19-1)

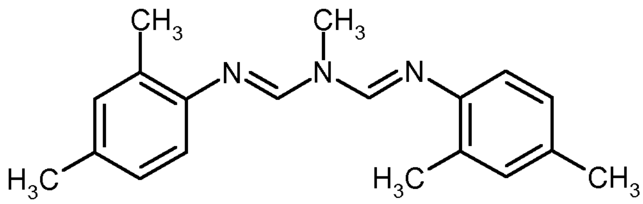

bekannt aus DE-A-2 061 132
und / oder
87. NNI 0101 (II-9B-2)
1-Acetyl-3,4-dihydro-3-[(3-pyridinylmethyl)amino]-6-[1,2,2,2-tetrafluoro-1-(trifluoromethyl)ethyl-2(1H)-quinazolinone

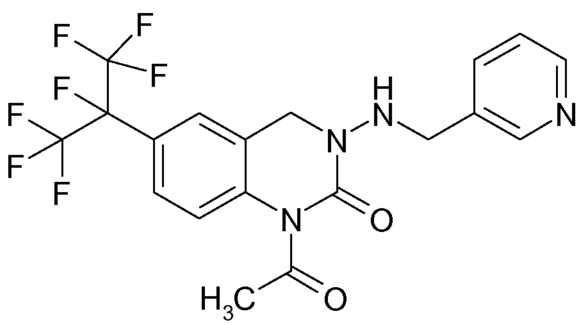

bekannt aus EP-A-01097932
und / oder
88. Pymetrozine (II-9B-1)

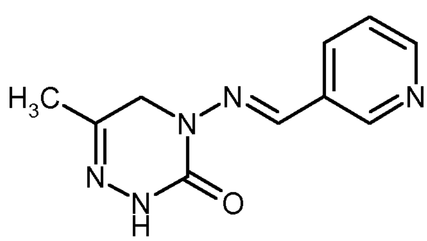

bekannt aus EP-A-314 615
und / oder
89. Flonicamid (II-9C-1)

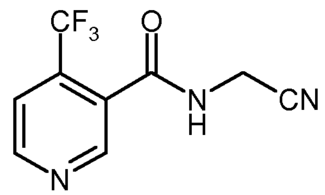

bekannt aus EP-A-00580374
und / oder
90. Pyriproxyfen (II-7C-1)

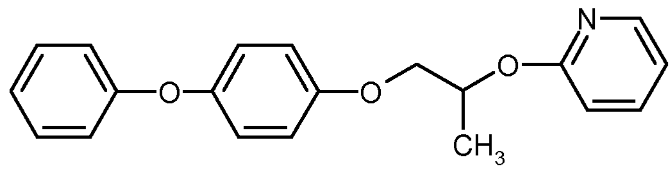

bekannt aus EP-A-128 648
und / oder
und / oder
91. Diofenolan (II-7C-2)

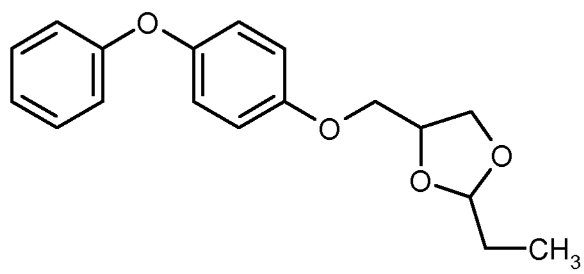

bekannt aus DE-A 2 655 910
und / oder
92. Chlorfenapyr (II-13-1)

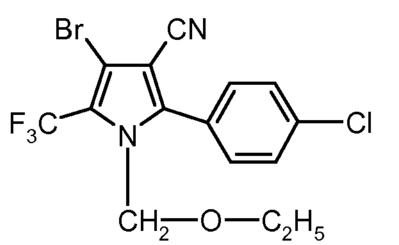

bekannt aus EP-A-347 488
und / oder
93. Metaflumizone (II-22B-1)

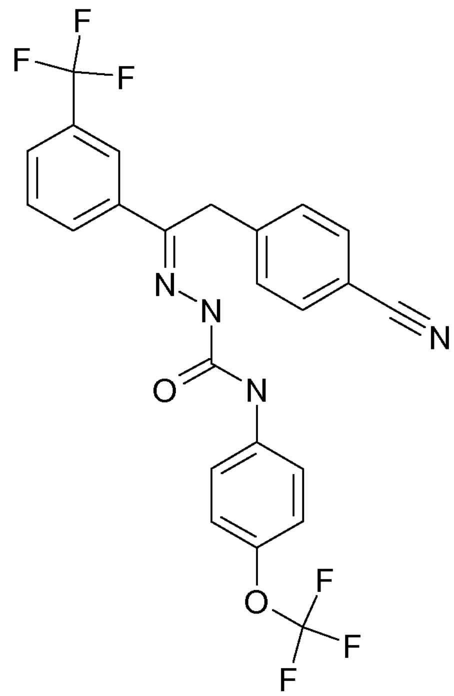

bekannt aus EP-A-00462456
und / oder
94. Indoxacarb (II-22A-1)

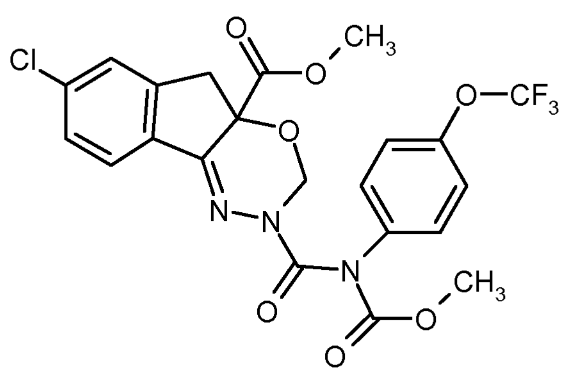

bekannt aus WO 92/11249 sowie das +-Enantiomer DPX-KN 128 bekannt aus ACS Symposium Series 800, S.178
und / oder
95. Chlorpyrifos (II-1B-12)

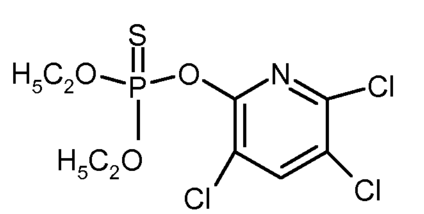

bekannt aus US 3,244,586
und / oder

96. Spirodiclofen (II-23A-1)

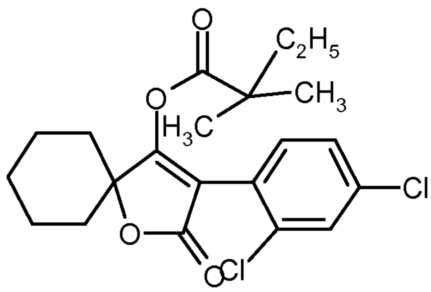

bekannt aus EP-A-528 156
und / oder
97. Spiromesifen (II-23A-2)

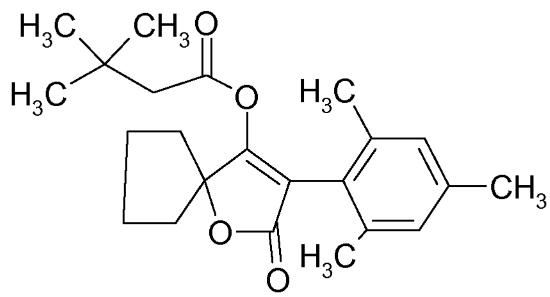

bekannt aus EP-A-528 156
und / oder
98. Spirotetramat (II-23B-1)

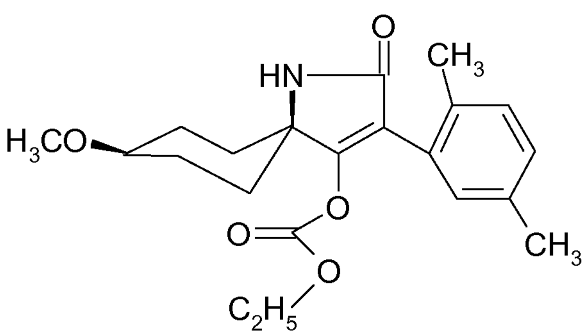

bekannt aus WO 04/007 448
und / oder
99. Pyridalyl (II-29-23)

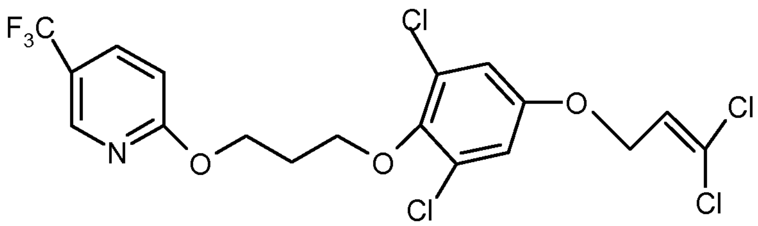

bekannt aus WO 96/11909
und / oder
100. die Verbindung (II-4A-10)

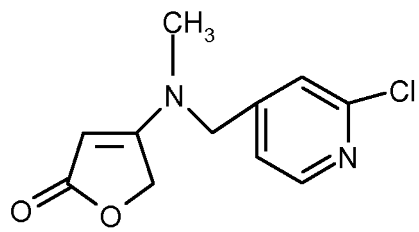

bekannt aus DE-A-102004047922
und / oder
101. die Verbindung (II-4A-11)

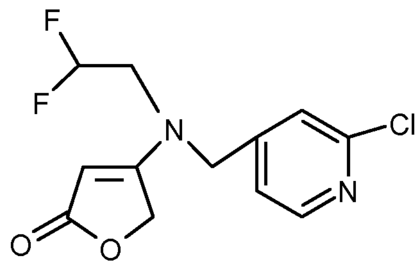

bekannt aus DE-A-06015467
und / oder
102. Spinetoram (II-5-2)

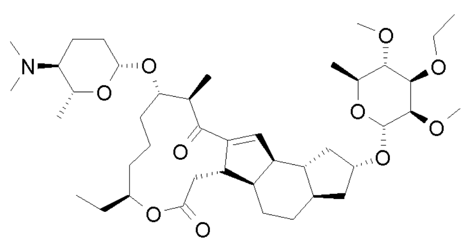

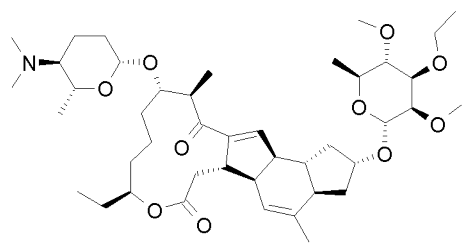

bekannt aus WO 97/00265, Crouse GD et. al. Pest. Management Science 57, 177-185, (2001)

Die Wirkstoffkombinationen können darüber hinaus auch weitere fungizid, akarizid oder insektizid wirksame Zumischkomponenten enthalten.

Wenn die Wirkstoffe in den erfindungsgemäßen Wirkstoffkombinationen in bestimmten Gewichtsverhältnissen

vorhanden sind, zeigt sich die verbesserte Wirkung. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formeln (I-1) bis (I-6) und den Mischpartner der Formel (II) in den in der nachfolgenden Tabelle angegeben bevorzugten und besonders bevorzugten Mischungsverhältnissen:

• die Mischungsverhältnisse basieren auf Gewichtsverhältnissen. Das Verhältnis ist zu verstehen als Wirkstoff der Formel (I-1):Mischpartner bis Formel (I-6):Mischpartner

| | Mischpartner | bevorzugtes Mischungsverhältnis | besonders bevorzugtes Mischungsverhältnis | ganz besonders bevorzugtes Mischungsverhältnis |
|---|---|---|---|---|
| 1. | Acrinathrin | 125:1 bis 1:125 | 25:1 bis 1:25 | 5:1 bis 1:5 |
| 2. | Alpha-Cypermethrin | 125:1 bis 1:125 | 25:1 bis 1:25 | 5:1 bis 1:5 |
| 3. | Betacyfluthrin | 125:1 bis 1:125 | 25:1 bis 1:25 | 5:1 bis 1:5 |
| 4. | Cyhalothrin | 125:1 bis 1:125 | 25:1 bis 1:25 | 5:1 bis 1:5 |
| 5. | Cypermethrin | 125:1 bis 1:125 | 25:1 bis 1:25 | 5:1 bis 1:5 |
| 6. | Deltamethrin | 125:1 bis 1:125 | 25:1 bis 1:25 | 5:1 bis 1:5 |
| 7. | Esfenvalerat | 125:1 bis 1:125 | 25:1 bis 1:25 | 5:1 bis 1:5 |
| 8. | Etofenprox | 125:1 bis 1:125 | 25:1 bis 1:25 | 5:1 bis 1:5 |
| 9. | Fenpropathrin | 125:1 bis 1:125 | 25:1 bis 1:25 | 5:1 bis 1:5 |
| 10. | Fenvalerat | 125:1 bis 1:125 | 25:1 bis 1:25 | 5:1 bis 1:5 |
| 11. | Flucythrinat | 125:1 bis 1:125 | 25:1 bis 1:25 | 5:1 bis 1:5 |
| 12.a | Lambda-Cyhalothrin | 125:1 bis 1:125 | 25:1 bis 1:25 | 5:1 bis 1:5 |
| 12.b | Gamma-Cyhalothrin | 125:1 bis 1:125 | 25:1 bis 1:25 | 5:1 bis 1:5 |
| 13. | Permethrin | 125:1 bis 1:125 | 25:1 bis 1:25 | 5:1 bis 1:5 |
| 14. | Tau-fluvalinat | 125:1 bis 1:125 | 25:1 bis 1:25 | 5:1 bis 1:5 |
| 15. | Tralomethrin | 125:1 bis 1:125 | 25:1 bis 1:25 | 5:1 bis 1:5 |
| 16. | Zeta-Cypermethrin | 125:1 bis 1:125 | 25:1 bis 1:25 | 5:1 bis 1:5 |
| 17. | Cyfluthrin | 125:1 bis 1:125 | 25:1 bis 1:25 | 5:1 bis 1:5 |
| 18. | Bifenthrin | 125:1 bis 1:125 | 25:1 bis 1:25 | 5:1 bis 1:5 |
| 19. | Cycloprothrin | 125:1 bis 1:125 | 25:1 bis 1:25 | 5:1 bis 1:5 |
| 20. | Eflusilanat | 125:1 bis 1:125 | 25:1 bis 1:25 | 5:1 bis 1:5 |
| 21. | Fubfenprox | 125:1 bis 1:125 | 25:1 bis 1:25 | 5:1 bis 1:5 |
| 22. | Pyrethrin | 125:1 bis 1:125 | 25:1 bis 1:25 | 5:1 bis 1:5 |
| 23. | Resmethrin | 125:1 bis 1:125 | 25:1 bis 1:25 | 5:1 bis 1:5 |
| 24. | Imidacloprid | 125:1 bis 1:125 | 25:1 bis 1:25 | 5:1 bis 1:5 |
| 25. | Acetamiprid | 125:1 bis 1:125 | 25:1 bis 1:25 | 5:1 bis 1:5 |
| 26. | Thiamethoxam | 125:1 bis 1:125 | 25:1 bis 1:25 | 5:1 bis 1:5 |
| 27. | Nitenpyram | 125:1 bis 1:125 | 25:1 bis 1:25 | 5:1 bis 1:5 |
| 28. | Thiacloprid | 125:1 bis 1:125 | 25:1 bis 1:25 | 5:1 bis 1:5 |
| 29. | Dinotefuran | 125:1 bis 1:125 | 25:1 bis 1:25 | 5:1 bis 1:5 |
| 30. | Clothianidin | 125:1 bis 1:125 | 25:1 bis 1:25 | 5:1 bis 1:5 |
| 31. | Imidaclothiz | 125:1 bis 1:125 | 25:1 bis 1:25 | 5:1 bis 1:5 |

(fortgesetzt)

| | Mischpartner | bevorzugtes Mischungsverhältnis | besonders bevorzugtes Mischungsverhältnis | ganz besonders bevorzugtes Mischungsverhältnis |
|---|---|---|---|---|
| 32. | Chlorfluazuron | 125:1 bis 1:125 | 25:1 bis 1:25 | 5:1 bis 1:5 |
| 33. | Diflubenzuron | 125:1 bis 1:125 | 25:1 bis 1:25 | 5:1 bis 1:5 |
| 34. | Lufenuron | 125:1 bis 1:125 | 25:1 bis 1:25 | 5:1 bis 1:5 |
| 35. | Teflubenzuron | 125:1 bis 1:125 | 25:1 bis 1:25 | 5:1 bis 1:5 |
| 36. | Triflumuron | 125:1 bis 1:125 | 25:1 bis 1:25 | 5:1 bis 1:5 |
| 37. | Novaluron | 125:1 bis 1:125 | 25:1 bis 1:25 | 5:1 bis 1:5 |
| 38. | Flufenoxuron | 125:1 bis 1:125 | 25:1 bis 1:25 | 5:1 bis 1:5 |
| 39. | Hexaflumuron | 125:1 bis 1:125 | 25:1 bis 1:25 | 5:1 bis 1:5 |
| 40. | Bistrifluoron | 125:1 bis 1:125 | 25:1 bis 1:25 | 5:1 bis 1:5 |
| 41. | Noviflumuron | 125:1 bis 1:125 | 25:1 bis 1:25 | 5:1 bis 1:5 |
| 42. | Buprofezin | 125:1 bis 1:125 | 25:1 bis 1:25 | 5:1 bis 1:5 |
| 43. | Cyromazine | 125:1 bis 1:125 | 25:1 bis 1:25 | 5:1 bis 1:5 |
| 44. | Methoxyfenozide | 125:1 bis 1:125 | 25:1 bis 1:25 | 5:1 bis 1:5 |
| 45. | Tebufenozide | 125:1 bis 1:125 | 25:1 bis 1:25 | 5:1 bis 1:5 |
| 46. | Halofenozide | 125:1 bis 1:125 | 25:1 bis 1:25 | 5:1 bis 1:5 |
| 47. | JS-118 8 | 125:1 bis 1:125 | 25:1 bis 1:25 | 5:1 bis 1:5 |
| 48. | Chromafenozide | 125:1 bis 1:125 | 25:1 bis 1:25 | 5:1 bis 1:5 |
| 49. | Endosulfan | 125:1 bis 1:125 | 25:1 bis 1:25 | 5:1 bis 1:5 |
| 50. | Fipronil | 125:1 bis 1:125 | 25:1 bis 1:25 | 5:1 bis 1:5 |
| 51. | Ethiprole | 125:1 bis 1:125 | 25:1 bis 1:25 | 5:1 bis 1:5 |
| 52. | Pyrafluprole | 125:1 bis 1:125 | 25:1 bis 1:25 | 5:1 bis 1:5 |
| 53. | Pyriprole | 125:1 bis 1:125 | 25:1 bis 1:25 | 5:1 bis 1:5 |
| 54. | Flubendiamide | 125:1 bis 1:125 | 25:1 bis 1:25 | 5:1 bis 1:5 |
| 55. | Verbindung II-28-2 | 125:1 bis 1:125 | 25:1 bis 1:25 | 5:1 bis 1:5 |
| 56. | Rynaxapyr | 125:1 bis 1:125 | 25:1 bis 1:25 | 5:1 bis 1:5 |
| 57. | HGW 86 | 125:1 bis 1:125 | 25:1 bis 1:25 | 5:1 bis 1:5 |
| 58. | Emamectin | 125:1 bis 1:125 | 25:1 bis 1:25 | 5:1 bis 1:5 |
| 59. | Emamectin benzoate | 125:1 bis 1:125 | 25:1 bis 1:25 | 5:1 bis 1:5 |
| 60. | Abamectin | 125:1 bis 1:125 | 25:1 bis 1:25 | 5:1 bis 1:5 |
| 61. | Ivermectin | 125:1 bis 1:125 | 25:1 bis 1:25 | 5:1 bis 1:5 |
| 62. | Milbemectin | 125:1 bis 1:125 | 25:1 bis 1:25 | 5:1 bis 1:5 |
| 63. | Lepimectin | 125:1 bis 1:125 | 25:1 bis 1:25 | 5:1 bis 1:5 |
| 64. | Tebufenpyrad | 125:1 bis 1:125 | 25:1 bis 1:25 | 5:1 bis 1:5 |
| 65. | Fenpyroximat | 125:1 bis 1:125 | 25:1 bis 1:25 | 5:1 bis 1:5 |
| 66. | Pyridaben | 125:1 bis 1:125 | 25:1 bis 1:25 | 5:1 bis 1:5 |
| 67. | Fenazaquin | 125:1 bis 1:125 | 25:1 bis 1:25 | 5:1 bis 1:5 |

(fortgesetzt)

| | Mischpartner | bevorzugtes Mischungsverhältnis | besonders bevorzugtes Mischungsverhältnis | ganz besonders bevorzugtes Mischungsverhältnis |
|---|---|---|---|---|
| 68. | Pyrimidifen | 125:1 bis 1:125 | 25:1 bis 1:25 | 5:1 bis 1:5 |
| 69. | Tolfenpyrad | 125:1 bis 1:125 | 25:1 bis 1:25 | 5:1 bis 1:5 |
| 70. | Dicofol | 125:1 bis 1:125 | 25:1 bis 1:25 | 5:1 bis 1:5 |
| 71. | Cyenopyrafen | 125:1 bis 1:125 | 25:1 bis 1:25 | 5:1 bis 1:5 |
| 72. | Cyflumetofen | 125:1 bis 1:125 | 25:1 bis 1:25 | 5:1 bis 1:5 |
| 73. | Acequinocyl | 125:1 bis 1:125 | 25:1 bis 1:25 | 5:1 bis 1:5 |
| 74. | Fluacrypyrin | 125:1 bis 1:125 | 25:1 bis 1:25 | 5:1 bis 1:5 |
| 75. | Bifenazate | 125:1 bis 1:125 | 25:1 bis 1:25 | 5:1 bis 1:5 |
| 76. | Diafenthiuron | 125:1 bis 1:125 | 25:1 bis 1:25 | 5:1 bis 1:5 |
| 77. | Etoxazole | 125:1 bis 1:125 | 25:1 bis 1:25 | 5:1 bis 1:5 |
| 78. | Clofentezine | 125:1 bis 1:125 | 25:1 bis 1:25 | 5:1 bis 1:5 |
| 79. | Spinosad | 125:1 bis 1:125 | 25:1 bis 1:25 | 5:1 bis 1:5 |
| 80. | Triarathen | 125:1 bis 1:125 | 25:1 bis 1:25 | 5:1 bis 1:5 |
| 81. | Tetradifon | 125:1 bis 1:125 | 25:1 bis 1:25 | 5:1 bis 1:5 |
| 82. | Propargit | 125:1 bis 1:125 | 25:1 bis 1:25 | 5:1 bis 1:5 |
| 83. | Hexythiazox | 125:1 bis 1:125 | 25:1 bis 1:25 | 5:1 bis 1:5 |
| 84. | Bromopropylat | 125:1 bis 1:125 | 25:1 bis 1:25 | 5:1 bis 1:5 |
| 85. | Chinomethionat | 125:1 bis 1:125 5 | 25:1 bis 1:25 | 5:1 bis 1:5 |
| 86. | Amitraz | 125:1 bis 1:125 | 25:1 bis 1:25 | 5:1 bis 1:5 |
| 87. | NNI 0101 | 125:1 bis 1:125 | 25:1 bis 1:25 | 5:1 bis 1:5 |
| 88. | Pymetrozine | 125:1 bis 1:125 | 25:1 bis 1:25 | 5:1 bis 1:5 |
| 89. | Flonicamid | 125:1 bis 1:125 | 25:1 bis 1:25 | 5:1 bis 1:5 |
| 90. | Pyriproxyfen | 125:1 bis 1:125 | 25:1 bis 1:25 | 5:1 bis 1:5 |
| 91. | Diofenolan | 125:1 bis 1:125 | 25:1 bis 1:25 | 5:1 bis 1:5 |
| 92. | Chlorfenapyr | 125:1 bis 1:125 | 25:1 bis 1:25 | 5:1 bis 1:5 |
| 93. | Metaflumizone | 125:1 bis 1:125 | 25:1 bis 1:25 | 5:1 bis 1:5 |
| 94. | Indoxacarb | 125:1 bis 1:125 | 25:1 bis 1:25 | 5:1 bis 1:5 |
| 95. | Chlorpyrifos | 125:1 bis 1:125 | 25:1 bis 1:25 | 5:1 bis 1:5 |
| 96. | Spirodiclofen | 125:1 bis 1:125 | 25:1 bis 1:25 | 5:1 bis 1:5 |
| 97. | Spiromesifen | 125:1 bis 1:125 | 25:1 bis 1:25 | 5:1 bis 1:5 |
| 98. | Spirotetramat | 125:1 bis 1:125 | 25:1 bis 1:25 | 5:1 bis 1:5 |
| 99. | Pyridalyl | 125:1 bis 1:125 | 25:1 bis 1:25 | 5:1 bis 1:5 |
| 100. | Verbindung II-4A-10 | 125:1 bis 1:125 | 25:1 bis 1:25 | 5:1 bis 1:5 |
| 101. | Verbindung II-4A-11 | 125:1 bis 1:125 | 25:1 bis 1:25 | 5:1 bis 1:5 |
| 102. | Spinetoram | 125:1 bis 1:125 | 25:1 bis 1:25 | 5:1 bis 1:5 |

Die erfindungsgemäßen Wirkstoffkombinationen eignen sich zur Bekämpfung von tierischen Schädlingen,

vorzugsweise Arthropoden und Nematoden, insbesondere Insekten und Spinnentieren, die im Weinanbau, Obstanbau, in der Landwirtschaft, der Tiergesundheit, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp..

Aus der Ordnung der Siphonaptera z.B. Xenopsylla cheopis, Ceratophyllus spp..

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp..

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp..

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einerden Anwendungsformen angepaßten üblichen Weise

Erfindungsgemäß können alle Planzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlIch natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit der erfindungsgemäßen Wirkstoffmischung behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22 wie folgt berechnet werden:
Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

Beispiel A

Aphis gossypii -Test

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Baumwollblätter (*Gossypium herbaceum*), die stark von der Baumwollblattlaus (*Aphis gossypii*) befallen sind, werden mit der Wirkstoffzubereitung in der gewünschten Konzentration besprüht.
Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel.
Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:
Tabelle A - 1

| Pflanzenschädigende Insekten<br>**Aphis gossypii - Test** | | | |
|---|---|---|---|
| **Wirkstoff** | **Konzentration in ppm** | **Abtötung in % nach 6$^{d}$** | |
| **Verbindung (I-2)** | 20 | 25 | |
| **Gamma-Cyhalothrin (12b)** | 0,16 | 0 | |
| **Verbindung (I-2) + Gamma-Cyhalothrin (12b) (125 : 1) erfindungsgemäß** | **20 + 0,16** | **gef.*<br>75** | **ber.**<br>25** |

Beispiel B

**Myzus persicae -Test**

| | |
|---|---|
| Lösungsmittel: | 78 Gewichtsteile Aceton |
| | 1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*), die stark von der Grünen Pfirsichblattlaus *(Myzus persicae*) befallen sind, werden durch Spritzen mit der Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel.

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle B - 1

| Pflanzenschädigende Insekten<br>**Myzus persicae - Test** | | | |
|---|---|---|---|
| **Wirkstoff** | **Konzentration in g/ha** | **Abtötung in % nach 1$^d$** | |
| **Verbindung (I-2)** | 100<br>20<br>4 | 55<br>0<br>0 | |
| **Abamectin (60)** | 20 | 5 | |
| **Verbindung (I-2) + Abamectin (60) (5 : 1)**<br>erfindungsgemäß | **100 + 20** | **gef.***<br>**75** | **ber.****<br>**57,25** |
| **Deltamethrin (6)** | 0,16 | 40 | |
| **Verbindung (I-2) + Deltamethrin (6) (25 : 1)**<br>erfindungsgemäß | **4 + 0,16** | **gef.***<br>**70** | **ber.****<br>**40** |
| **Pymetrozine (88)** | 20 | 20 | |
| **Verbindung (I-2) + Pymetrozine (88) (1 : 1)**<br>erfindungsgemäß | **20 + 20** | **gef.***<br>**80** | **ber.****<br>**20** |

Tabelle B - 2

| **Wirkstoff** | **Konzentration** | **Abtötung** | |
|---|---|---|---|
| | **in ppm** | **in %** | **nach 6$^d$** |
| **Verbindung (I-2)** | 4<br>0,8<br>0,16 | 70<br>30<br>0 | |
| **Alpha-Cypermethrin (2)** | 0,16 | 0 | |
| **Verbindung (I-2) + Alpha-Cypermethrin (2) (25 : 1)**<br>erfindungsgemäß | **4 + 0,16** | **gef.***<br>**100** | **ber.****<br>**70** |
| **Beta-Cyfluthrin (3)** | 0,16 | 0 | |

(fortgesetzt)

| Wirkstoff | Konzentration | Abtötung | |
|---|---|---|---|
| | in ppm | in % | nach 6[d] |
| **Verbindung (I-2) + Beta-Cyfluthrin (3) (25 : 1)** erfindungsgemäß | **4 + 0,16** | **gef.*** | **ber.**** |
| | | **100** | **70** |
| **Cypermethrin (5)** | 0,16 | 0 | |
| **Verbindung (I-2) + Cypermethrin (5) (5 : 1)** erfindungsgemäß | **0,8 + 0,16** | **gef.*** | **ber.**** |
| | | **70** | **30** |
| **L-Cyhalothrin (12a)** | 0,032 | 0 | |
| **Verbindung (I-2) + L-Cyhalothrin (12a) (25 : 1)** erfindungsgemäß | **0,8 + 0,032** | **gef.*** | **ber.**** |
| | | **80** | **30** |
| **Indoxacarb (94)** | 4 | 0 | |
| **Verbindung (I-2) + Indoxacarb (94) (1 : 5)** erfindungsgemäß | **0,8 + 4** | **gef.*** | **ber.**** |
| | | **80** | **30** |
| **Acetamiprid (25)** | 0,16 | 0 | |
| **Verbindung (I-2) + Acetamiprid (25) (25 : 1)** erfindungsgemäß | **4 + 0,16** | **gef.*** | **ber.**** |
| | | **100** | **85** |
| **Clothianidin (30)** | 0,032 | 0 | |
| **Verbindung (I-2) + Clothianidin (30) (25 : 1)** erfindungsgemäß | **0,8 + 0,032** | **gef.*** | **ber.**** |
| | | **70** | **30** |
| **Imidacloprid (24)** | 0,032 | 0 | |
| **Verbindung (I-2) + Imidacloprid (24) (25 : 1)** erfindungsgemäß | **0,8 + 0,032** | **gef.*** | **ber.**** |
| | | **60** | **30** |
| **Thiacloprid (28)** | 0,032 | 0 | |
| **Verbindung (I-2) + Thiacloprid (28) (25 : 1)** erfindungsgemäß | **0,8 + 0,032** | **gef.*** | **ber.**** |
| | | **90** | **30** |
| **Thiamethoxam (26)** | 0,032 | 0 | |
| **Verbindung (I-2) + Thiamethoxam (26) (25 : 1)** erfindungsgemäß | **0,8 + 0,032** | **gef.*** | **ber.**** |
| | | **70** | **30** |
| **Verbindung (100)** | 0,16 | 0 | |
| **Verbindung (I-2) + Verbindung (100) (1 : 1)** erfindungsgemäß | **0,16 + 0,16** | **gef.*** | **ber.**** |
| | | **50** | **0** |
| **Verbindung (101)** | 0,8 | 50 | |
| **Verbindung (I-2) + Verbindung (101) (1 : 1)** erfindungsgemäß | **0,8 + 0,8** | **gef.*** **80** | **ber.**** **65** |
| **Spinosad (79)** | 0,8 | 0 | |
| **Verbindung (I-2) + Spinosad (79) (5 : 1)** erfindungsgemäß | **4 + 0,8** | **gef.*** **99** | **ber.**** **70** |
| **Cyenopyrafen (71)** | 0,8 | 0 | |
| **Verbindung (I-2) + Cyenopyrafen (71) (1 : 1)** erfindungsgemäß | **0,8 + 0,8** | **gef.*** **90** | **ber.**** **30** |

(fortgesetzt)

| Wirkstoff | Konzentration | Abtötung | |
|---|---|---|---|
| | in ppm | in % | nach 6[d] |
| **Cyflumetofen (72)** | 4 | 0 | |
| **Verbindung (I-2) + Cyflumetofen (72) (1 : 1)** erfindungsgemäß | **4 + 4** | **gef.*** **100** | **ber.**** **70** |
| **Diafenthiuron (76)** | 0,8 | 0 | |
| **Verbindung (I-2) + Diafenthiuron (76) (1 : 1)** erfindungsgemäß | **0,8 + 0,8** | **gef.*** **90** | **ber.**** **30** |
| **Fenpyroximate (65)** | 0,8 | 0 | |
| **Verbindung (I-2) + Fenpyroximate (65) (1 : 1)** erfindungsgemäß | **0,8 + 0,8** | **gef.*** **90** | **ber.**** **30** |
| **Pyridaben (66)** | 0,8 | 0 | |
| **Verbindung (I-2) + Pyridaben (66) (1 : 1)** erfindungsgemäß | **0,8 + 0,8** | **gef.*** **90** | **ber.**** **30** |
| **Tebufenpyrad (64)** | 0,8 | 0 | |
| **Verbindung (I-2) + Tebufenpyrad (64) (1 : 1)** erfindungsgemäß | **0,8 + 0,8** | **gef.*** **80** | **ber.**** **30** |
| **Amitraz (86)** | 0,8 | 0 | |
| **Verbindung (I-2) + Amitraz (86) (1 : 1)** erfindungsgemäß | **0,8 + 0,8** | **gef.*** **90** | **ber.**** **30** |
| **Chlorfenapyr (92)** | 0,8 | 0 | |
| **Verbindung (I-2) + Chlorfenapyr (92) (1 : 1)** erfindungsgemäß | **0,8 + 0,8** | **gef.*** **90** | **ber.**** **30** |
| **Cyromazine (43)** | **0,8** | **0** | |
| **Verbindung (I-2) + Cyromazine (43) (1 : 1)** erfindungsgemäß | **0,8 + 0,8** | **gef.*** **70** | **ber.**** **30** |
| **Fipronil (50)** | **4** | **0** | |
| **Verbindung (I-2) + Fipronil (50) (1 : 5)** erfindungsgemäß | **0,8 + 4** | **gef.*** **80** | **ber.**** **30** |
| **Verbindung (55)** | **0,16** | **0** | |
| **Verbindung (I-2) + Verbindung (55) (5 : 1)** erfindungsgemäß | **0,8 + 0,16** | **gef.*** 80 | **ber.**** 30 |
| **Flubendiamide (54)** | 0,8 | 0 | |
| **Verbindung (I-2) + Flubendiamide (54) (1 : 1)** erfindungsgemäß | **0,8 + 0,8** | **gef.*** **70** | **ber.**** **30** |
| **Rynaxapyr (56)** | 0,16 | 0 | |
| **Verbindung (1-2) + Rynaxapyr (56) (5 : 1)** erfindungsgemäß | **0,8 + 0,16** | **gef.*** **80** | **ber.**** **30** |
| **Methoxyfenozide (44)** | 0,8 | 0 | |
| **Verbindung (I-2) + Methoxyfenozide (44) (1 : 1)** erfindungsgemäß | **0,8 + 0,8** | **gef.*** **90** | **ber.**** **30** |
| **Lufenuron (34)** | 0,8 | 0 | |

(fortgesetzt)

| **Wirkstoff** | **Konzentration** | **Abtötung** | |
|---|---|---|---|
| | **in ppm** | **in %** | **nach 6d** |
| **Verbindung (I-2) + Lufenuron (34) (1 : 1)** erfindungsgemäß | **0,8 + 0,8** | **gef.*** **80** | **ber.**** **30** |
| **Triflumuron (36)** | 4 | 0 | |
| **Verbindung (I-2) + Triflumuron (36) (1:1)** erfindungsgemäß | **4+4** | **gef.*** **100** | **ber.**** **70** |
| * gef. = gefundene Wirkung<br>** ber. = nach der Colby-Formel berechnete Wirkung | | | |

Beispiel C

**Phaedon cochleariae - Larven -Test**

| | |
|---|---|
| Lösungsmittel: | 78 Gewichtsteile Aceton |
| | 1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter *(Brassica oleracea*) werden durch Spritzen mit der Wirkstoffzubereitung in der gewünschten Konzentration behandelt und mit Larven des Meerrettichblattkäfers (*Phaedon cochleariae*) besetzt, solange die Blätter noch feucht sind.
Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel.
Bei diesem Test zeigen die folgenden Wirkstoffkombinationen gemäß vorliegender Anmeldung eine synergistisch verstärkte Wirksamkeit im Vergleich zu den einzeln angewendeten Wirkstoffen:

Tabelle C - 1

| Pflanzenschädigende Insekten<br>**Phaedon cochleariae Larven - Test** | | | |
|---|---|---|---|
| **Wirkstoff** | **Konzentration** | **Abtötung** | |
| | **in g/ha** | **in %** | **nach 2d** |
| **Verbindung (I-2)** | 100<br>20 | 17<br>0 | |
| **Thiacloprid (28)** | 4 | 0 | |
| **Verbindung (I-2) + Thiacloprid (28) (25 : 1) erfindungsgemäß** | **100 + 4** | gef.*50 | ber.** 17 |
| **Triflumuron (36)** | 20 | 17 | |
| **Verbindung (I-2) + Triflumuron** | | **gef.*** | **ber.**** |
| erfindungsgemäß | **(36)(1:1) 20+20** | 50 | 17 |
| **Pyridaben (66)** | 20 | 33 | |
| **Verbindung (I-2) + Pyridaben** | | **gef.*** | **ber.**** |

(fortgesetzt)

| Pflanzenschädigende Insekten<br>**Phaedon cochleariae Larven - Test** | | | |
|---|---|---|---|
| **Wirkstoff** | **Konzentration** | **Abtötung** | |
| | **in g/ha** | **in %** | **nach 2[d]** |
| **(66)(1:1)**<br>erfindungsgemäß | **20 + 20** | 50 | 33 |

Tabelle C - 2

| **Wirkstoff** | **Konzentration** | **Abtötung** | |
|---|---|---|---|
| | **in g/ha** | **in %** | **nach 6[d]** |
| Verbindung (I-2) | 100<br>20<br>4 | 17<br>0<br>0 | |
| **Alpha-Cypermethrin (2)** | 0,8 | 0 | |
| **Verbindung (I-2) + Alpha-Cypermethrin (2) (25 : 1)**<br>erfindungsgemäß | **20 + 0,8** | **gef.*<br>67** | **ber.**<br>0** |
| **Beta-Cyfluthrin (3)** | 0,8 | 17 | |
| **Verbindung (I-2) + Beta-Cyfluthrin (3) (25 : 1) 20**<br>erfindungsgemäß | **+ 0,8** | **gef.*<br>83** | **ber.**<br>17** |
| **Cypermethrin (5)** | 4 | 67 | |
| **Verbindung (I-2) + Cypermethrin (5) (5 : 1)**<br>erfindungsgemäß | **20 + 4** | **gef.*<br>83** | **ber.**<br>67** |
| **Deltamethrin (6)** | 0,8 | 50 | |
| **Verbindung (I-2) + Deltamethrin (6) (25 : 1)**<br>erfindungsgemäß | **20 + 0,8** | **gef.**<br>100** | **ber.**<br>50** |
| **L-Cyhalothrin (12a)** | 0,16 | 0 | |
| **Verbindung (I-2) + L-Cyhalothrin (12a) (25 : 1)**<br>erfindungsgemäß | **4 + 0,16** | **gef.*<br>33** | **ber.**<br>0** |
| **Acetamiprid (25)** | 0,8 | 0 | |
| **Verbindung (I-2) + Acetamiprid (25) (25 : 1)**<br>erfindungsgemäß | **20 + 0,8** | **gef.*<br>17** | **ber.**<br>0** |
| **Spinosad (79)** | 0,8 | 0 | |
| **Verbindung (I-2) + Spinosad (79) (5:1)**<br>erfindungsgemäß | **4 + 0,8** | **gef.*<br>50** | **ber.**<br>0** |
| **Diafenthiuron (76)** | 20 | 0 | |
| **Verbindung (I-2) + Diafenthiuron (76) (1 : 1)**<br>erfindungsgemäß | **20 + 20** | **gef.*<br>33** | **ber.**<br>0** |
| **Amitraz (86)** | 100 | 0 | |
| **Verbindung (I-2) + Amitraz (86) (1 : 1)**<br>erfindungsgemäß | **100 + 100** | **gef.*<br>33** | **ber.**<br>17** |
| **Cyromazine (43)** | 100 | 0 | |

(fortgesetzt)

| **Wirkstoff** | **Konzentration** | **Abtötung** | |
|---|---|---|---|
| | **in g/ha** | **in %** | **nach 6[d]** |
| **Verbindung (I-2) + Cyromazine (43) (1 : 1)** erfindungsgemäß | **100 + 100** | **gef.*** **50** | **ber.**** **17** |
| **Pymetrozine (88)** | 100 | 0 | |
| **Verbindung (I-2) + Pymetrozine (88) (1 : 1)** erfindungsgemäß | **100 + 100** | **gef.*** 67 | **ber.**** 17 |
| **Verbindung (55)** | **0,8** | **0** | |
| **Verbindung (I-2) + Verbindung (55) (5 : 1)** erfindungsgemäß | **4 + 0,8** | **gef.*** **50** | **ber.**** **0** |
| **Flubendiamide (54)** | **20** | **0** | |
| **Verbindung (I-2) + Flubendiamide (54) (1:1)** erfindungsgemäß | **20 + 20** | **gef.*** **33** | **ber.**** **0** |
| **Flufenoxuron (38)** | **4** | **0** | |
| **Verbindung (I-2) + Flufenoxuron (38) (1:1)** erfindungsgemäß | **4+4** | **gef.*** **33** | **ber.**** **0** |
| * gef. = gefundene Wirkung<br>** ber. = nach der Colby-Formel berechnete Wirkung | | | |

Beispiel D

**Spodoptera frugiperda - Larven -Test**

Lösungsmittel: 78 Gewichtsteile Aceton
1,5 Gewichtsteile Dimethylformamid
Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (*Brassica oleracea*) werden durch Spritzen mit der Wirkstoffzubereitung in der gewünschten Konzentration behandelt und mit Larven des Heerwurms (*Spodoptera frugiperda*) besetzt, solange die Blätter noch feucht sind.
Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Abtötungswerte verrechnet man nach der Colby-Formel.
Bei diesem Test zeigen die folgenden Wirkstoffkombinationen gemäß vorliegender Anmeldung eine synergistisch verstärkte Wirksamkeit im Vergleich zu den einzeln angewendeten Wirkstoffen:

Tabelle D - 1

| Pflanzenschädigende Insekten<br>**Spodoptera frugiperda Larven - Test** | | | |
|---|---|---|---|
| **Wirkstoff** | **Konzentration** | **Abtötung** | |
| | **in g/ha** | **in %** | **nach 2[d]** |
| **Verbindung (I-2)** | 100<br>20 | 0<br>0 | |

(fortgesetzt)

| Pflanzenschädigende Insekten<br>**Spodoptera frugiperda Larven - Test** | | |
|---|---|---|
| **Wirkstoff** | **Konzentration** | **Abtötung** |
| | **in g/ha** | **in % nach 2$^d$** |
| | 4 | 0 |
| **Alpha-Cypermethrin (2)** | 0,8 | 33 |
| **Verbindung (I-2) + Alpha-Cypermethrin (2) (25 : 1)**<br>erfindungsgemäß | **20 + 0,8** | **gef.* ber.****<br>**83 33** |
| **Gamma-Cyhalothrin (12b)** | 0,032 | 5 |
| **Verbindung (I-2) + Gamma-Cyhalothrin (12b) (125 : 1)**<br>erfindungsgemäß | **4 + 0,032** | **gef.* ber.****<br>**40 5** |
| **Lufenuron (34)** | 100 | 0 |
| **Verbindung (I-2) + Lufenuron (34) (1 : 1)**<br>erfindungsgemäß | 100 + 100 | **gef.* ber.****<br>**50 0** |
| **Spinosad (79)** | 0,8 | 0 |
| **Verbindung (I-2) + Spinosad (79) (5 : 1)**<br>erfindungsgemäß | **4 + 0,8** | **gef.* ber.****<br>**50 0** |

Tabelle D - 2

| **Wirkstoff** | **Konzentration** | **Abtötung** |
|---|---|---|
| | **in g/ha** | **in % nach 6$^d$** |
| Verbindung (I-2) | 20<br>4<br>0,8<br>0,16 | 0<br>0<br>0<br>0 |
| **Bifenthrin (18)** | 0,8 | 0 |
| **Verbindung (I-2) + Bifenthrin (18) (25 : 1)**<br>erfindungsgemäß | **20 + 0,8** | **gef.* ber.****<br>**33 0** |
| **Cypermethrin (5)** | 0,8 | 17 |
| **Verbindung (I-2) + Cypermethrin (5) (5 : 1)**<br>erfindungsgemäß | **4 + 0,8** | **gef.* ber.****<br>**33 17** |
| **L-Cyhalothrin (12a)** | 4 | 50 |
| **Verbindung (I-2) + L-Cyhalothrin (12a) (25 : 1)**<br>erfindungsgemäß | **100 + 4** | **gef.* ber.****<br>**83 50** |
| **Indoxacarb (94)** | 4 | 0 |
| **Verbindung (I-2) + Indoxacarb (94) (1 : 5)**<br>erfindungsgemäß | **0,8 + 4** | **gef.* ber.****<br>**80 30** |
| **Verbindung (55)** | 0,8 | 50 |
| **Verbindung (I-2) + Verbindung (55) (5 : 1)**<br>erfindungsgemäß | **4 + 0,8** | **gef.* ber.****<br>**100 50** |
| **Flubendiamide (54)** | 0,8 | 0 |

(fortgesetzt)

| Wirkstoff | Konzentration | Abtötung | |
|---|---|---|---|
| | in g/ha | in % | nach $6^d$ |
| **Verbindung (I-2) + Flubendiamide (54) (1 : 1)** erfindungsgemäß | **0,8 + 0,8** | **gef.*** **33** | **ber.**** **0** |
| **Triflumuron (36)** | 0,16 | 0 | |
| **Verbindung (I-2) + Triflumuron (36) (1 : 1)** erfindungsgemäß | **0,16 + 0,16** | **gef.*** **50** | **ber.**** |
| * gef. = gefundene Wirkung<br>** ber. = nach der Colby-Formel berechnete Wirkung | | | |

Beispiel E

**Tetranychus-Test** (OP-resistent/Spritzbehandlung)

Lösungsmittel: 78 Gewichtsteile Aceton
1,5 Gewichtsteile Dimethylformamid
Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Bohnenblattscheiben (Phaseolus vulgaris), die von allen Stadien der Gemeinen Spinnmilbe (Tetranychus urticae) befallen sind, werden mit einer Wirkstoffzubereitung der gewünschten Konzentration gespritzt.

Nach der gewünschten Zeit wird die Wirkung in % bestimmt. Dabei bedeutet 100 %, dass alle Spinnmilben abgetötet wurden; 0 % bedeutet, dass keine Spinnmilben abgetötet wurden.

Bei diesem Test zeigte die folgende Wirkstoffkombination gemäß vorliegender Anmeldung eine synergistisch verstärkte Wirksamkeit im Vergleich zu den einzeln angewendeten Wirkstoffen:

Tabelle E - 1

| Pflanzenschädigende Milben<br>**Tetranychus urticae - Test** | | | |
|---|---|---|---|
| **Wirkstoff** | **Konzentration** | **Abtötung** | |
| | in g/ha | in % | nach $2^d$ |
| **Verbindung (I-2)** | 4<br>0,8 | 0<br>0 | |
| **Amitraz (86)** | 4 | 0 | |
| **Verbindung (I-2) + Amitraz (86) (1 : 1)** erfindungsgemäß | **4 + 4** | **gef.*** **40** | **ber.**** **0** |
| **Fenpyroximate (65)** | 0,8 | 10 | |
| **Verbindung (I-2) + Fenpyroximate (65) (1 : 1)** erfindungsgemäß | **0,8 + 0,8** | **gef.*** **60** | **ber.**** **10** |

Tabelle E - 2

| Wirkstoff | Konzentration | Abtötung | |
|---|---|---|---|
| | in g/ha | in % | nach $6^d$ |
| **Verbindung (I-2)** | 20 | 0 | |

(fortgesetzt)

| Wirkstoff | Konzentration in g/ha | Abtötung in % | nach 6[d] |
|---|---|---|---|
| | 4<br>0,8 | 0<br>0 | |
| **Alpha-Cypermethrin (2)** | 0,8 | 0 | |
| **Verbindung (I-2) + Alpha-Cypermethrin (2) (25 : 1)** erfindungsgemäß | **20 + 0,8** | **gef.*** **50** | **ber.**** **0** |
| **Beta-Cyfluthrin (3)** | 0,8 | 0 | |
| **Verbindung (I-2) + Beta-Cyfluthrin (3) (25 : 1) 20** erfindungsgemäß | **+ 0,8** | **gef.*** **80** | **ber.**** **0** |
| **Cypermethrin (5)** | 4 | 0 | |
| **Verbindung (I-2) + Cypermethrin (5) (5 : 1)** erfindungsgemäß | **20 + 4** | **gef.*** **40** | **ber.**** **0** |
| **Deltamethrin (6)** | 0,8 | 0 | |
| **Verbindung (I-2) + Deltamethrin (6) (25 : 1)** erfindungsgemäß | **20 + 0,8** | **gef.*** **60** | **ber.**** **0** |
| **Emamectin-Benzoate (59)** | 0,8 | 65 | |
| **Verbindung (I-2) + Emamectin-Benzoate (59) (5 : 1)** erfindungsgemäß | **4 + 0,8** | **gef.*** **95** | **ber.**** **65** |
| **Indoxacarb (94)** | 100 | 0 | |
| **Verbindung (I-2) + Indoxacarb (94) (1 : 5)** erfindungsgemäß | **20 + 100** | **gef.*** **90** | **ber.**** **0** |
| **Acetamiprid (25)** | 0,8 | 0 | |
| **Verbindung (I-2) + Acetamiprid (25) (25 : 1)** erfindungsgemäß | **20 + 0,8** | **gef.*** **50** | **ber.**** **0** |
| **Clothianidin (30)** | 0,8 | 0 | |
| **Verbindung (I-2) + Clothianidin (30) (25 : 1)** erfindungsgemäß | **20 + 0,8** | **gef.*** **40** | **ber.**** **0** |
| **Imidacloprid (24)** | 0,8 | 0 | |
| **Verbindung (I-2) + Imidacloprid (24) (25 : 1)** erfindungsgemäß | **20 + 0,8** | **gef.*** **70** | **ber.**** **0** |
| **Thiacloprid (28)** | 0,8 | 0 | |
| **Verbindung (I-2) + Thiacloprid (28) (25 : 1)** erfindungsgemäß | **20 + 0,8** | **gef.*** **60** | **ber.**** **0** |
| **Verbindung (101)** | 20 | 0 | |
| | | | |
| **Verbindung (I-2) + Verbindung** | | **gef.*** | **ber.**** |
| **(101) (1 : 1)** erfindungsgemäß | **20 + 20** | 80 | 0 |
| **Spinosad (79)** | 4 | 80 | |
| **Verbindung (I-2) + Spinosad (79) (5 : 1)** erfindungsgemäß | **20 + 4** | **gef.*** **95** | **ber.**** **80** |

(fortgesetzt)

| Wirkstoff | Konzentration in g/ha | Abtötung in % nach 6[d] | |
|---|---|---|---|
| **Cyflumetofen (72)** | 4 | 80 | |
| **Verbindung (I-2) + Cyflumetofen (72) (1 : 1)** erfindungsgemäß | **4 + 4** | **gef.*** **100** | **ber.**** **80** |
| **Diafenthiuron (76)** | 0,8 | 30 | |
| **Verbindung (I-2) + Diafenthiuron (76) (1 : 1)** erfindungsgemäß | **0,8 + 0,8** | **gef.*** **90** | **ber.**** **30** |
| **Pymetrozine (88)** | 20 | 0 | |
| **Verbindung (I-2) + Pymetrozine (88) (1 : 1)** erfindungsgemäß | **20 + 20** | **gef.*** **30** | **ber.**** **0** |
| **Chlorfenapyr (92)** | 4 | 70 | |
| **Verbindung (I-2) + Chlorfenapyr (92) (1 : 1)** erfindungsgemäß | **4 + 4** | **gef.*** **99** | **ber.**** **70** |
| **Cyromazine (43)** | 20 | 0 | |
| **Verbindung (I-2) + Cyromazine (43) (1 : 1)** erfindungsgemäß | **20 + 20** | **gef.*** **70** | **ber.**** **0** |
| **Ethiprole (51)** | 100 | 0 | |
| **Verbindung (I-2) + Ethiprole (51) (1 : 5)** erfindungsgemäß | **20 + 100** | **gef.*** **90** | **ber.**** **0** |
| **Pyridalyl (99)** | 20 | 0 | |
| **Verbindung (I-2) + Pyridalyl (99) (1 1)** erfindungsgemäß | **20 + 20** | **gef.*** **60** | **ber.**** **0** |
| **Verbindung (55)** | 4 | 0 | |
| **Verbindung (I-2) + Verbindung (55) (5 : 1)** erfindungsgemäß | **20 + 4** | **gef.*** **90** | **ber.**** **0** |
| **Flubendiamide (54)** | 20 | 0 | |
| **Verbindung (I-2) + Flubendiamide (54) (1 : 1)** erfindungsgemäß | **20 + 20** | **gef.*** **95** | **ber.**** **0** |
| **Rynaxapyr (56)** | 4 | 0 | |
| **Verbindung (I-2) + Rynaxapyr (56) (5 : 1)** erfindungsgemäß | **20 + 4** | **gef.*** **80** | **ber.**** **0** |
| **Methoxyfenozide (44)** | 20 | 0 | |
| **Verbindung (I-2) + Methoxyfenozide (44) (1 : 1)** erfindungsgemäß | **20 + 20** | **gef.*** **70** | **ber.**** **0** |
| **Flufenoxuron (38)** | 20 | 0 | |
| **Verbindung (1-2) + Flufenoxuron (38) (1 : 1)** erfindungsgemäß | **20+20** | **gef.*** **90** | **ber.**** **0** |
| **Lufenuron (34)** | 20 | 0 | |
| **Verbindung (1-2) + Lufenuron (34) (1 : 1)** erfindungsgemäß | **20+20** | **gef.*** **80** | **ber.**** **0** |
| **Triflumuron (36)** | 20 | 0 | |

(fortgesetzt)

| Wirkstoff | Konzentration | Abtötung | |
|---|---|---|---|
| | in g/ha | in % | nach 6$^d$ |
| **Verbindung (1-2) + Triflumuron (36) (1 : 1)** erfindungsgemäß | **20 + 20** | **gef.*** **60** | **ber.**** **0** |
| * gef. = gefundene Wirkung ** ber. = nach der Colby-Formel berechnete Wirkung | | | |

Beispiel F

**Grenzkonzentrations-Test / Bodeninsekten - Behandlung transgener Pflanzen**

| | |
|---|---|
| Testinsekt: | **Diabrotica balteata - Larven im Boden** |
| Lösungsmittel: | 7 Gewichtsteile Aceton |
| Emulgator: | 2 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.
Die Wirkstoffzubereitung wird auf den Boden gegossen. Dabei spielt die Konzentration des Wirkstoffs in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,251 Töpfe und läßt diese bei 20˚C stehen.
Sofort nach dem Ansatz werden je Topf 5 vorgekeimte Maiskörner der Sorte YIELD GUARD (Warenzeichen von Monsanto Comp., USA) gelegt. Nach 2 Tagen werden die entsprechenden Testinsekten in den behandelten Boden gesetzt. Nach weiteren 7 Tagen wird der Wirkungsgrad des Wirkstoffs durch Auszählen der aufgelaufenen Maispflanzen bestimmt (Auflauf aller Pflanzen = 100 % Wirkung).

Beispiel G

**Heliothis virescens - Test - Behandlung transgener Pflanzen**

| | |
|---|---|
| Lösungsmittel: | 7 Gewichtsteile Dimethylformamid |
| Emulgator : | 2 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.
Sojatriebe (Glycine max) der Sorte Roundup Ready (Warenzeichen der Monsanto Comp. USA) werden durch Spritzen mit der Wirkstoffzubereitung in der gewünschten Konzentration behandelt und mit der Tabakknospenraupe *Heliothis virescens* besetzt, solange die Blätter noch feucht sind.
Nach der gewünschten Zeit wird die Abtötung der Insekten bestimmt.

Beispiel H

**Myzus persicae - Test - Behandlung transgener Pflanzen**

| | |
|---|---|
| Lösungsmittel: | 7 Gewichtsteile Aceton |
| Emulgator : | 2 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Transgene Kohlpflanzen (Brassica oleracea), die stark von der Grünen Pfirsichblattlaus *Myzus persicae* befallen sind, werden durch Spritzen mit der Wirkstoffzubereitung in der gewünschten Konzentration behandelt.

Nach der gewünschten Zeit wird die Abtötung der Insekten bestimmt.

## Patentansprüche

1. Wirkstoffkombinationen enthaltend mindestens eine Verbindung der Formel (I)

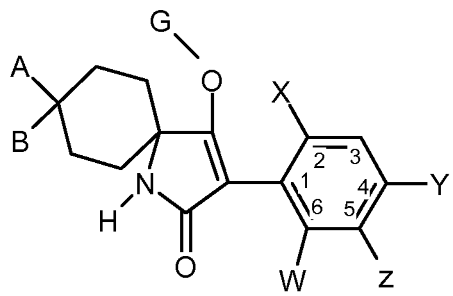

(I)

in welcher

W für Wasserstoff, Alkyl, Alkenyl, Alkinyl, Halogen, Alkoxy, Halogenalkyl, Halogenalkoxy oder Cyano steht,
X für Halogen, Alkyl, Alkenyl, Alkinyl, Alkoxy, Halogenalkyl, Halogenalkoxy, Nitro oder Cyano steht,
Y und Z unabhängig voneinander für Wasserstoff, Alkyl, Alkenyl, Alkinyl, Alkoxy, Halogen, Halogenalkyl, Halogenalkoxy, Cyano oder Nitro steht,
A und B und das Kohlenstoffatom, an das sie gebunden sind, für jeweils gegebenenfalls durch Alkyl, Halogenalkyl, Alkoxy, Alkoxyalkyl oder gegebenenfalls substituiertes Phenyl substituiertes fünf- bis siebengliedriges Ketal, Thioketal oder Dithioketal steht, welches gegebenenfalls durch ein weiteres Heteroatom unterbrochen sein kann,
G für Wasserstoff (a) oder für eine der Gruppen

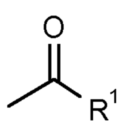 (b), 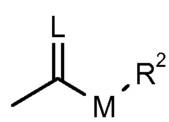 (c), 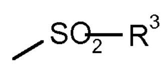 (d),

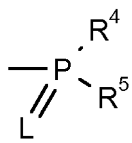 (e), E (f), oder 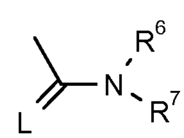 (g),

steht,
worin

E für ein Metallion oder ein Ammoniumion steht,
L für Sauerstoff oder Schwefel steht,
M für Sauerstoff oder Schwefel steht,
$R^1$ für jeweils gegebenenfalls durch Halogen oder Cyano substituiertes Alkyl, Alkenyl, Alkoxyalkyl, Alkylthioalkyl

oder Polyalkoxyalkyl oder für jeweils gegebenenfalls durch Halogen, Alkyl oder Alkoxy substituiertes Cycloalkyl oder Heterocyclyl oder für jeweils gegebenenfalls substituiertes Phenyl, Phenylalkyl, Hetaryl, Phenoxyalkyl oder Hetaryloxyalkyl steht,

$R^2$ für jeweils gegebenenfalls durch Halogen oder Cyano substituiertes Alkyl, Alkenyl, Alkoxyalkyl oder Polyalkoxyalkyl oder für jeweils gegebenenfalls substituiertes Cycloalkyl, Phenyl oder Benzyl steht,

$R^3$, $R^4$ und $R^5$ unabhängig voneinander für jeweils gegebenenfalls durch Halogen substituiertes Alkyl, Alkoxy, Alkylamino, Dialkylamino, Alkylthio, Alkenylthio oder Cycloalkylthio oder für jeweils gegebenenfalls substituiertes Phenyl, Benzyl, Phenoxy oder Phenylthio stehen,

$R^6$ und $R^7$ unabhängig voneinander für Wasserstoff, für jeweils gegebenenfalls durch Halogen oder Cyano substituiertes Alkyl, Cycloalkyl, Alkenyl, Alkoxy, Alkoxyalkyl, für jeweils gegebenenfalls substituiertes Phenyl oder Benzyl stehen, oder gemeinsam mit dem N-Atom, an das sie gebunden sind, einen gegebenenfalls Sauerstoff oder Schwefel enthaltenden und gegebenenfalls substituierten Cyclus bilden

und ein oder mehrere weitere Insektizide und / oder Akarizide der Formel (II):

Acetylcholinesterase (AChE) Inhibitoren II-1

II-1.A Carbamate,

Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (II-1.A-10), Butoxycarboxim (II-1.A-11), Carbaryl (II-1.A-12), Carbofuran (II-1.A-13), Carbosulfan (II-1.A-14), Cloethocarb (II-1.A-15), Dimetilan (II-1.A-16), Ethiofencarb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-1.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (II-1.A-31), Thiofanox (II-1.A-32), Trimethacarb (II-1.A-33), XMC (II-1.A-34), Xylylcarb (II-1.A-35)

II-1.B Organophosphate,

Acephate (II-1.B-1), Azamethiphos (II-1.B-2), Azinphos (-methyl, -ethyl) (II-1.B-3), Bromophos-ethyl (II-1.B-4), Bromfenvinfos (-methyl) (II-1.B-5), Butathiofos (II-1.B-6), Cadusafos (II-1.B-7), Carbophenothion (II-1.B-8), Chlorethoxyfos (II-1.B-9), Chlorfenvinphos (II-1.B-10), Chlormephos (II-1.B-11), Chlorpyrifos (-methyl/- ethyl) (II-1.B-12), Coumaphos (II-1.B-13), Cyanofenphos (II-1.B-14), Cyanophos (II-1.B-15), Chlorfenvinphos (II-1.B-16), Demeton-S-methyl (II-1.B-17), Demeton-S-methylsulphon (II-1.B-18), Dialifos (II-1.B-19), Diazinon (II-1.B-20), Dichlofenthion (II-1.B-21), Dichlorvos/DDVP (II-1.B-22), Dicrotophos (II-1.B-23), Dimethoate (II-1.B-24), Dimethylvinphos (II-1.B-25), Dioxabenzofos (II-1.B-26), Disulfoton (II-1.B-27), EPN (II-1.B-28), Ethion (II-1.B-29), Ethoprophos (II-1.B-30), Etrimfos (II-1.B-31), Famphur (II-1.B-32), Fenamiphos (II-1.B-33), Fenitrothion (II-1.B-34), Fensulfothion (II-1.B-35), Fenthion (II-1.B-36), Flupyrazofos (II-1.B-37), Fonofos (II-1.B-38), Formothion (II-1.B-39), Fosmethilan (II-1.B-40), Fosthiazate (II-1.B-41), Heptenophos (II-1.B-42), lodofenphos (II-1.B-43), Iprobenfos (II-1.B-44), Isazofos (II-1.B-45), Isofenphos (II-1.B-46), Isopropyl (II-1.B-47), O-salicylate (II-1.B-48), Isoxathion (II-1.B-49), Malathion (II-1.B-50), Mecarbam (II-1.B-51), Methacrifos (II-1.B-52), Methamidophos (II-1.B-53), Methidathion (II-1.B-54), Mevinphos (II-1.B-55), Monocrotophos (II-1.B-56), Naled (II-1.B-57), Omethoate (II-1.B-58), Oxydemeton-methyl (II-1.B-59), Parathion (-methyl/-ethyl) (II-1.B-60), Phenthoate (II-1.B-61), Phorate (II-1.B-62), Phosalone (II-1.B-63), Phosmet (II-1.B-64), Phosphamidon (II-1.B-65), Phosphocarb (II-1.B-66), Phoxim (II-1.B-67), Pirimiphos (-methyl/-ethyl) (II-1.B-68), Profenofos (II-1.B-69), Propaphos (II-1.B-70), Propetamphos (II-1.B-71), Prothiofos (II-1.B-72), Prothoate (II-1.B-73), Pyraclofos (II-1.B-74), Pyridaphenthion (II-1.B-75), Pyridathion (II-1.B-76), Quinalphos (II-1.B-77), Sebufos (II-1.B-78), Sulfotep (II-1.B-79), Sulprofos (II-1.B-80), Tebupirimfos (II-1.B-81), Temephos (II-1.B-82), Terbufos (II-1.B-83), Tetrachlorvinphos (II-1.B-84), Thiometon (II-1.B-85), Triazophos (II-1.B-86), Triclorfon (II-1.B-87), Vamidothion (II-1.B-88)

GABA-gesteuerte Chlorid-Kanal-Antagonisten II-2

II-2A Organochlorine,

Camphechlor (II-2A-1), Chlordane (II-2A-2), Endosulfan (II-2A-3), Gamma-HCH (II-2A-4), HCH (II-2A-5), Heptachlor (II-2A-6), Lindane (II-2A-7), Methoxychlor (II-2A-8)

II-2B Fiprole (Phenylpyrazole),

Acetoprole (II-2B-1), Ethiprole (II-2B-2), Fipronil (II-2B-3), Pyrafluprole (II-2B-4), Pyriprole (II-2B-5), Vaniliprole (II-2B-6)

Natrium-Kanal-Modulatoren / Spannungsabhängige Natrium-Kanal-Blocker II-3

II-3 Pyrethroide,

Acrinathrin (II-3-1), Allethrin (d-cis-trans, d-trans) (II-3-2), Beta-Cyfluthrin (II-3-3), Bifenthrin (II-3-4), Bioallethrin (II-3-5), Bioallethrin-S-cyclopentyl-isomer (II-3-6), Bioethanomethrin (II-3-7), Biopermethrin (II-3-8), Bioresmethrin (II-3-9), Chlovaporthrin (II-3-10), Cis-Cypermethrin (II-3-11), Cis-Resmethrin (II-3-12), Cis-Permethrin (II-3-13), Clocythrin (II-3-14), Cycloprothrin (II-3-15), Cyfluthrin (II-3-16), Cyhalothrin (II-3-17), Cypermethrin (alpha-, beta-, theta-, zeta-)(II-3-18), Cyphenothrin (II-3-19), Deltamethrin (II-3-20), Empenthrin (1R-isomer) (II-3-21), Esfenvalerate (II-3-22), Etofenprox (II-3-23), Fenfluthrin (II-3-24), Fenpropathrin (II-3-25), Fenpyrithrin (II-3-26), Fenvalerate (II-3-27), Flubrocythrinate (II-3-28), Flucythrinate (II-3-29), Flufenprox (II-3-30), Flumethrin (II-3-31), Fluvalinate (II-3-32), Fubfenprox (II-3-33), Gamma-Cyhalothrin (II-3-34), Imiprothrin (II-3-35), Kadethrin (II-3-36), Lambda-Cyhalothrin (II-3-37), Metofluthrin (II-3-38), Permethrin (cis-, trans-) (II-3-39), Phenothrin (1R-trans isomer) (II-3-40), Prallethrin (II-3-41), Profluthrin (II-3-42), Protrifenbute (II-3-43), Pyresmethrin (II-3-44), Resmethrin (II-3-45), RU 15525 (II-3-46), Silafluofen (II-3-47), Tau-Fluvalinate (II-3-48), Tefluthrin (II-3-49), Terallethrin (II-3-50), Tetramethrin (-1R-isomer) (II-3-51), Tralomethrin (II-3-52), Transfluthrin (II-3-53), ZXI 8901 (II-3-54), Pyrethrin (pyrethrum) (II-3-55), Eflusilanat (II-3-56), DDT (II-3-57), Methoxychlor (II-3-58),

Nikotinerge Acetylcholin-Rezeptor-Agonisten/-Antagonisten II-4

II-4A Chloronicotinyle,

Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazine (II-4A-7), Thiacloprid (II-4A-8), Thiamethoxam (II-4A-9),

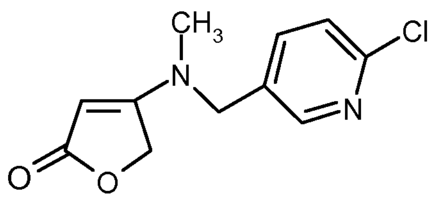

II-4A-10

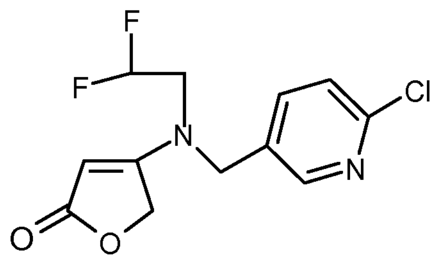

II-4A-11

II-4B Nicotine (II-4B-1), Bensultap (II-4B-2), Cartap (II-4B-3), Thiosulfap-Natrium (II-4B-4), Thiocylam (II-4C-4)

Allosterische Acetylcholin-Rezeptor-Modulatoren (Agonisten)

II-5 Spinosyne,

Spinosad (II-5-1), Spinetoram (II-5-2)

Chlorid-Kanal-Aktivatoren

II-6 Mectine / Macrolide,

Abamectin (II-6-1), Emamectin (II-6-2), Emamectin-benzoate (II-6-3), Ivermectin (II-6-4), Lepimectin (II-6-5), Milbemectin (II-6-6)

II-7A Juvenilhormon Analoge,

Hydroprene (II-7A-1), Kinoprene (II-7A-2), Methoprene (II-7A-3), Epofenonane (II-7A-4), Triprene (II-7A-5), Fenoxycarb (II-7B-1),

Pyriproxifen (II-7C-1), Diofenolan (II-7C-2)

Wirkstoffe mit unbekannten oder nicht spezifischen Wirkmechanismen

II-8 Begasungsmittel,

Methyl bromide (II-8A-1), Chloropicrin (II-8B-1), Sulfuryl fluoride (II-8C-1)

II-9 Selektive Fraßhemmer,

Cryolite (II-9A-1), Pymetrozine (II-9B-1), NNI0101 (II-9B-2), Flonicamid (II-9C-1)

II-10 Milbenwachstumsinhibitoren,
Clofentezine (II-10A-1), Hexythiazox (II-10A-2),), Etoxazole (II-10B-1)

Inhibitoren der oxidativen Phosphorylierung, ATP-Disruptoren II-12

II-12A Diafenthiuron (II-12A-1)
II-12B Organozinnverbindungen,
Azocyclotin (II-12B-1), Cyhexatin (II-12B-2), Fenbutatin-oxide (II-12B-3)
II-12C Propargite (II-12C-1), Tetradifon (II-12C-2)

Entkoppler der oxidativen Phoshorylierung durch Unterbrechung des H-Protongradienten II-13
Chlorfenapyr (II-13-1)
Binapacyrl (II-13-2), Dinobuton (II-13-3), Dinocap (II-13-4), DNOC (II-13-5)
Mikrobielle Disruptoren der Insektendarmmembran
Bacillus thuringiensis-Stämme (II-13-6)
Inhibitoren der Chitinbiosynthese
II-15 Benzoylharnstoffe,
Bistrifluron (II-15-1), Chlorfluazuron (II-15-2), Diflubenzuron (II-15-3), Fluazuron (II-15-4), Flucycloxuron (II-15-5), Flufenoxuron (II-15-6), Hexaflumuron (II-15-7), Lufenuron (II-15-8), Novaluron (II-15-9), Noviflumuron (II-15-10), Penfluron (II-15-11), Teflubenzuron (II-15-12), Triflumuron (II-15-13)
II-16 Buprofezin (II-16-1)
Häutungsstörende Wirkstoffe Cyromazine (II-17-1)
Ecdysonagonisten/disruptoren (II-18)

II-18A Diacylhydrazine,
Chromafenozide (II-18A-1), Halofenozide (II-18A-2), Methoxyfenozide (II-18A-3), Tebufenozide (II-18A-4), JS-118 (II-18A-5)
Azadirachtin (II-18B-1)

Oktopaminerge Agonisten
Amitraz (II-19-1)

II-20 Seite-III-Elektronentransportinhibitoren/Seite-II-Elektronentransportinhibitoren
Hydramethylnon (II-20A-1)
Acequinocyl (II-20B-1)
Fluacrypyrim (II-20C-1)
Cyflumetofen (II-20D-1), Cyenopyrafen (II-20D-2)

Elektronentransportinhibitoren

II-21 Seite-I-Elektronentransportinhibitoren
aus der Gruppe der METI-Akarizide,
Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (II-21-7)
II-22 Spannungsabhängige Natriumkanal-Blocker
Indoxacarb (II-22A-1)
Metaflumizone (BAS 3201) (II-22B-1)
II-23 Inhibitoren der Fettsäurebiosynthese
II-23A Tetronsäure-Derivate
Spirodiclofen (II-23A-1), Spiromesifen (II-23A-2)
II-23B Tetramsäure-Derivate,
Spirotetramat (II-23B-1)
II-25 Neuronale Inhibitoren mit unbekannten Wirkmechanismus
Bifenazate (II-25-1)
Ryanodinrezeptor-Effektoren
II-28 Diamide,
Flubendiamide (II-28-1),

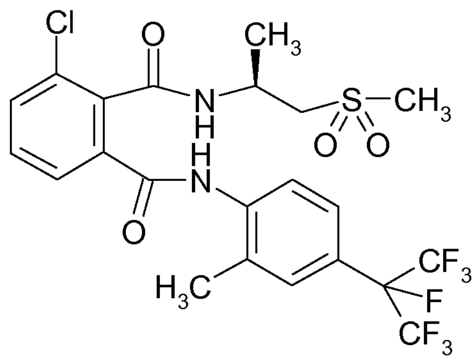

(II-28-2)

Rynaxapyr (II-28-3), HGW86

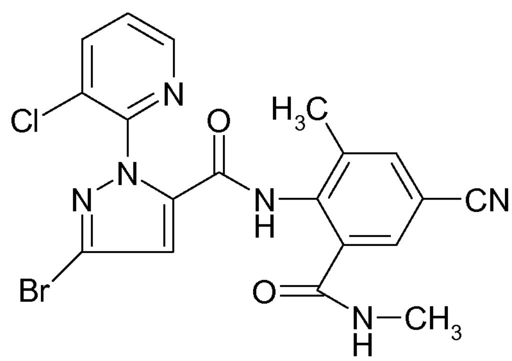

(II-28-4)

II-29 Wirkstoffe mit unbekanntem Wirkmechanismis
Amidoflumet (II-29-1), Benclothiaz (II-29-2), Benzoximate (II-29-3), Bromopropylate (II-29-4), Buprofezin (II-29-5), Chinomethionat (II-29-6), Chlordimeform (II-29-7), Chlorobenzilate (II-29-8), Clothiazoben (II-29-9), Cycloprene (II-29-10), Dicofol (II-29-11), Dicyclanil (II-29-12), Fenoxacrim (II-29-13), Fentrifanil (II-29-14), Flubenzimine (II-29-15), Flufenerim (II-29-16), Flutenzin (II-29-17), Gossyplure (II-29-18), Japonilure (II-29-19), Metoxadiazone (II-29-20), Petroleum (II-29-21), Potassium oleate (II-29-22), Pyridalyl (II-29-23), Sulfluramid (II-29-24), Tetrasul (II-29-25), Triarathene (II-29-26),Verbutin (II-29-27).

**2.** Verwendung von Wirkstoffkombinationen wie in Anspruch 1 definiert, zur Bekämpfung tierischer Schädlinge.

**3.** Verfahren zur Bekämpfung tierischer Schädlinge, **dadurch gekennzeichnet, dass** man Wirkstoffkombinationen wie in Anspruch 1 definiert, auf tierische Schädlinge und/oder deren Lebensraum einwirken lässt.

**4.** Verfahren zur Herstellung insektizider und/oder akarizider Mittel, **dadurch gekennzeichnet, dass** man Wirkstoffkombinationen wie in Anspruch 1 definiert, mit Streckmitteln und/oder oberflächenaktiven Stoffen vermischt.

**5.** Mittel enthaltend Wirkstoffkombinationen wie in Anspruch 1 definiert, zur Bekämpfung tierischer Schädlinge.

Europäisches Patentamt

# EUROPÄISCHER RECHERCHENBERICHT

Nummer der Anmeldung
EP 07 11 6915

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | WO 2006/089633 A (BAYER CROPSCIENCE AG [DE]; BRETSCHNEIDER THOMAS [DE]; FISCHER REINER [] 31. August 2006 (2006-08-31)<br>* Seite 1, Absatz 1 *<br>* Seite 2, Zeile 10 - Seite 3, Zeile 12 *<br>* Seite 14, Zeilen 9-15 *<br>* Tabelle 1 *<br>* Seite 82, Zeilen 22-27 *<br>* Seite 84, Zeile 8 - Seite 88, Zeile 26 *<br>* Seite 96, Zeilen 20-28 *<br>* Seite 110, Zeilen 22-26 *<br>* Seite 112, Zeile 8 - Seite 114, Zeile 23 *<br>* Beispiele A-U,W,X *<br>----- | 1-5 | INV.<br>A01N43/90<br>A01N43/38<br>A01N61/00<br>A01N53/00<br>A01N51/00<br>A01N47/40<br>A01N47/38<br>A01N47/02<br>A01N43/707<br>A01N43/68<br>A01N43/58<br>A01N43/36<br>A01N43/22<br>A01N41/10<br>A01N37/52<br>A01N37/42<br>A01N37/40 |
| D,Y | WO 01/89300 A (BAYER AG [DE]; FISCHER REINER [DE]; ERDELEN CHRISTOPH [DE] BAYER CROPS) 29. November 2001 (2001-11-29)<br>* Seite 1, Zeile 31 - Seite 2, Zeile 19 *<br>* Seite 4, Zeilen 13-15 *<br>* Seite 23, Zeilen 7-10; Beispiele I-1-I-15 *<br>* Beispiele A-D; Tabellen A,B *<br>----- | 1-5 | **RECHERCHIERTE SACHGEBIETE (IPC)**<br>A01N |
| D,Y | WO 02/17715 A (BAYER AG [DE]; FISCHER REINER [DE]; ERDELEN CHRISTOPH [DE]) 7. März 2002 (2002-03-07)<br>* Seite 2, Zeilen 1-21 *<br>* Seite 4, Zeile 16 - Seite 17, Zeile 15 *<br>* Seite 24, Absatz 2; Beispiele I-1-I-15 *<br>* Beispiele A-D; Tabellen A,B *<br>-----<br>-/-- | 1-5 | |

Der vorliegende Recherchenbericht wurde für alle Patentansprüche erstellt

| Recherchenort | Abschlußdatum der Recherche | Prüfer |
|---|---|---|
| München | 12. März 2008 | Klaver, Jos |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 07 11 6915

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | WO 02/19824 A (BAYER AG [DE]; FISCHER REINER [DE]; ERDELEN CHRISTOPH [DE]) 14. März 2002 (2002-03-14)<br>* Seite 2, Zeilen 1-20 *<br>* Seite 4, Zeile 15 - Seite 12, Zeile 20 *<br>* Seite 19, Absatz 1; Beispiele I-1-I-15 *<br>* Beispiele A,B *<br>----- | 1-5 | A01P7/02<br>A01P7/04 |
| D,Y | WO 02/00025 A (BAYER AG [DE]; FISCHER REINER [DE]; ERDELEN CHRISTOPH [DE]) 3. Januar 2002 (2002-01-03)<br>* Seite 1, Zeile 31 - Seite 2, Zeile 24 *<br>* Seite 4, Zeile 15 - Seite 12, Zeile 17 *<br>* Seite 19, Absatz 1; Beispiele I-1-I-15 *<br>* Beispiele A-D; Tabellen A,B *<br>----- | 1-5 | |
| D,Y | ITO ET AL: "Synthesis and insecticidal activity of novel N-oxydihydropyrrole derivatives with a substituted spirocyclohexyl group" BIOSCIENCE BIOTECHNOLOGY BIOCHEMISTRY, JAPAN SOC. FOR BIOSCIENCE, BIOTECHNOLOGY AND AGROCHEM, TOKYO, JP, Bd. 67, Nr. 6, 2003, Seiten 1230-1238, XP002392344<br>ISSN: 0916-8451<br>* Seite 1230, Spalte 2, Absatz 2 - Seite 1231, Spalte 1, Absatz 1; Abbildung 1 *<br>* Seite 1235, Spalte 1, Absatz 2 - Seite 1237, Spalte 2, Absatz 1; Tabellen 2,3 *<br>----- | 1-5 | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| München | 12. März 2008 | Klaver, Jos |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 07 11 6915

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2008

| Im Recherchenbericht angeführtes Patentdokument | Datum der Veröffentlichung | Mitglied(er) der Patentfamilie | Datum der Veröffentlichung |
|---|---|---|---|
| WO 2006089633 A | 31-08-2006 | AR 053815 A1 | 23-05-2007 |
| | | AU 2006218154 A1 | 31-08-2006 |
| | | CA 2597777 A1 | 31-08-2006 |
| | | DE 102005008021 A1 | 24-08-2006 |
| | | EP 1855529 A2 | 21-11-2007 |
| | | KR 20070106554 A | 01-11-2007 |
| WO 0189300 A | 29-11-2001 | AR 028926 A1 | 28-05-2003 |
| | | AT 301932 T | 15-09-2005 |
| | | AU 6593101 A | 03-12-2001 |
| | | BR 0110979 A | 08-04-2003 |
| | | CA 2409206 A1 | 29-11-2001 |
| | | CN 1443039 A | 17-09-2003 |
| | | DE 10024934 A1 | 22-11-2001 |
| | | EG 22824 A | 30-09-2003 |
| | | EP 1307100 A1 | 07-05-2003 |
| | | ES 2244631 T3 | 16-12-2005 |
| | | JP 2003533544 T | 11-11-2003 |
| | | MX PA02011368 A | 06-09-2004 |
| | | NZ 522615 A | 26-11-2004 |
| | | OA 12265 A | 11-05-2006 |
| | | PL 358792 A1 | 23-08-2004 |
| | | RU 2287931 C2 | 27-11-2006 |
| | | TW 228121 B | 21-02-2005 |
| | | UA 72331 C2 | 15-02-2005 |
| | | US 2003212086 A1 | 13-11-2003 |
| | | ZA 200208564 A | 23-10-2003 |
| WO 0217715 A | 07-03-2002 | AT 290784 T | 15-04-2005 |
| | | AU 9178101 A | 13-03-2002 |
| | | BR 0113580 A | 15-07-2003 |
| | | CN 1471358 A | 28-01-2004 |
| | | DE 10042736 A1 | 14-03-2002 |
| | | EP 1322160 A1 | 02-07-2003 |
| | | ES 2238480 T3 | 01-09-2005 |
| | | HU 0302949 A2 | 28-01-2004 |
| | | JP 2004507474 T | 11-03-2004 |
| | | MX PA03001682 A | 04-06-2003 |
| | | PT 1322160 T | 29-07-2005 |
| | | RU 2275025 C2 | 27-04-2006 |
| | | UA 74844 C2 | 16-06-2003 |
| | | US 2004044066 A1 | 04-03-2004 |
| | | ZA 200301615 A | 27-02-2004 |
| WO 0219824 A | 14-03-2002 | AR 032472 A1 | 12-11-2003 |
| | | AT 308884 T | 15-11-2005 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 07 11 6915

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2008

| Im Recherchenbericht angeführtes Patentdokument | Datum der Veröffentlichung | Mitglied(er) der Patentfamilie | Datum der Veröffentlichung |
|---|---|---|---|
| WO 0219824 A | | AU 8211901 A | 22-03-2002 |
| | | BR 0114043 A | 29-07-2003 |
| | | CA 2420874 A1 | 28-02-2003 |
| | | CN 1452457 A | 29-10-2003 |
| | | CN 1915023 A | 21-02-2007 |
| | | DE 10043610 A1 | 14-03-2002 |
| | | DE 50108034 D1 | 15-12-2005 |
| | | EP 1330161 A1 | 30-07-2003 |
| | | ES 2248378 T3 | 16-03-2006 |
| | | JP 2004508308 T | 18-03-2004 |
| | | MX PA03001824 A | 04-06-2003 |
| | | RU 2287932 C2 | 27-11-2006 |
| | | TW 278282 B | 11-04-2007 |
| | | US 2004038827 A1 | 26-02-2004 |
| | | ZA 200301774 A | 04-03-2004 |
| WO 0200025 A | 03-01-2002 | AR 029677 A1 | 10-07-2003 |
| | | AT 317223 T | 15-02-2006 |
| | | AU 6607501 A | 08-01-2002 |
| | | BR 0112070 A | 01-04-2003 |
| | | CN 1449244 A | 15-10-2003 |
| | | EG 22779 A | 31-08-2003 |
| | | EP 1298995 A1 | 09-04-2003 |
| | | ES 2256257 T3 | 16-07-2006 |
| | | HU 0400493 A2 | 30-08-2004 |
| | | JP 2004501169 T | 15-01-2004 |
| | | MX PA02012937 A | 30-07-2004 |
| | | US 2006051386 A1 | 09-03-2006 |
| | | US 2003148999 A1 | 07-08-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0262399 A
- GB 2266888 A
- EP 355599 A
- EP 415211 A
- JP 12053670 A
- EP 377893 A
- EP 442077 A
- EP 442073 A
- EP 456063 A
- EP 521334 A
- EP 596298 A
- EP 613884 A
- EP 613885 A
- WO 9401997 A
- WO 9526954 A
- WO 9520572 A
- EP 0668267 A
- WO 9625395 A
- WO 9635664 A
- WO 9701535 A
- WO 9702243 A
- WO 9736868 A
- WO 9743275 A
- WO 9805638 A
- WO 9806721 A
- WO 9825928 A
- WO 9924437 A
- WO 9943649 A
- WO 9948869 A
- WO 9955673 A
- WO 0117972 A
- WO 0123354 A
- WO 0174770 A
- WO 03013249 A
- WO 03062244 A
- WO 2004007448 A
- WO 2004024688 A
- WO 04065366 A
- WO 04080962 A
- WO 04111042 A
- WO 05044791 A
- WO 05044796 A
- WO 05048710 A
- WO 05049596 A
- WO 05066125 A
- WO 05092897 A
- WO 06000355 A
- WO 06029799 A
- WO 06056281 A
- WO 06056282 A
- WO 06089633 A
- WO 07048545 A
- WO 07073856 A
- DE 05059892 A
- DE 06007882 A
- DE 06018828 A
- DE 06025874 A
- DE 06050148 A
- WO 9916748 A
- JP 14205984 A
- WO 06024411 A
- WO 04007448 A
- WO 0189300 A
- WO 0200025 A
- WO 0205648 A
- WO 0217715 A
- WO 0219824 A
- WO 0230199 A
- WO 0237963 A
- WO 05004603 A
- WO 05053405 A
- WO 06089665 A
- DE 10342673 A
- DE 06031974 A
- DE 06031973 A
- DE 06031978 A
- DE 06031975 A
- DE 06031976 A
- DE 06033154 A
- EP 048186 A
- EP 067461 A
- EP 206149 A
- DE 2802962 A
- DE 2326077 A
- DE 2737297 A
- DE 3117510 A
- DE 2231312 A
- DE 2335347 A
- DE 2757066 A
- EP 106469 A
- GB 02143823 A
- EP 038617 A
- DE 2742546 A
- EP 026542 A
- DE 2709264 A
- EP 049977 A
- DE 2653189 A
- DE 3604781 A

- DE 3708231 A
- GB 1168797 A
- EP 00192060 A
- WO 9104965 A
- EP 00580553 A
- EP 00302389 A
- EP 00235725 A
- EP 00649845 A
- EP 00376279 A
- DE 2818830 A
- DE 2123236 A
- EP 179022 A
- EP 052833 A
- DE 2601780 A
- US 4980376 A
- EP 161019 A
- EP 71279 A
- WO 9800394 A
- WO 9819542 A
- DE 2824126 A
- DE 2736876 A
- EP 639559 A
- EP 339854 A
- EP 228564 A
- EP 496342 A
- EP 295117 A
- WO 9722593 A
- WO 0100614 A
- WO 0210153 A
- EP 01006107 A
- WO 06022225 A
- WO 03015519 A
- WO 04067528 A
- EP 089202 A
- DE 2717040 A
- EP 001689 A
- EP 675133 A
- EP 289879 A
- EP 234045 A
- EP 134439 A
- EP 326329 A
- EP 196524 A
- EP 365925 A
- US 2812280 A
- JP 2003201280 A
- WO 2002014263 A
- DE 2641343 A
- WO 9616047 A
- WO 9310083 A
- EP 210487 A
- WO 9322297 A
- EP 005912 A
- EP 375316 A
- DE 2724494 A
- US 2812281 A
- US 3272854 A
- DE 3037105 A
- US 3784696 A
- DE 1100372 A
- DE 2061132 A
- EP 01097932 A
- EP 314615 A
- EP 00580374 A
- EP 128648 A
- DE 2655910 A
- EP 347488 A
- EP 00462456 A
- WO 9211249 A
- US 3244586 A
- EP 528156 A
- WO 9611909 A
- DE 102004047922 A
- DE 06015467 A
- WO 9700265 A


**In der Beschreibung aufgeführte Nicht-Patentliteratur**


- **S. SUZUKI et al.** *Chem. Pharm. Bull.,* 1967, vol. 15, 1120
- *Liebigs Ann. Chem.,* 1985, 1095
- **ITO M.** *Bioscience, Biotechnology and Biochemistry,* 2003, vol. 67, 1230-1238
- The Pesticide Manual. British Crop Protection Council, 2003
- The Pesticide manual. 1997, vol. 11, 1056
- **HANDELSNAME FU-SHEN.** *Modem Agrochemicals,* 2005, vol. 4 (3), 1-7
- The Pesticide Manual. 1997, vol. 11, 846
- *ACS Symposium Series,* vol. 800, 178
- **CROUSE GD.** *Pest. Management Science,* 2001, vol. 57, 177-185
- **S.R. COLBY.** *Weeds,* 1967, vol. 15, 20-22